# EUROPEAN PATENT APPLICATION

(11) **EP 2 469 196 A1**
(43) Date of publication of application: **27.06.2012**
(21) Application number: 10809919.3
(22) Date of filing: 12.08.2010
(51) Int. Cl.: F24F 13/02

(54) **DUCT ARRANGEMENT, DUCT EQUIPMENT, DUCT REINFORCEMENT CONSTRUCTION METHOD, SUPPORT REINFORCEMENT STRUCTURE, AND REINFORCEMENT STRUCTURE FOR SUPPORT FIXING UNIT**

(30) Priority: 21.08.2009 JP 2009192282; 01.12.2009 JP 2009273279; 01.12.2009 JP 2009273797; 04.01.2010 JP 2010000109
(71) Applicant: Mitsubishi Heavy Industries, Ltd., Tokyo 108-8215 (JP)
(72) Inventor: SHIMIZU Hiroshi, Tokyo 108-8215 (JP); SHINMA Satoshi, Tokyo 108-8215 (JP); MATSUI Nobuki, Tokyo 108-8215 (JP); MARUYAMA Tomoyoshi, Tokyo 108-8215 (JP); NAGASE Ryuichi, Tokyo 108-8215 (JP); OKAMOTO Hiromu, Tokyo 108-8215 (JP); ISEKI, Hiroyuki, Hyogo, 6750031 (JP); SATO, Kenji, Tokyo 1088215 (JP); TAKIHANA, Seiji, Tokyo 1088215 (JP); HORI, Takumi, Tokyo 1088215 (JP); NISHIDA, Keigo, Tokyo 1088215 (JP)
(74) Representative: HOFFMANN EITLE
(86) International application number: PCT/JP2010/063721
(87) International publication number: WO 2011/021574

(57) **Abstract**

Provided is duct equipment including a duct body, a heat insulating material, a external cover, a fiber-reinforced sheet, and fiber-reinforced moldings. The duct body includes a duct wall, a duct passage defined by the duct wall, and duct corners formed in the duct wall when viewed in a cross-section in a direction intersecting a direction in which the duct passage extends. The heat insulating material is installed on an outer circumference of the duct body. The external cover includes a external cover wall installed on an outer circumference of the heat insulating material, and external cover corners formed along the duct corners. The fiber-reinforced sheet is disposed on the outer circumference of the duct body via an adhesive layer. The fiber-reinforced moldings are disposed adjacent to the fiber-reinforced sheet along the external cover corners via adhesive layers, and have a substantially L-shape when viewed in the cross-section.

## Description

### [Field of the Invention]

The present invention relates to a duct arrangement, duct equipment, and a duct reinforcement construction method that are used for the purpose of, for instance, air conditioning, ventilation, uptake of outdoor air, smoke discharge, and so on. Further, the present invention relates to a support reinforcement structure that supports long objects such as ducts, pipelines, cable trays, and conduits. In addition, the present invention relates to a reinforcement structure for a support fixing unit that supports long objects such as ducts, pipelines, cable trays, and conduits.
This application claims priority to and the benefits of Japanese Patent Application Nos. 2009-192282 filed on August 21, 2009, 2009-273279 and 2009-273797 filed on December 1, 2009, and 2010-000109 filed on January 4, 2010, the disclosures of which are incorporated herein by reference.

### [Background Art]

Duct equipment can be selected to have an optimum cross-sectional shape or an addition to which a special configuration is added according to a nature of circulating gas or a type of a building or air conditioning machine. For example, an angular duct formed with a rectangular or square cross-sectional shape, and a round duct formed with a circular or oval shape, are typical. Further, as the addition to which a special configuration is added, for example, a dust collecting duct to which a dust collector is added is used in precision parts factories and clean rooms, and a ventilation duct to which a filter is added is used in testing facilities.

For example, in Patent Document 1 below, as an air conditioning duct whose outer circumferential wall has increased rigidity, a duct in which a thin plate configuring a duct outer circumferential wall is folded to form reinforcement ribs periodically distributed in a corrugated shape is disclosed.
In this duct, typically, design conditions such as earthquake resistance or vibration resistance are determined in advance, and parts are manufactured on the basis of the design conditions and are assembled in the field.

Further, as a conventional method of reinforcing a support that supports long objects such as ducts, pipelines, cable trays, and conduits installed in a building, and so on, it is common to additionally install a separate support, or to reinforce an existing support with a brace or a rib at an appropriate place by welding (e.g., see Patent Document 2).
It is disclosed in Patent Document 2 that, in a method of reinforcing an existing member (corresponding to the support) of a truss structure with a reinforcement, open ends of a pair of flanges of a steel angle of the existing member are closed to form a closed cross-section, a steel angle as a reinforcing member is attached to the existing member, and a fiber sheet is wound around outer circumferences of the existing member and the reinforcing member.

Further, as a conventional reinforcing method of a fixing unit of a support that supports long objects such as ducts, pipelines, cable trays, and conduits installed in a building, and so on, it is common to reinforce the fixing unit with a reinforcing member formed of steel at an appropriate place by welding or to fix the reinforcing member using bolt holes (e.g., see Patent Document 3).
A reinforcing structure is disclosed in Patent Document 3, in which an end fixing section-shaped material (a reinforcing member) is disposed at a corner of a column member to be reinforced which is installed on a wall member, and the end fixing section-shaped material is fixed to the wall member by bolts.

### [Prior Art Document]

### [Patent Document]

[Patent Document 1] Japanese Unexamined Patent Application, First Publication No. 2005-195266
[Patent Document 2] Japanese Unexamined Patent Application, First Publication No. 2007-332549
[Patent Document 3] Japanese Unexamined Patent Application, First Publication No. 2001-032531

### [Disclosure of the Invention]

### [Problems to be Solved by the Invention]

However, in the related art, when a duct is reinforced after its assembly, various construction conditions are imposed depending on the type of building or air-conditioning facilities, and construction may be difficult. For example, when it is impossible to stop operation of the building or air-conditioning facilities while reinforcing the duct, there are problems in that construction is required so as not to impede the circulation of air, or machining, welding or thermal cutting work using electricity is restricted to prevent adverse effects (e.g. malfunction cased by noise) on instruments around the duct required to be reinforced.

A first aspect of the present invention is to be made in consideration of this situation. That is, a first objective of the present invention is to provide a duct arrangement, duct equipment, and a duct reinforcement construction method that are capable of improving strength with a relatively simple and lightweight structure and making reinforcement construction relatively easy.

Further, the conventional support reinforcing technique has the following problems.
In detail, when the existing support is reinforced, it is necessary to transport the reinforcing members such as braces, ribs, and so on to a reinforcement construction site. Particularly, when the reinforcing members are steel members, the reinforcing members require much time and labor to transport because of their weight.
Further, when the existing support is reinforced by welding, setup for preparation and curing take efforts. In addition, when working in narrow sites where long objects are installed, there may not be enough room to operate welding equipment, and so on, such that some points on the support cannot be welded.
Furthermore, when the object (the long object) to be supported by the support is a duct, it is necessary to prevent adverse effects (e.g. malfunction cased by noise) on the instruments around the duct requiring reinforcement. As such, there is a problem of machining, welding, or thermal cutting work using electricity being restricted. In this respect, there is room for improvement.

A second aspect of the present invention is made in consideration of the aforementioned problems. That is, a second objective of the present invention is to provide a support reinforcement structure of long objects which is capable of enhancing rigidity using a simple and lightweight structure, and making reinforcement construction easy.

Further, the conventional support fixing unit reinforcement technique has the following problems.
In detail, when the existing fixing unit is reinforced, it is necessary to transport the reinforcing members to a reinforcement construction site. Particularly, when the reinforcing members are steel members, the reinforcing members require much time and labor to transport because of their weight.
Further, when the existing fixing unit is reinforced by welding, setup for preparation and curing take efforts. In addition, when working in narrow sites where a long object supported by a support is installed, there may not be enough room to operate welding equipment, and so on, such that some points on the support cannot be welded. Further, the reinforcing member is often fixed by bolts. Even in this case, it is necessary to form bolt holes in a neighboring structure such as a wall (a supporting target) using a tool such as a drill. Thus, there is a shortcoming in that, besides the fact that the formation of bolt holes is time-consuming, construction is impossible in sites too narrow for the tool to enter.
Furthermore, when the object (the long object) to be supported by the support is a duct, instruments may be installed adjacent to the duct requiring reinforcement. In this case, there is a problem in that machining, welding, or thermal cutting work using electricity is restricted in order to prevent adverse effects (e.g. malfunction cased by noise) on the installed instruments. In this respect, there is room for improvement in the conventional reinforcement technique.

A third aspect of the present invention is made in consideration of the aforementioned problems. That is, a third objective of the present invention is to provide a reinforcement structure for a support fixing unit which is capable of enhancing rigidity using a simple and lightweight structure, and making reinforcement construction easy.

### [Means for Solving the Problems]

To accomplish the first objective of the present invention, a first aspect of the present invention employs the following means.
A duct arrangement according to a first aspect of the present invention includes the following: a duct body that includes a duct wall defining a duct passage, and duct corners formed in the duct wall when viewed in a cross-section in a direction intersecting a direction in which the duct passage extends; and fiber-reinforced moldings that are installed at the duct corners via adhesive layers.
That is, the duct arrangement includes a duct body and fiber-reinforced moldings. The duct body includes a duct wall, a duct passage defined by the duct wall, and duct corners formed in the duct wall when viewed in a cross-section in a direction intersecting a direction in which the duct passage extends. The fiber-reinforced moldings are installed at the duct corners via the adhesive layers.

With this configuration, since the fiber-reinforced moldings installed at the duct corners via the adhesive layers are provided, the duct corners of the duct body which are locally weak in strength are increased in thickness. Thereby, it is possible to increase the strength of the entire duct arrangement using a relatively simple structure.
Furthermore, the fiber-reinforced moldings are lighter in weight than, for instance, metal. As such, it is possible to suppress an increase in weight of the entire duct arrangement. Further, it is possible to handle the duct arrangement in a relatively easy manner. Thereby, it is possible to reduce time and labor required to reinforce an existing duct.
Further, since the fiber-reinforced moldings are relatively lightweight, it is possible to obtain a sufficient fixing force even when the fiber-reinforced moldings are bonded to the duct body using the adhesive layers. Thereby, it is possible to increase the strength of the entire duct arrangement using a relatively simple structure.
Further, since reinforcement of an existing duct is possible without machining using electricity, it is possible to meet construction requirements of nonuse of electricity, and of the prohibition of welding or thermal cutting work.
Further, since reinforcement construction is structurally allowed to be performed from the outside, it is possible to easily reinforce an existing duct without hindering operation of a building or air-conditioning facilities.

Further, the fiber-reinforced moldings may have a substantially L-shape when viewed in the cross-section.
With this configuration, since the fiber-reinforced moldings have a substantially L-shape when viewed in the cross-section, it is possible to increase a necessary and sufficient range of thickness including the duct corners of the duct wall. Further, since workability is improved due to easy handling during transportation, it is possible to further reduce time and labor required to reinforce an existing duct.
Meanwhile, the substantially L-shape may be formed so that cross-sectional contours extend in a direction mutually intersecting, and there is no need to intersect at right angles.

Further, the duct arrangement may include a fiber-reinforced sheet that encloses the duct body and is simultaneously installed on the fiber-reinforced moldings via an adhesive layer.
With this configuration, since the fiber-reinforced sheet that encloses the duct body and is simultaneously installed on the fiber-reinforced moldings via an adhesive layer is provided, the thickness of the duct corners is further increased and a closed cross-section is formed by the fiber-reinforced sheet. Thereby, it is possible to further increase the strength.

Further, the fiber-reinforced moldings may each include rib parts that protrude to extend toward the outside of the duct body and extend along the duct passage.
Further, the rib parts may be provided at both ends of each fiber-reinforced moulding in the cross-section.
With these configurations, since the rib parts that protrude to extend toward the outside of the duct body and extend along the duct passage are provided, it is possible to further increase the strength.

Further, the duct body may include a plurality of duct corners, and the fiber-reinforced moldings may each have a substantially U-shape when viewed in cross-section and be installed across the two duct corners.
With this configuration, since the fiber-reinforced moldings each have a substantially U-shape when viewed in the cross-section and are installed across the two duct corners, it is possible to increase the thickness of the two duct corners by means of one fiber-reinforced molding. Thereby, workability is improved, so that it is possible to further reduce the time and labor required to reinforce an existing duct.

Further, another duct arrangement according to the first aspect of the present invention includes the following: a duct body that includes a duct wall defining a duct passage, and a plurality of duct corners formed in the duct wall when viewed in a cross-section intersecting a direction in which the duct passage extends; and a plurality of metal reinforcements, each of which includes a metal plate body that is installed on the duct corner via an adhesive layer and has a substantially L-shape when viewed in the cross-section, and metal rib parts that protrude from respective regions of the metal plate body extending at both sides of the duct corner toward the outside of the duct body.
That is, this duct arrangement includes a duct body and a plurality of metal reinforcements. The duct body includes a duct wall, a duct passage defined by the duct wall, and a plurality of duct corners formed in the duct wall when viewed in a cross-section intersecting a direction in which the duct passage extends. The metal reinforcement includes a metal plate body and metal rib parts. The metal plate body is disposed on the duct corner via an adhesive layer, and has a substantially L-shape when viewed in the cross-section. The metal rib parts protrude from respective regions of the metal plate body formed to extend at both sides of the duct corner toward the outside of the duct body.

As the metal plate body and the metal reinforcements are provided, the duct corners of the duct body which are locally weak in strength are increased in thickness. Thereby, it is possible to increase the strength of the entire duct arrangement using a relatively simple structure.
Further, since the duct arrangement includes the steel reinforcements having relatively high rigidity, it is possible to greatly increase the strength of the duct arrangement.
Furthermore, since the duct arrangement includes the metal rib parts, it is possible to greatly increase the strength of the duct arrangement.
Further, since reinforcement of an existing duct is possible without machining using electricity, it is possible for the duct arrangement to meet construction requirements of nonuse of electricity, and of the prohibition of welding or thermal cutting work.
Further, since the duct arrangement structurally allows reinforcement construction to be performed from the outside, it is possible to easily reinforce an existing duct without hindering operation of a building or air-conditioning facilities.

Further, the duct arrangement may include a wire that connects the metal rib parts of a different plurality of metal reinforcements to one another.
With this configuration, since the duct arrangement includes the wire, it is possible to more securely fix the metal reinforcements.

Further, another duct arrangement according to the first aspect of the present invention includes the following: a duct body that includes a duct wall defining a duct passage, and duct corners formed in the duct wall when viewed in a cross-section intersecting a direction in which the duct passage extends; a fiber-reinforced sheet that is installed on an outer circumference of the duct body via an adhesive layer; and fiber-reinforced moldings that are installed on the fiber-reinforced sheet along the duct corners via adhesive layers and have a substantially L-shape when viewed in the cross-section.
That is, this duct arrangement includes a duct body, a fiber-reinforced sheet, and fiber-reinforced moldings. The duct body includes a duct wall, a duct passage defined by the duct wall, and a plurality of duct corners formed in the duct wall when viewed in a cross-section intersecting a direction in which the duct passage extends. The fiber-reinforced sheet is disposed on an outer circumference of the duct body via an adhesive layer. The fiber-reinforced moldings are disposed adjacent to the fiber-reinforced sheet along the duct corners via adhesive layers and have a substantially L-shape when viewed in the cross-section.
With this configuration, since the duct corners can be increased in thickness by the fiber-reinforced sheet and the fiber-reinforced moldings, the duct corners of the duct body which are locally weak in strength are increased in thickness. Accordingly, it is possible to increase the strength of the entire duct arrangement.
Further, since the duct arrangement includes the fiber-reinforced sheet installed on the outer circumference of the duct body, a closed cross-section can be formed by the fiber-reinforced sheet, so that it is possible to further enhance strength.
Furthermore, since the fiber-reinforced sheet and the fiber-reinforced moldings are relatively lightweight, it is possible to suppress an increase in weight of the entire duct arrangement. Further, it is possible to handle the duct arrangement in a relatively easy manner. Thereby, it is possible to reduce time and labor required to reinforce an existing duct.
Further, since the fiber-reinforced sheet and the fiber-reinforced moldings are relatively lightweight, it is possible to obtain a sufficient fixing force even when the fiber-reinforced sheet and the fiber-reinforced moldings are bonded to the duct body using the adhesive layers from the outside. Thereby, it is easy to construct reinforcement of an existing duct without hindering operation of building or air-conditioning facilities.
Further, since reinforcement of an existing duct is possible without machining using electricity, it is possible to meet construction requirements of nonuse of electricity, and of the prohibition of welding or thermal cutting work.
Further, since reinforcement construction is structurally allowed to be performed from the outside, it is possible to easily reinforce an existing duct without hindering operation of a building or air-conditioning facilities.

Further, another duct arrangement according to the first aspect of the present invention includes: a duct body that includes a duct wall defining a duct passage; and a fiber-reinforced sheet that is installed on an outer circumference of the duct body via an adhesive layer.
That is, this duct arrangement includes a duct body and a fiber-reinforced sheet. The duct body includes a duct wall, and a duct passage defined by the duct wall. The fiber-reinforced sheet is disposed on an outer circumference of the duct body via an adhesive layer.
With this configuration, since the duct arrangement includes the duct body and the fiber-reinforced sheet installed on the outer circumference of the duct body, the duct corners of the duct body which are locally weak in strength are increased in thickness. Thereby, it is possible to increase the strength of the entire duct arrangement using a relatively simple structure.
Furthermore, since the fiber-reinforced sheet is relatively lightweight, it is possible to suppress an increase in weight of the entire duct arrangement and to handle the duct arrangement in a relatively easy manner.
Thereby, it is possible to reduce time and labor required to reinforce an existing duct.
Further, since the fiber-reinforced sheet and the fiber-reinforced moldings are relatively lightweight, it is possible to obtain a sufficient fixing force even when the fiber-reinforced sheet and the fiber-reinforced moldings are bonded to the duct body using the adhesive layers from the outside. Thereby, it is easy to reinforce an existing duct without hindering operation of a building or air-conditioning facilities.
Further, since reinforcement of an existing duct is possible without machining using electricity, it is possible for the duct arrangement to meet construction requirements of nonuse of electricity and of the prohibition of welding or thermal cutting work.
Further, since the duct arrangement structurally allows reinforcement construction to be performed from the outside, it is possible to easily reinforce of an existing duct without hindering operation of a building or air-conditioning facilities.

Further, duct equipment according to the first aspect of the present invention includes: the duct arrangement according to any one of the foregoing configurations; a heat insulating material installed on an outer circumference of the duct body; and a external cover installed on an outer circumference of the heat insulating material.
With this configuration, since the duct equipment includes the heat insulating material and the external cover, it is possible to improve heat retaining capability and heat insulating capability.

Further, other duct equipment according to the first aspect of the present invention includes the following: a duct body that includes a duct wall defining a duct passage, and duct corners formed in the duct wall when viewed in a cross-section intersecting a direction in which the duct passage extends; a heat insulating material that is installed on an outer circumference of the duct body; a external cover that includes a external cover wall installed on an outer circumference of the heat insulating material and external cover corners formed along the duct corners; and fiber-reinforced moldings that are installed on the external cover corners via adhesive layers.
That is, this duct equipment includes a duct body, a heat insulating material, a external cover, and fiber-reinforced moldings. The duct body includes a duct wall, a duct passage defined by the duct wall, and duct corners formed in the duct wall when viewed in a cross-section intersecting a direction in which the duct passage extends. The heat insulating material is installed on an outer circumference of the duct body. The external cover includes a external cover wall installed on an outer circumference of the heat insulating material, and external cover corners formed along the duct corners. The fiber-reinforced moldings are disposed at the external cover corners via adhesive layers.

Further, the fiber-reinforced moldings may have a substantially L-shape when viewed in the cross-section.

Further, the duct equipment may include a fiber-reinforced sheet that encloses the external cover and is simultaneously disposed on the fiber-reinforced moldings via an adhesive layer.

Further, the fiber-reinforced moldings may each include rib parts that protrude to extend toward the outside of the duct body and extend along the duct passage.

Further, the rib parts may be provided at both ends of each fiber-reinforced molding in the cross-section, respectively.

Further, the external cover may include a plurality of external cover corners, and the fiber-reinforced moldings may have a substantially U-shape when viewed in the cross-section and be installed across the two external cover corners.

Further, other duct equipment according to the first aspect of the present invention includes the following: a duct body that includes a duct wall defining a duct passage, and a plurality of duct corners formed in the duct wall when viewed in a cross-section in a direction intersecting a direction in which the duct passage extends; a heat insulating material that is installed on an outer circumference of the duct body; a external cover that includes a external cover wall installed on an outer circumference of the heat insulating material and a plurality of external cover corners formed along the duct corners; and a plurality of metal reinforcements, each of which includes a metal plate body that is installed on the external cover corner via an adhesive layer and has a substantially L-shape when viewed in the cross-section, and metal rib parts that protrude from respective regions of the metal plate body extending at both sides of the external cover corner toward the outside of the duct body.
That is, this duct equipment includes a duct body, a heat insulating material, a external cover, and a plurality of metal reinforcements. The duct body includes a duct wall, a duct passage defined by the duct wall, and a plurality of duct corners formed in the duct wall when viewed in a cross-section intersecting a direction in which the duct passage extends. The heat insulating material is installed on an outer circumference of the duct body. The external cover includes a external cover wall installed on an outer circumference of the heat insulating material, and external cover corners formed on the external cover wall and is formedalong the duct corners. The metal reinforcement includes a metal plate body and metal rib parts. The metal plate body is disposed at the external cover corner via an adhesive layer, and has a substantially L-shape when viewed in the cross-section. The metal rib parts protrude from respective regions of a part of the metal plate body extending at both sides of the external cover corner toward the outside of the duct body.

Further, the duct equipment may include a wire that connects the metal rib parts of a different plurality of metal reinforcements to one another.

Further, other duct equipment according to the first aspect of the present invention includes the following: a duct body that includes a duct wall defining a duct passage, and duct corners formed in the duct wall when viewed in a cross-section intersecting a direction in which the duct passage extends; a heat insulating material that is installed on an outer circumference of the duct body; a external cover that includes a external cover wall installed on an outer circumference of the heat insulating material and external cover corners formed along the duct corners; a fiber-reinforced sheet that is installed on an outer circumference of the external cover via an adhesive layer; and fiber-reinforced moldings that are installed on the fiber-reinforced sheet along the external cover corners via adhesive layers and have a substantially L-shape when viewed in the cross-section.
That is, this duct equipment includes a duct body, a heat insulating material, a external cover, a fiber-reinforced sheet, and fiber-reinforced moldings. The duct body includes a duct wall, a duct passage defined by the duct wall, and duct corners formed in the duct wall when viewed in a cross-section intersecting a direction in which the duct passage extends. The heat insulating material is installed on an outer circumference of the duct body. The external cover includes a external cover wall installed on an outer circumference of the heat insulating material, and external cover corners formed along the duct corners. The fiber-reinforced sheet is disposed on the outer circumference of the duct body via an adhesive layer. The fiber-reinforced moldings are disposed adjacent to the fiber-reinforced sheet along the external cover corners via adhesive layers, and have a substantially L-shape when viewed in the cross-section.

Further, other duct equipment according to the first aspect of the present invention includes the following: a duct body that includes a duct wall defining a duct passage; a heat insulating material that is installed on an outer circumference of the duct body; a external cover that includes a external cover wall installed on an outer circumference of the heat insulating material and external cover corners formed along the duct corners; and a fiber-reinforced sheet that is installed on an outer circumference of the external cover via an adhesive layer.
That is, this duct equipment includes a duct body, a heat insulating material, a external cover, and a fiber-reinforced sheet. The duct body includes a duct wall, and a duct passage defined by the duct wall. The heat insulating material is installed on an outer circumference of the duct body. The external cover includes a external cover wall installed on an outer circumference of the heat insulating material, and external cover corners formed along the duct corners. The fiber-reinforced sheet is disposed on the outer circumference of the duct body via an adhesive layer.

Further, the duct body included in any one of the duct equipments may include a connection flange at a base end of the duct passage.

Further, the duct body included in any one of the duct arrangements may include a connection flange at a base end of the duct passage.

Further, the connection flange may include an adhesive layer, and a fiber-reinforced member or a fiber-reinforced sheet disposed via the adhesive layer.

Further, a reinforcement construction method according to the first aspect of the present invention is a reinforcement construction method of a duct body having a duct wall and a duct passage defined by the duct wall. This reinforcement construction method includes: a process of performing priming coat on the duct body; a process of applying an adhesive to an adhering target of the duct body; and a process of disposing a fiber-reinforced molding or a fiber-reinforced sheet on the adhering target via the adhesive.

Further, the reinforcement construction method includes a process of finally coating the fiber-reinforced molding or the fiber-reinforced sheet disposed on the adhering target with an impregnating adhesive resin and performing surface finishing using a surface finishing agent.

Further, another duct reinforcement construction method according to the first aspect of the present invention is a reinforcement construction method of a duct body having a duct wall and a duct passage defined by the duct wall. This reinforcement construction method includes: a process of degreasing a bonding target of the duct body and simultaneously performing rasping on the bonding target of the duct body; a process of applying an adhesive to the bonding target of the duct body; and a process of disposing metal reinforcements on the bonding target.

A support reinforcement structure according to a second aspect of the present invention which accomplishes the second objective is a reinforcement structure of a support that is installed on a neighboring structure (a supporting target) and is adapted to support a long object (including the duct arrangement or the duct equipment). This support reinforcement structure includes a fiber stiffener installed on an outer circumference of the support via an adhesive layer.
That is, this support reinforcement structure includes an adhesive layer provided on an outer circumference of the support for supporting a long object, and a fiber stiffener installed on the outer circumference of the support via the adhesive layer.

The support reinforcement structure is obtained by pasting and bonding the fiber stiffener to the outer circumference of the support using an adhesive or the like. That is, the support reinforcement structure is a reinforcement structure having no need for welding. Further, with use of the support reinforcement structure, it is possible to increase the thickness of the support to increase rigidity and reinforce the support.
Further, since the support reinforcement structure does not require welding, it is possible to reinforce the support in an easy and reliable manner, even when working in a narrow site or where welding is difficult due to insufficient clearance for welding equipment, and so on. Accordingly, it is possible to reduce labor required to reinforce the support and shorten time required to construct the support.
Furthermore, it is possible to employ a relatively lightweight plate-shaped or sheet-shaped member as the fiber stiffener. Accordingly, it is possible to suppress an increase in weight of the entire support, and it is possible to easily handle the support during reinforcement construction.

Further, in the support reinforcement structure of a long object according to the second aspect of the present invention, the fiber stiffener may be a plate-shaped molding that is molded according to a shape of the outer circumference of the support.
In this manner, as the plate-shaped molding is adopted as the fiber stiffener, a handling member becomes relatively lightweight. As such, there is an advantage in that reinforcement construction for the support is made easy. Moreover, as the plate-shaped molding is molded in a suitable shape fitted to corners of the support, which may for instance be an H-shaped, L-shaped, or channel-shaped steel member, the efficiency of reinforcement construction is further improved.

Further, in the support reinforcement structure of a long object according to the second aspect of the present invention, the fiber stiffener may be a sheet-shaped member that is bonded according to the shape of the outer circumference of the support.
In this manner, as the sheet-shaped member is adopted as the fiber stiffener, the handling member becomes relatively lightweight. As such, there is an advantage in that reinforcement construction for the support is made easy. Moreover, it is possible to easily paste the fiber stiffener according to the shape of the support, which may for instance be an H-shaped, L-shaped, or channel-shaped steel member. Accordingly, the efficiency of reinforcement construction is further improved.

Further, in the support reinforcement structure of a long object according to the second aspect of the present invention, the support may be fixed to a neighboring structure (a supporting target) via a fixing unit, and the fiber stiffener may be installed across the fixing unit and the support.
That is, the fiber stiffener may be installed across the support and the fixing unit for fixing the support to the neighboring structure.
With this configuration, it is possible to reinforce a base end of the support fixed to the structure (the supporting target) adjacent to the support. With the support reinforcement structure, it is possible to more effectively enhance the rigidity of the entire support.

Further, the support reinforcement structure of a long object according to the second aspect of the present invention may include a stiffener that is poured into a concavity or a cavity of the support and cured.
Thereby, even when the support has the concavity or cavity, it is possible to form a solid structure on which welding is not preformed. Furthermore, as the fiber stiffener is installed on an outer circumference of the solid structure, it is possible to enhance the rigidity of the entire support.

Further, the support reinforcement structure of a long object according to the second aspect of the present invention may include a beam member that reinforces the support having a pair of vertical members disposed in parallel and a horizontal member connecting leading end sides of the pair of vertical members. The beam member connects base end sides of the pair of vertical members. Further, the long object may be disposed between the beam member and the horizontal member. More specifically, in this support reinforcement structure, the support includes a pair of vertical members extending downward from a neighboring structure (a supporting target), and a horizontal member connecting lower ends of the vertical members to each other. In this support reinforcement structure, the horizontal member may support the long object from below. Further, this support reinforcement structure may include a beam member connecting the vertical members to each other above the long object.
Since the support reinforcement structure allows a Rahmen structure to be formed by the support and the beam member, it is possible to enhance the rigidity of the entire support.

To accomplish the third objective, a reinforcement structure for a support fixing unit according to the third aspect of the present invention is a reinforcement structure for a flat plate-shaped fixing unit, which fixes a support for supporting a long object to a neighboring structure (a supporting target). In this fixing unit reinforcement structure, a fiber-reinforced member is adhered to at least one face of the fixing unit by an adhesive.
That is, the fixing unit reinforcement structure according to the third aspect of the present invention includes the following: an adhesive applied to at least one face of a flat plate-shaped fixing unit for fixing a support for supporting a long object to a neighboring structure; and a fiber-reinforced member adhered to the fixing unit by the adhesive.

In the fixing unit reinforcement structure, the fiber-reinforced member is pasted and bonded to at least one face of the fixing unit by the adhesive. That is, due to the reinforcement structure having no need for welding, it is possible to increase the thickness of the fixing unit to enhance the rigidity. Accordingly, it is possible to reinforce the fixing unit against bending stress caused by the support supporting the long object.
Further, even when working in a narrow site or where welding is difficult due to insufficient clearance for welding equipment, and so on, it is possible to reinforce the fixing unit in an easy and reliable manner with no need for welding. Accordingly, it is possible to reduce labor and time required for reinforcement construction.
Furthermore, it is possible for the fixing unit reinforcement structure to adopt a relatively lightweight plate-shaped or sheet-shaped member as the fiber-reinforced member. Accordingly, it is possible to facilitate handling during reinforcement construction.

Further, in the fixing unit reinforcement structure, the fiber-reinforced member may be installed across the fixing unit and the structure (the supporting target).
With this configuration, the thickness of the fixing unit is increased, and the fiber-reinforced member adhered to the fixing unit is adhered to the neighboring structure (the supporting target), so that the fiber-reinforced member and the neighboring structure are more integrally fixed. Accordingly, the fixing unit reinforcement structure facilitates reinforcement that increases the rigidity of the fixing unit.

Further, in the fixing unit reinforcement structure, the fiber-reinforced member may be disposed on the side of a face of the fixing unit on the opposite side of the neighboring structure (the supporting target).
That is, the fiber-reinforced member may be disposed on a face of the fixing unit on the opposite side of the other face of the fixing unit which is opposite to the neighboring structure.
The present invention can easily adhere the fiber-reinforced member to the fixing unit, which has already been fixed to the neighboring structure (the supporting target), without removing the fixing unit.

Further, in the fixing unit reinforcement structure, block members adhered to the neighboring structure (the supporting target) may be provided on an outer circumference of the fixing unit, and the fiber-reinforced members may be installed across the block members and the fixing unit.
That is, the fixing unit reinforcement structure may include block members that are disposed on an outer circumference of the fixing unit and are adhered to the neighboring structure. In this case, the fiber-reinforced members may be installed across the block members and the fixing unit.
In the present invention, since the fixing unit, the block members, and the neighboring structure (the supporting target) are integrally installed via the fiber-reinforced members, the reinforcement that increases the rigidity of the fixing unit is easy.

Further, in the support fixing unit reinforcement structure, the block member may include an inclined face that removes a height difference of a thickness direction of the fixing unit caused by the fixing unit and the neighboring structure (the supporting target).
That is, the block member may include a face that is opposite to the neighboring structure, and an inclined face that is inclined with respect to this face. The inclined face may be formed so as to extend without a height difference between the face of the neighboring structure which is opposite to the fixing unit and the face of the fixing unit on the opposite side of the other face of the fixing unit which is opposite to the face of the neighboring structure.
With this configuration, when the fiber-reinforced member is installed across the fixing unit and the neighboring structure (the supporting target), the height difference formed between the fixing unit and the neighboring structure (the supporting target) is removed by the inclined face of the block member. As such, it is possible to adhere the fiber-reinforced member without any gap, and to perform reinforcement in a more reliable manner.

Further, in the fixing unit reinforcement structure, the fiber-reinforced member may be disposed in such a manner that it is sandwiched between the fixing unit and the neighboring structure (the supporting target).
That is, the fiber-reinforced member may be disposed on the face of the fixing unit which is opposite to the neighboring structure.
With this configuration, when the support is installed, the fiber-reinforced member is disposed between the neighboring structure (the supporting target) and the fixing unit. Thus, the fiber-reinforced member is kept sandwiched by the neighboring structure (the supporting target) and the fixing unit. Thereby, it is possible to increase the thickness of the fixing unit to enhance rigidity. Accordingly, it is possible for the fixing unit reinforcement structure to reinforce the fixing unit against bending stress caused by the support supporting the long object.

Further, another fixing unit reinforcement structure according to the third aspect of the present invention is a reinforcement structure for a flat plate-shaped fixing unit, which fixes a support for supporting a long object to a neighboring structure (a supporting target). In this fixing unit reinforcement structure, the fixing unit and the neighboring structure (the supporting target) are adhered together by an adhesive containing a fiber-reinforced member.
That is, the fixing unit reinforcement structure includes an adhesive that adheres a flat plate-shaped fixing unit, which fixes a support for supporting a long object to a neighboring structure (a supporting target), to the neighboring structure. Here, the adhesive contains a fiber-reinforced member.
With this configuration, when the support is installed, the fixing unit is adhered to the neighboring structure (the supporting target) by the adhesive containing the fiber-reinforced member. Thereby, the fixing unit is increased in thickness by an adhesive layer formed by the adhesive. Thereby, it is possible to increase the rigidity of the fixing unit. Accordingly, it is possible for the fixing unit reinforcement structure to reinforce the fixing unit against bending stress caused by the support supporting the long object.

### [Advantageous Effects]

According to the duct arrangement of the first aspect of the present invention, it is possible to improve the strength using a relatively simple and lightweight structure, and it is possible to add reinforcement through relatively simple construction.

Further, according to the duct equipment of the first aspect of the present invention, it is possible to improve the strength using a relatively simple and lightweight structure, and it is possible to add reinforcement through relatively simple construction.

Further, according to the reinforcement construction method of the first aspect of the present invention, it is possible to improve the strength of the duct body using a relatively simple and lightweight structure, using relatively simple construction.

According to the support reinforcement structure of the long object of the second aspect of the present invention, it is possible to increase the rigidity of the support using a simple and lightweight structure. In addition, it is possible to reinforce an existing support in a simple manner.

According to the fixing unit reinforcement structure for the support of the third aspect of the present invention, it is possible to increase the rigidity of the fixing unit for the support using a simple and lightweight structure. In addition, it is possible to reinforce the fixing unit in a simple manner.

### [Brief Description of the Drawings]

FIG. 1 is a cross-sectional view taken across a central axis P1 of duct equipment 1101 according to a first embodiment of the present invention.
FIG. 2 is a cross sectional view take along a line **I-I** of Fig. 1 showing a longitudinal cross-sectional view taken along the central axis P1 of the duct equipment 1101 according to the first embodiment of the present invention.
FIG. 3 is a cross-sectional view taken across a central axis P1 of duct equipment 1102 according to a second embodiment of the present invention.
FIG. 4 is a cross-sectional view taken across a central axis P1 of duct equipment 1103 according to a third embodiment of the present invention.
FIG. 5 is a cross-sectional view taken across a central axis P1 of duct equipment 1104 according to a fourth embodiment of the present invention.
FIG. 6 is a cross-sectional view taken across a central axis P1 of duct equipment 1105 according to a fifth embodiment of the present invention.
FIG. 7 is a cross-sectional view taken across a central axis P 1 of duct equipment 1106 according to a sixth embodiment of the present invention.
FIG. 8 is a cross-sectional view taken across a central axis P1 of duct equipment 1107 according to a seventh embodiment of the present invention.
FIG. 9 is a cross-sectional view taken across a central axis P1 of duct equipment 1108 according to an eighth embodiment of the present invention.
FIG. 10 is a cross-sectional view taken across a central axis P1 of duct equipment 1109 according to a ninth embodiment of the present invention.
FIG. 11 is a cross-sectional view taken across a central axis P1 of duct equipment 1110 according to a tenth embodiment of the present invention.
FIG. 12 is a cross-sectional view taken across a central axis P1 of duct equipment 1111 according to an eleventh embodiment of the present invention.
FIG. 13 is a cross-sectional view taken across a central axis P1 of duct equipment 1112 according to a twelfth embodiment of the present invention.
FIG. 14 is a cross-sectional view taken across a central axis P1 of duct equipment 1113 according to a thirteenth embodiment of the present invention.
FIG. 15 is a cross-sectional view taken across a central axis P1 of duct equipment 1114 according to a fourteenth embodiment of the present invention.
FIG. 16 is a perspective view of duct equipment 1115 according to a fifteenth embodiment of the present invention.
FIG. 17 is a perspective view of duct equipment 1116 according to a sixteenth embodiment of the present invention.
FIG. 18 is a perspective view of duct equipment 1117 according to a seventeenth embodiment of the present invention.
FIG. 19 is a perspective view of duct equipment 1118 according to an eighteenth embodiment of the present invention.
FIG. 20 is a perspective view of duct equipment 1119 according to a nineteenth embodiment of the present invention.
FIG. 21 is a perspective view of duct equipment 1120 according to a twentieth embodiment of the present invention.
FIG. 22 is a cutaway perspective view showing a support reinforcement structure 21 A according to a twenty-first embodiment of the present invention.
FIG. 23 is a cross-sectional view taken along arrow line A-A shown in FIG. 22.
FIG. 24 is a horizontal cross-sectional view showing a support reinforcement structure 21B according to a twenty-second embodiment of the present invention.
FIG. 25 is a horizontal cross-sectional view showing a support reinforcement structure 21C according to a twenty-third embodiment of the present invention.
FIG. 26 is a horizontal cross-sectional view showing a support reinforcement structure 21D according to a twenty-fourth embodiment of the present invention.
FIG. 27 is a horizontal cross-sectional view showing a support reinforcement structure 21E according to a twenty-fifth embodiment of the present invention.
FIG. 28A is a horizontal cross-sectional view showing a support reinforcement structure 21F according to a twenty-sixth embodiment of the present invention.
FIG. 28B is a view showing an example of a method of constructing the support reinforcement structure 21F according to the twenty-sixth embodiment of the present invention.
FIG. 29 is a perspective view showing a support reinforcement structure 21 G according to a twenty-seventh embodiment of the present invention.
FIG. 30 is a horizontal cross-sectional view of a beam member 220 shown in FIG. 29.
FIG. 31 is a horizontal cross-sectional view showing a support reinforcement structure 21H according to a twenty-eighth embodiment of the present invention.
FIG. 32 is a cutaway perspective view showing a reinforcement structure 31A according to a twenty-ninth embodiment of the present invention.
FIG. 33 is a cross-sectional view taken along line A-A shown in FIG. 32.
FIG. 34 is a cross-sectional view taken along line B-B shown in FIG. 33.
FIG. 35 is a top-down view showing a reinforcement structure 31B according to a thirtieth embodiment of the present invention, and is a view corresponding to FIG. 33.
FIG. 36 is a side cross-sectional view showing the reinforcement structure 31B according to the thirtieth embodiment of the present invention, and is a view corresponding to FIG. 34.
FIG. 37 is a top-down view showing a reinforcement structure 31C according to a thirty-first embodiment of the present invention, and is a view corresponding to FIG. 33.
FIG. 38 is a side cross-sectional view showing the reinforcement structure 31C according to a thirty-second embodiment of the present invention, and is a view corresponding to FIG. 34.
FIG. 39 is a top-down view showing a reinforcement structure 31 D according to a thirty-third embodiment of the present invention, and is a view corresponding to FIG. 33.
FIG. 40 is a side cross-sectional view showing the reinforcement structure 31D according to the thirty-third embodiment of the present invention, and is a view corresponding to FIG. 34.
FIG. 41 is a top-down view showing a reinforcement structure 31E according to a thirty-fourth embodiment of the present invention, and is a view corresponding to FIG. 33.
FIG. 42 is a side cross-sectional view showing the reinforcement structure 31 E according to the thirty-fourth embodiment of the present invention, and is a view corresponding to FIG. 34.
FIG. 43 is a top-down view showing a reinforcement structure 31F according to a thirty-fifth embodiment of the present invention, and is a view corresponding to FIG. 33.
FIG. 44 is a side cross-sectional view showing the reinforcement structure 31F according to the thirty-fifth embodiment of the present invention, and is a view corresponding to FIG. 34.

### [Best Mode for Carrying out the Invention]

Hereinafter, embodiments of the present invention will be described with reference to the drawings.

### (First Embodiment)

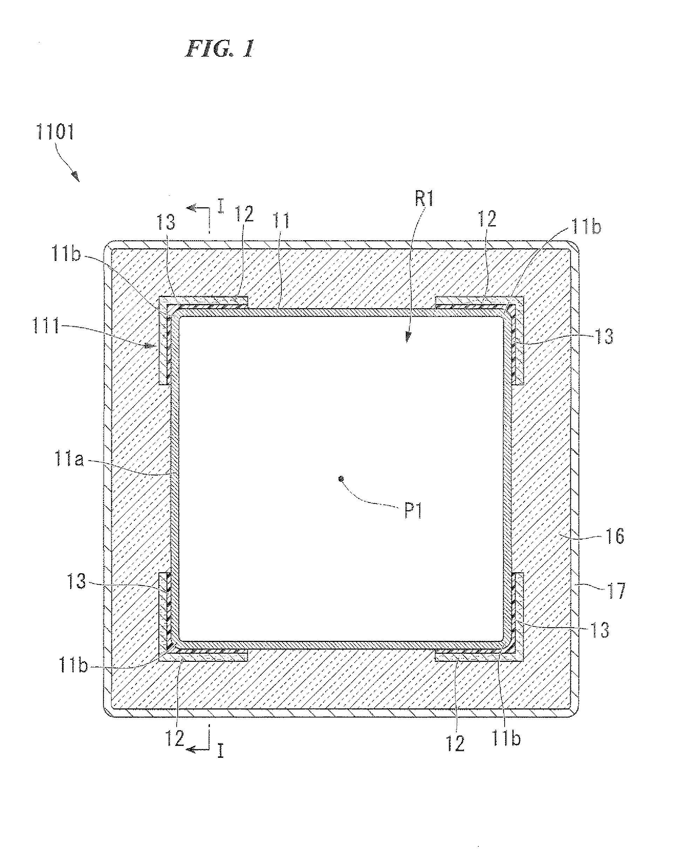

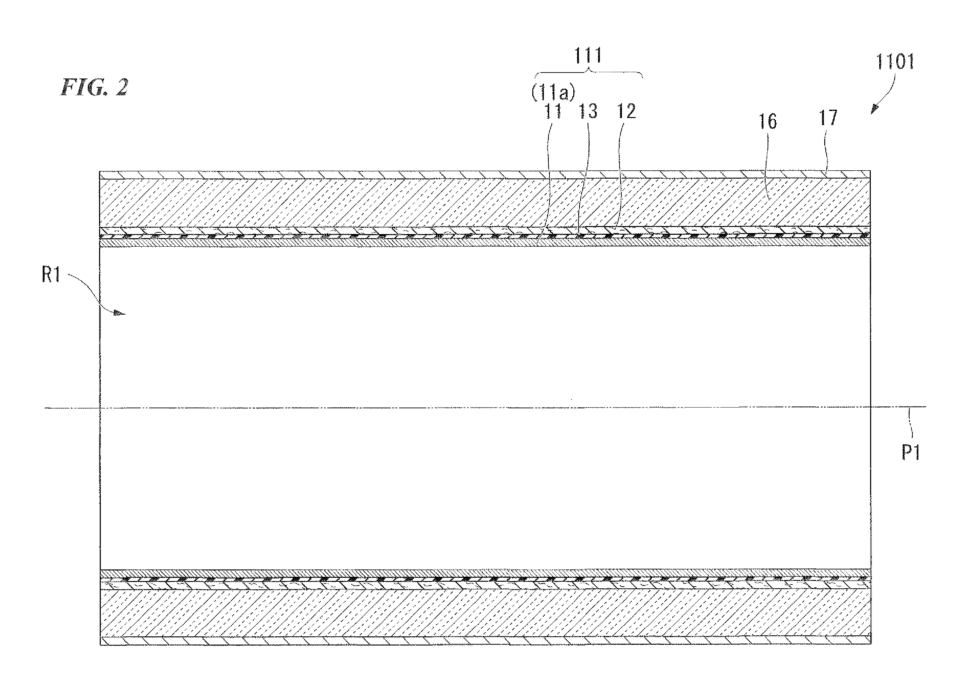

FIG. 1 is a cross-sectional view taken across the central axis P1 of duct equipment 1101 according to a first embodiment of the present invention, and FIG. 2 is a cross-sectional view taken along line I-I of FIG. 1.
The duct equipment 1101 is installed for the purpose of ventilating control rooms of plant facilities, and is formed with a ventilation passage (duct passage) R1 along the central axis P1 thereof, as shown in FIG. 2. This duct equipment 1101 includes a duct arrangement 111 in which a duct body 11 is bonded with four fiber-reinforced moldings 12 via adhesive layers 13, a heat insulating material 16 installed on an outer circumference of the duct arrangement 111, and a external cover 17 installed on an outer circumference of the heat insulating material 16.

As shown in FIG. 1, when viewed in a cross-section in a direction intersecting a direction in which the ventilation passage R1 extends (an extending direction of the ventilation passage R1 or a direction of the central axis P1), the duct body 11 is an angular duct having a rectangular cross-section. This duct body 11 has a closed cross-section in which a duct wall 11a formed of a relatively thin steel plate runs continuously via four duct corners 11b. This duct wall 11a defines the ventilation passage R1.

The fiber-reinforced moldings 12 are molded and hardened by arranging carbon fibers in one direction or in multiple directions to impregnate a resin material. The fiber-reinforced moldings 12 are relatively lightweight and simultaneously have high strength as well as high rigidity. Meanwhile, in the present embodiment, as the resin material, an epoxy resin is used.
As shown in FIG. 1, these fiber-reinforced moldings 12 are formed in an L-shape when viewed in a cross-section, and are installed on the respective four duct corners 11b of the duct body 11 one by one. As shown in FIG. 2, the fiber-reinforced moldings 12 are formed so as to extend along the ventilation passage R1 by a length approximately equal to a length of a longitudinal direction of the duct body 11.
The fiber-reinforced moldings 12 are adhered to the duct wall 11a along the duct corners 11b.

The adhesive layers 13 are formed between the fiber-reinforced moldings 12 and the duct wall 11a, and are formed by drying and curing an epoxy-based adhesive.

In this manner, the four fiber-reinforced moldings 12 are installed on the duct body 11 via the adhesive layers 13. Thereby, the duct arrangement 111 is configured.
The duct arrangement 111 has a structure in which a thickness thereof is increased within a range where the fiber-reinforced moldings 12 are installed because the fiber-reinforced moldings 12 are installed on the duct corners 11b. That is, the thickness of the duct arrangement 111 is equal to that of the duct wall 11a at portions excluding the duct corners 11b, and is equal to the sum of that of the duct wall 11a, that of the adhesive layer 13, and that of the fiber-reinforced molding 12 at the duct corners 11b.

The heat insulating material 16 is a fibrous material such as glass wool or rock wool. As shown in FIG. 1, the heat insulating material 16 is installed on the outer circumference of the duct arrangement 111 in a rectangular shape along the shape of the duct body 11. The heat insulating material 16 encloses the duct body 11 and the fiber-reinforced moldings 12.

The external cover 17 is formed of a relatively thin steel plate. The external cover 17 encloses the heat insulating material 16 in a rectangular shape along the shape of the duct body 11. Between the external cover 17 and the duct arrangement 111, the heat insulating material 16 is filled.

There is a case that the duct equipment 1101 may be formed by adding the fiber-reinforced moldings 12 to duct equipment, in which the fiber-reinforced moldings 12 are excluded from the aforementioned configuration. That is, by adding the fiber-reinforced moldings 12 to the configuration, in which the heat insulating material 16 is installed on the outer circumference of the duct body 11 and the external cover 17 is installed on the outer circumference of the heat insulating material 16, an attempt may be made to improve strength.

In this case, reinforcement construction for the duct (the duct reinforcement construction method) is performed as follows, because use of the plant control room and ventilation are not constant. First, the external cover 17 and the heat insulating material 16 are removed, and mechanical polishing or chemical polishing is manually performed on the duct corners 11b. Then, epoxy-based adhesive formed into the adhesive layers 13 is applied to these duct corners 11b. Thus, the fiber-reinforced moldings 12 are bonded to the duct corners 11b via the adhesive, thereby obtaining the duct arrangement 111. Finally, the external cover 17 and the heat insulating material 16 are newly installed on the duct arrangement 111, completing construction. The duct equipment 1101 is obtained in this way.

As to a more detailed construction method, prior to applying the adhesive layers 13, priming coat is performed using an epoxy resin, and a process of smoothing the roughness of a duct surface using such a resin layer is performed. Further, the fiber-reinforced moldings 12 are coated with an epoxy-based impregnating adhesive resin. Surface finishing is further performed using, for instance, an acrylic urethane resin (a surface finishing agent). Thereby, an impermeable layer is formed which can counteract salt damage.

As described above, according to the present embodiment, the fiber-reinforced moldings 12 installed on the duct corners 11b via the adhesive layers 13 are provided. As such, the thickness of the duct arrangement 111 of the portion corresponding to each duct corner 11b of the duct body 11 is increased. That is, at each duct corner 11b of the duct body 11 which is locally weak in strength, the thickness of the duct arrangement 111 is increased. Thereby, it is possible to increase strength pertaining to bending in the duct arrangement 111 using a relatively simple structure.
Meanwhile, the strength of the entire duct arrangement 111 is improved by increasing the thickness of the duct arrangement 111 at the duct corners 11b of the duct body 11, which can be derived from an empirical formula or a design formula.

Furthermore, since the fiber-reinforced moldings 12 are relatively lightweight, it is possible to suppress an increase in weight of the entire duct arrangement 111. Further, it is possible to handle the duct arrangement 111 in a relatively easy manner. Thereby, it is possible to reduce time and labor required for reinforcement construction.
Further, because the fiber-reinforced moldings 12 are relatively lightweight, it is possible to obtain a sufficient fixing force even when the fiber-reinforced moldings 12 are bonded to the duct body 11 using the adhesive layers 13. Thereby, it is possible to increase the strength of the entire duct arrangement using a relatively simple structure.
Further, the duct arrangement 111 can meet construction requirements of nonuse of electricity, and of the prohibition of welding or thermal cutting work, because reinforcement is possible without machining using electricity, and the construction of reinforcement does not affect the control of a plant.
Further, the duct arrangement 111 allows easy construction of reinforcement without affecting the use of the plant control room, because reinforcement is structurally constructed from the outside with ease.

Further, the fiber-reinforced moldings 12 are formed to have a substantially L-shape when viewed in the cross-section. As such, it is possible to increase the thickness of the duct arrangement 111 within a necessary and sufficient range including the duct corners 11b of the duct wall 11a.
Further, since workability is improved due to easy handling during transportation, it is possible to further reduce time and labor required for reinforcement construction.

### (Second Embodiment)

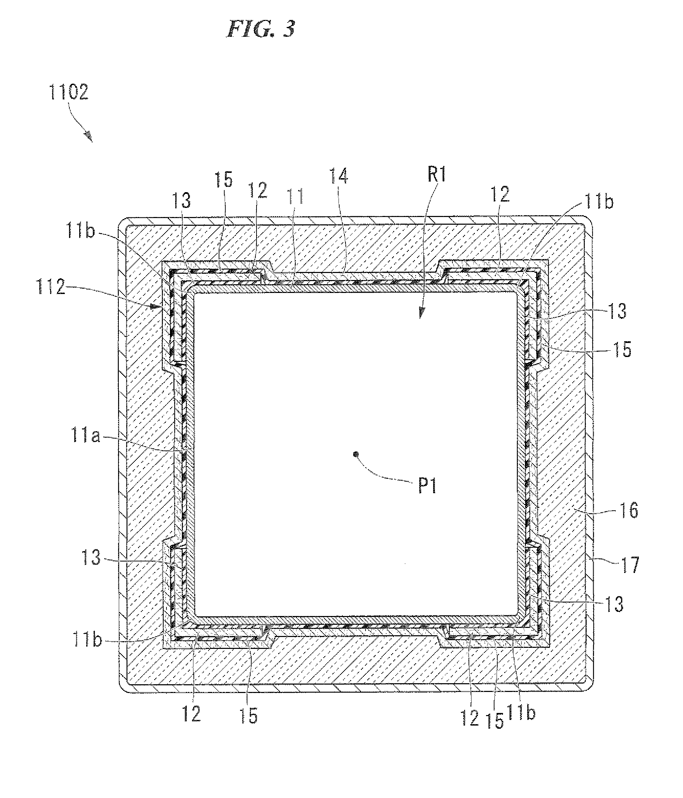

FIG. 3 is a cross-sectional view taken across the central axis P1 of duct equipment 1102 according to a second embodiment of the present invention. Components corresponding to components shown in FIGS. 1 and 2 are denoted by the same symbols and description thereof is omitted.

As shown in FIG. 3, the duct equipment 1102 includes: a duct arrangement 112 configured of a duct body 11, four fiber-reinforced moldings 12, adhesive layers 13, a fiber-reinforced sheet 14, and an adhesive layer 15; a heat insulating material 16 installed on an outer circumference of the duct arrangement 112; and a external cover 17 installed on an outer circumference of the heat insulating material 16.

The fiber-reinforced sheet 14 is, for example, a carbon fiber sheet. This fiber-reinforced sheet 14 is wound around the duct arrangement 112 in such a manner that it is in contact with the four fiber-reinforced moldings 12 in turn along the duct body 11 in a circumferential direction in the state where tensile force is applied. Thus, the fiber-reinforced sheet 14 wound around the duct arrangement 112 is impregnated with an epoxy resin. This fiber-reinforced sheet 14 is brought into close contact with a duct wall 11a so that no gap is generated between them.

The adhesive layer 15 is formed between the fiber-reinforced sheet 14 and the fiber-reinforced moldings 12 and between the duct wall 11a and the fiber-reinforced sheet 14. The epoxy resin impregnated into the fiber-reinforced sheet 14 oozes onto bonding surfaces to harden an adhesive. Thereby, the adhesive layer 15 is formed. In detail, an epoxy-based impregnating adhesive resin (an epoxy resin) penetrates an adhesive applied to surfaces (bonding surfaces) of the duct body 11 and the fiber-reinforced moldings 12 which are opposite to the fiber-reinforced sheet 14, and hardens the adhesive.

An example of reinforcement construction in the present embodiment is as follows. First, before the adhesive layers 13 for the fiber-reinforced moldings 12 are applied, priming coat is performed on the surface of the duct body 11 using an epoxy resin. Thus, the roughness of the duct surface is smoothed by a thickness of the resin. Subsequently, an epoxy-based adhesive formed into the adhesive layers 13 is applied to the duct corners 11b, and the fiber-reinforced moldings 12 are disposed at the duct corners 11b. Further, an epoxy-based adhesive formed into the adhesive layer 15 is applied to a surface of the remaining portion of the duct body 11 (the portion excluding the duct corners 11b) and surfaces of the fiber-reinforced moldings 12 bonded to the duct body 11. Then, the fiber-reinforced sheet 14 is wound and disposed on the duct body 11 in a circumferential direction in a state where a tensile force is applied to the fiber-reinforced sheet 14 along the duct body 11. Thus, after the fiber-reinforced sheet 14 is installed, the duct arrangement 112 is coated with an epoxy-based impregnating adhesive resin. Then, surface finishing is additionally performed using, for instance, an acrylic urethane resin. Finally, the external cover 17 and the heat insulating material 16 are newly installed on the duct arrangement 112. completing construction. The duct equipment 1102 is obtained in this way.
Although the adhesive applied directly to the outer circumference of the duct body 11 is applied twice: once for when the fiber-reinforced moldings 12 are bonded and once for when the fiber-reinforced sheet 14 is disposed, the adhesive may be applied to an entire circumferential surface of the duct body 11 in advance.

According to the present embodiment, effects similar to those of the first embodiment described above are obtained. Since the fiber-reinforced sheet 14 enclosing the duct body 11 and simultaneously installed on the fiber-reinforced moldings 12 via the adhesive layer 15 is provided, the duct corners 11b are further increased in thickness, so that it is possible to further enhance strength pertaining to bending.
Further, since a closed cross-section is formed by the fiber-reinforced sheet 14, it is possible to enhance strength pertaining to bending as well as strength pertaining to torsion or shear.

### (Third Embodiment)

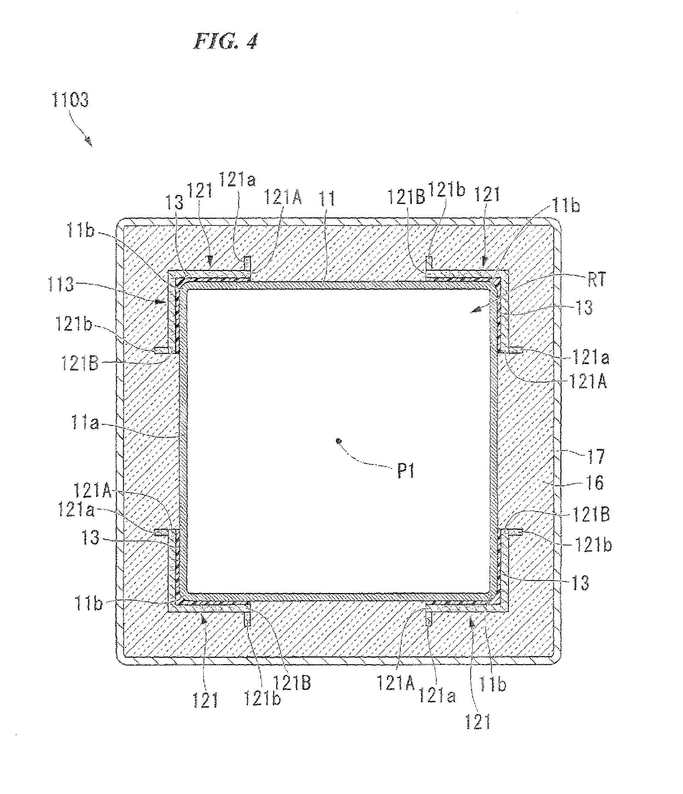

FIG. 4 is a cross-sectional view taken across the central axis P1 of duct equipment 1103 according to a third embodiment of the present invention. Components corresponding to components shown in FIGS. 1 to 3 are denoted by the same symbols and a description thereof is omitted here.

As shown in FIG. 4, the duct equipment 1103 includes a duct arrangement 113, a heat insulating material 16 installed on an outer circumference of the duct arrangement 113, and a external cover 17 installed on an outer circumference of the heat insulating material 16. The duct arrangement 113 is configured of a duct body 11, four fiber-reinforced moldings 121, and adhesive layers 13.

The fiber-reinforced moldings 121 are configured similarly to the aforementioned fiber-reinforced moldings 12, but are different from the fiber-reinforced moldings 12 in that each includes rib parts 121a and 121b.
The rib parts 121a and 121b protrude to extend toward the outside of the duct body 11 (in other words, in a direction normal to a surface of a duct wall 11a to which each fiber-reinforced molding 121 is bonded), and are formed so as to extend in the direction of the ventilation passage R1 (see FIG. 1). Further, as shown in FIG. 4, the rib parts 121a and 121b are formed at side ends 121A and 121B of each fiber-reinforced molding 121, respectively.
Reinforcement construction according to the present embodiment can be performed in a procedure similar to that of the aforementioned first embodiment, and so a further detailed description thereof is omitted.

According to the present embodiment, since the fiber-reinforced moldings 121 each include the rib parts 121a and 121b that protrude to extend toward the outside of the duct body 11 and are simultaneously formed so as to extend along the ventilation passage R1, it is possible to increase strength over the aforementioned first embodiment.

### (Fourth Embodiment)

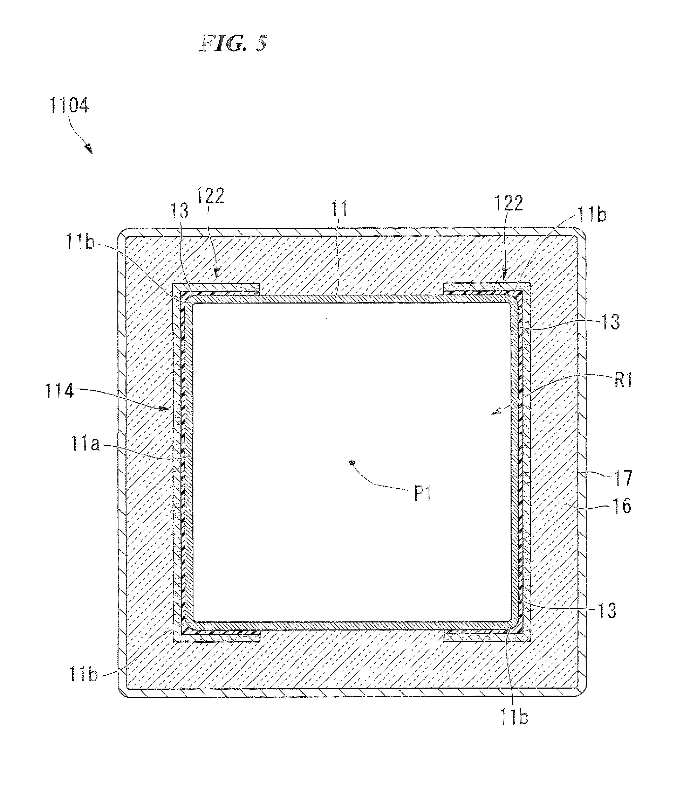

FIG. 5 is a cross-sectional view taken across the central axis P1 of duct equipment 1104 according to a fourth embodiment of the present invention. Components corresponding to components shown in FIGS. 1 to 4 are denoted by the same symbols and a description thereof is omitted.

As shown in FIG. 5, the duct equipment 1104 includes a duct arrangement 114, a heat insulating material 16 installed on an outer circumference of the duct arrangement 114, and a external cover 17 installed on an outer circumference of the heat insulating material 16. The duct arrangement 114 is configured of a duct body 11, two fiber-reinforced moldings 122, and adhesive layers 13.

The fiber-reinforced moldings 122 are configured similarly to the fiber-reinforced moldings 12, but show a great difference in cross-sectional shape. These fiber-reinforced moldings 122 are formed in a substantially U-shape (a channel shape) when viewed in a cross-section as shown in FIG. 4, and are each formed across two duct corners 11b, which are adjacent to each other in a gravitational direction, among four duct corners 11b. These two fiber-reinforced moldings 122 are installed apart from each other in a widthwise direction (a horizontal direction).
Reinforcement construction according to the present embodiment is similar to that of the aforementioned first embodiment. That is, in the procedure, the adhesive layers 13 are formed at portions of a substantially U-shape when viewed in a cross-section of the duct body 11 on which priming coat is performed, and the fiber-reinforced moldings 122 are bonded to the adhesive layers. As such, a further detailed description thereof is omitted.

According to the present embodiment, the fiber-reinforced moldings 122 are formed in a substantially U-shape when viewed in a cross-section, and are installed across the two duct corners 11b. As such, it is possible to increase a thickness of the duct arrangement 114 at portions corresponding to the two duct corners 11b using one fiber-reinforced molding 122. Further, it is possible to increase thicknesses of the portions corresponding to the two duct corners 11b of the duct arrangement 114 only by covering the fiber-reinforced molding 122 from the side of the duct wall 11a. Thereby, it is possible to improve workability, and thus it is possible to reduce time and labor required for reinforcement construction.

Further, the fiber-reinforced moldings 122 are each formed across the two duct corners 11b, which are adjacent to each other in a gravitational direction. As such, fiber-reinforced moldings 122 are not installed on the duct wall 11a formed so as to extend in a horizontal direction. Accordingly, it is possible to suppress an increase in weight and to efficiently increase bending strength against deadweight or load in a direction of gravitational force.

### (Fifth Embodiment)

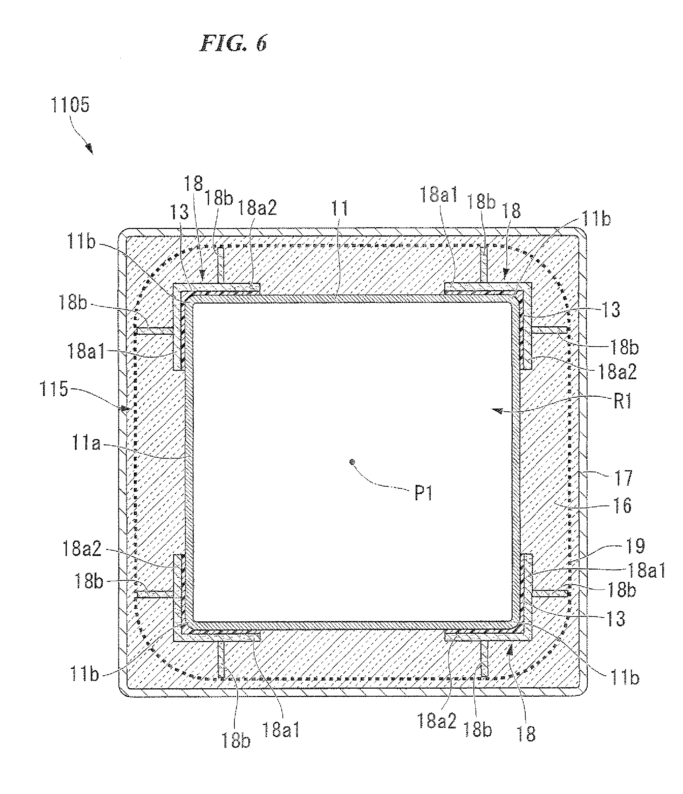

FIG. 6 is a cross-sectional view taken across the central axis P1 of duct equipment 1105 according to a fifth embodiment of the present invention. Components corresponding to components shown in FIGS. 1 to 5 are denoted by the same symbols and a description thereof is omitted.

As shown in FIG. 6, the duct equipment 1105 includes a duct arrangement 115, a heat insulating material 16 installed on an outer circumference of the duct arrangement 115, and a external cover 17 installed on an outer circumference of the heat insulating material 16. The duct arrangement 115 is configured of a duct body 11, four steel reinforcements (metal reinforcements) 18, adhesive layers 13, and a wire 19.

Each steel reinforcement 18 is a member adapted to bond side ends of two T-shaped steel members in different directions, and includes a steel plate body (a metal plate body) 18a, and steel rib parts (metal rib parts) 18b.
As shown in FIG. 6, the steel plate bodies 18a are formed in an L-shape when viewed in a cross-section, and are installed on four duct corners 11b of the duct body 11 via the adhesive layers 13.
The steel rib parts 18b protrude from respective regions 18a1 and 18a2 of the steel plate body 18a formed to extend at both sides of each duct corner 11b toward the outside of the duct body 11 one by one.

The wire 19 connects all the (eight) steel rib parts 18b inside the external cover 17. Further, the wire 19 is suspended on the tip of each steel rib part 18b and tensioned. Thereby, the wire 19 presses each steel reinforcement 18 against the duct body 11.

In reinforcement construction according to the present embodiment, before the adhesive layers 13 for the steel reinforcements 18 are applied, degreasing and rasping are performed on the duct corners 11b of the duct body 11. The rasping is also performed on adhered portions of the steel reinforcements 18. Subsequently, an epoxy-based adhesive formed into the adhesive layers 13 is applied to the duct corners 11b, and the steel reinforcements 18 are installed on the duct corners 11b. Thereafter, all the steel ribs 8b of these steel reinforcements 18 are connected by the wire 19. Thereby, reinforcement construction is completed. At this time, the wire 19 is tensioned, thereby pressing each steel reinforcement 18 against the duct body 11. Finally, the external cover 17 and the heat insulating material 16 are newly installed on the duct arrangement 112, completing construction. The duct equipment 1105 is obtained in this way.

According to the present embodiment, the steel plate bodies 18a are installed on the duct corners 11b via the adhesive layers 13, respectively. Further, the four steel reinforcements 18, each of which has the steel plate body 18a formed in a substantially L-shape and the rib parts 18b protruding from both regions 18a1 and 18a2 of the steel plate body 18a, are provided. Further, the wire 19 connecting the steel rib parts 18b of the four steel reinforcements 18 is provided. As such, the duct arrangement 115 is configured so that the thicknesses of portions corresponding to the duct corners 11b of the duct body 11 which are locally weak in strength are increased, compared to the duct arrangement having no steel reinforcements 18. That is, the thickness of the duct arrangement 115 is the sum of a thickness of the duct wall 11a, a thickness of each adhesive layer 13, and a thickness of each steel plate body 18a. Thereby, it is possible to increase the strength of the entire duct arrangement 115 using a relatively simple structure.
Further, since each steel reinforcement 18 fixed to the duct body 11 has the steel rib parts 18b, it is possible to relatively greatly increase the strength of the duct arrangement 115.
Since the duct equipment 1105 and the duct arrangement 115 also include the steel reinforcements 18 having relatively high rigidity, it is possible to greatly increase the strength thereof.
Further, since the duct equipment 1105 and the duct arrangement 115 include the adhesive layers 13 and the wire 19, it is possible to securely fix the steel reinforcements 18 to the duct body 11.
Further, the duct equipment 1105 and the duct arrangement 115 allow construction of reinforcement without machining using electricity. Accordingly, the duct equipment 1105 and the duct arrangement 115 can meet construction requirements of nonuse of electricity, and of the prohibition of welding or thermal cutting work, and the construction of reinforcement does not affect the control of a plant.
Further, the duct equipment 1105 and the duct arrangement 115 structurally allow reinforcement construction to be performed from the outside. Accordingly, the duct equipment 1105 and the duct arrangement 115 allow easy construction of reinforcement without affecting use of the plant control room.

### (Sixth Embodiment)

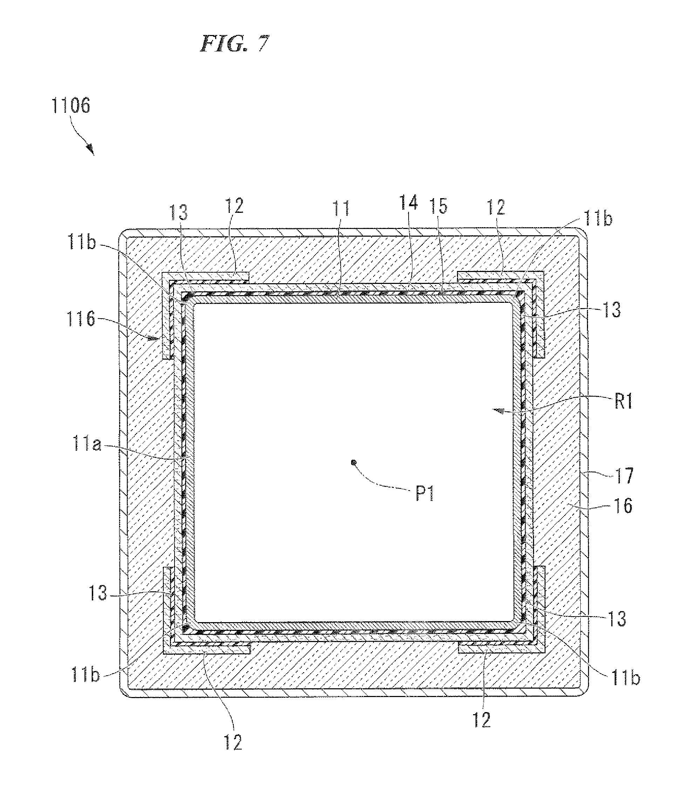

FIG. 7 is a cross-sectional view taken across the central axis P1 of duct equipment 1106 according to a sixth embodiment of the present invention. Components corresponding to components shown in FIGS. 1 to 6 are denoted by the same symbols and description thereof is omitted.

As shown in FIG, 7, the duct equipment 1106 includes a duct arrangement 116, a heat insulating material 16, and a external cover 17.
The duct arrangement 116 includes a duct body 11, a fiber-reinforced sheet 14, and fiber-reinforced moldings 12. The fiber-reinforced sheet 14 is disposed on an outer circumference of the duct body 11, and is fixed to the duct body 11 via an adhesive layer 15. The fiber-reinforced moldings 12 are disposed along duct corners 11b, and are fixed to the fiber-reinforced sheet 14 via adhesive layers 13. The total four fiber-reinforced moldings 12 are installed on the duct corners 11b one by one.
The heat insulating material 16 is installed on an outer circumference of the duct arrangement 116.
The external cover 17 is installed on an outer circumference of the heat insulating material 16.

Reinforcement construction according to the present embodiment is performed as follows. First, before the adhesive layer 15 for the fiber-reinforced sheet 14 is applied, priming coat is performed on the duct body 11 using an epoxy resin. Thereby, the roughness of the duct surface is smoothed by a resin thickness of the epoxy resin. Subsequently, an epoxy-based adhesive formed into the adhesive layer 15 is applied throughout the duct body 11. Then, the fiber-reinforced sheet 14 is wound and disposed on the outer circumference of the duct body 11. Further, an epoxy-based adhesive formed into the adhesive layers 13 is applied to portions corresponding to the duct corners 11b of the disposed fiber-reinforced sheet 14. Then, the fiber-reinforced moldings 12 are bonded to the fiber-reinforced sheet 14 by the adhesive layers 13. After the fiber-reinforced moldings 12 are installed in this way, the duct arrangement 116 is coated with an epoxy-based impregnating adhesive resin. Then, surface finishing is further performed on the coated duct arrangement 116 using, for instance, an acrylic urethane resin. Finally, the external cover 17 and the heat insulating material 16 are newly installed on the duct arrangement 116, completing construction. The duct equipment 1106 is obtained in this way.

According to the present embodiment, it is possible to increase thicknesses of the portions corresponding to the duct corners 11b of the duct arrangement 116 by means of the fiber-reinforced sheet 14 and the fiber-reinforced moldings 12. That is, the duct arrangement 116 is configured so that the thicknesses of portions corresponding to the duct corners 11b of the duct body 11 which are locally weak in strength are increased. Accordingly, it is possible to increase the strength of the entire duct arrangement 116.

Further, the fiber-reinforced sheet 14 is disposed on the outer circumference of the duct body 11, and a closed cross-section is formed by the fiber-reinforced sheet 14. Thereby, it is possible to further enhance the strengths of the duct arrangement 116 and the duct equipment 1106.

Furthermore, the fiber-reinforced sheet 14 and the fiber-reinforced moldings 12 are relatively lightweight. As such, it is possible to suppress an increase in weight of the entire duct arrangement 116. Further, it is possible to handle the duct arrangement 116 in a relatively easy manner. Thereby, it is possible to reduce the time and labor required for reinforcement construction of the duct arrangement 116 and the duct equipment 1106.

Further, the fiber-reinforced sheet 14 and the fiber-reinforced moldings 12 are relatively lightweight. As such, it is possible to obtain a sufficient fixing force when the fiber-reinforced sheet 14 and the fiber-reinforced moldings 12 are bonded to the duct body 11 from the outside of the duct body 11 using the adhesive layers 13 and 15. Thereby, it is possible to increase the strength of the entire duct arrangement using a relatively simple structure.
Further, reinforcement of the duct equipment 1106 and the duct arrangement 116 is possible without machining using electricity. Accordingly, the duct equipment 1106 and the duct arrangement 116 can meet construction requirements of nonuse of electricity, and prohibition of welding or thermal cutting work, and do not affect the control of a plant.
Further, the duct equipment 1106 and the duct arrangement 116 structurally make it easy to perform reinforcement construction from the outside. Accordingly, it is possible to easily construct reinforcement of the duct equipment 1106 and the duct arrangement 116 without affecting the use of the plant control room.

### (Seventh Embodiment)

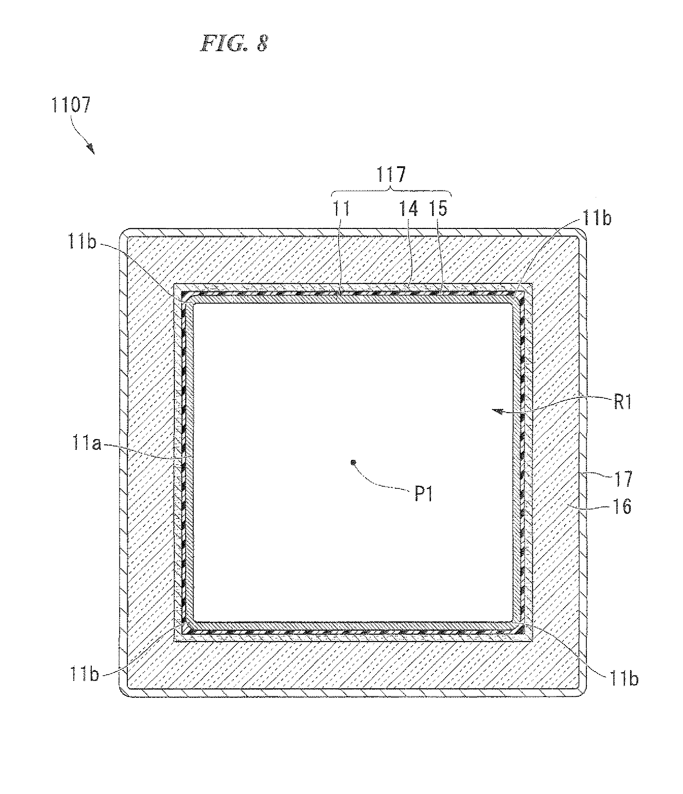

FIG. 8 is a cross-sectional view taken across the central axis P1 of duct equipment 1107 according to a seventh embodiment of the present invention. Components corresponding to components shown in FIGS. 1 to 7 are denoted by the same symbols and a description thereof is omitted.

As shown in FIG. 7, the duct equipment 1107 includes a duct arrangement 117, a heat insulating material 16, and a external cover 17.
The duct arrangement 117 includes a duct body 11 and a fiber-reinforced sheet 14 installed on an outer circumference of the duct body 11 via an adhesive layer 15.
The heat insulating material 16 is installed on an outer circumference of the duct arrangement 117.
The external cover 17 is installed on an outer circumference of the heat insulating material 16.
In the present embodiment, the configuration of the fiber-reinforced moldings 12 of the aforementioned sixth embodiment (see FIG. 7) is simplified. That is, the present embodiment is configured so that the reinforcement construction method is similar to that of the sixth embodiment. Accordingly, a detailed description of the reinforcement construction method is omitted.

According to the present embodiment, the duct arrangement 117 and the duct equipment 1107 include the duct body 11 and the fiber-reinforced sheet 14 installed on the outer circumference of the duct body 11. As such, the duct arrangement 117 and the duct equipment 1107 are configured so that the thicknesses of portions corresponding to duct corners 11b of the duct body 11 which are locally weak in strength are increased. Thereby, it is possible to increase the strength of both the duct arrangement 117 and the duct equipment 1107 using a relatively simple structure.

Furthermore, since the reinforced sheet 14 is relatively lightweight, it is possible to suppress an increase in weight of all of duct arrangement 117 and the duct equipment 1107. Further, it is possible to handle all of duct arrangement 117 and the duct equipment 1107 in a relatively easy manner. Thereby, it is possible to reduce the time and labor required for reinforcement construction of the duct arrangement 117 and the duct equipment 1107.

Further, the fiber-reinforced sheet 14 is relatively lightweight. As such, it is possible to obtain a sufficient fixing force when the fiber-reinforced sheet 14 is bonded to the duct body 11 from the outside of the duct body 11 using the adhesive layer 15. Thereby, it is possible to increase the strength of all of the duct arrangement 117 and the duct equipment 1107 using a relatively simple structure.

Further, reinforcement of the duct arrangement 117 and the duct equipment 1107 is possible without machining using electricity. Accordingly, the duct arrangement 117 and the duct equipment 1107 can meet construction requirements of nonuse of electricity, and of the prohibition of welding or thermal cutting work, and do not affect the control of a plant.

Further, the duct arrangement 117 and the duct equipment 1107 structurally make it possible to perform reinforcement construction from the outside. Accordingly, it is possible to easily construct reinforcement of the duct arrangement 117 and the duct equipment 1107 without affecting the use of the plant control room.

### (Eighth Embodiment)

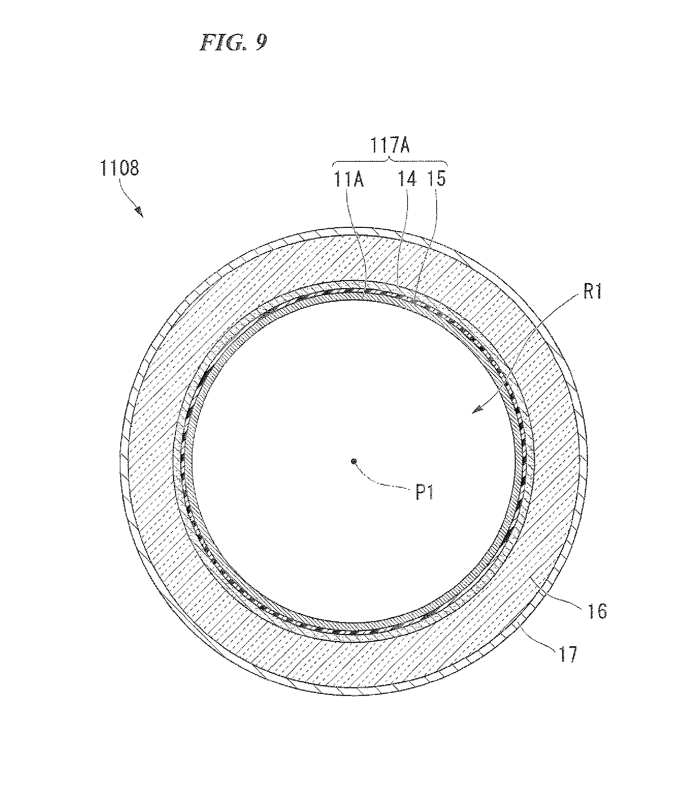

FIG. 9 is a cross-sectional view showing essential parts of duct equipment 1108 according to an eighth embodiment of the present invention and taken across a direction in which the ventilation passage R1 extends (an extending direction of the ventilation passage R1). Components corresponding to components shown in FIGS. 1 to 8 are denoted by the same symbols and a description thereof is omitted.

As shown in FIG. 9, the duct equipment 1108 has a structure that is similar to that of the duct equipment 1109. That is, the duct equipment 1108 includes a duct arrangement 117A, a heat insulating material 16, and a external cover 17.
The duct arrangement 117A includes a duct body 11A and a fiber-reinforced sheet 14 installed on an outer circumference of the duct body 11A via an adhesive layer 15.
The heat insulating material 16 is installed on an outer circumference of the duct arrangement 117A.
The external cover 17 is installed on an outer circumference of the heat insulating material 16.

The duct body 11A is a so-called circular duct and a cross-sectional shape of the duct body 11A is circular. Further, since the duct body 11A is circular-shaped, the cross-sectional shapes of the fiber-reinforced sheet 14, the heat insulating material 16, and the external cover 17 installed on an outer circumference of the duct body 11A are circular (ring-shaped).

Meanwhile, in reinforcement construction for the duct arrangement 117A and the duct equipment 1108 according to the present embodiment, a procedure of installing the adhesive layer 15 on the outer circumference of the duct body 11A and disposing the fiber-reinforced sheet 14 is similar to that of the seventh embodiment. Accordingly, a detailed description thereof will be omitted below.

According to the duct arrangement 1117A and the duct equipment 1108 of the present embodiment, effects similar to those of the aforementioned seventh embodiment are obtained. Further, since the cross-sectional shape of the duct equipment 1108 is circular, it is possible to further improve the strength thereof compared to other cross-sectional shapes.

### (Ninth Embodiment)

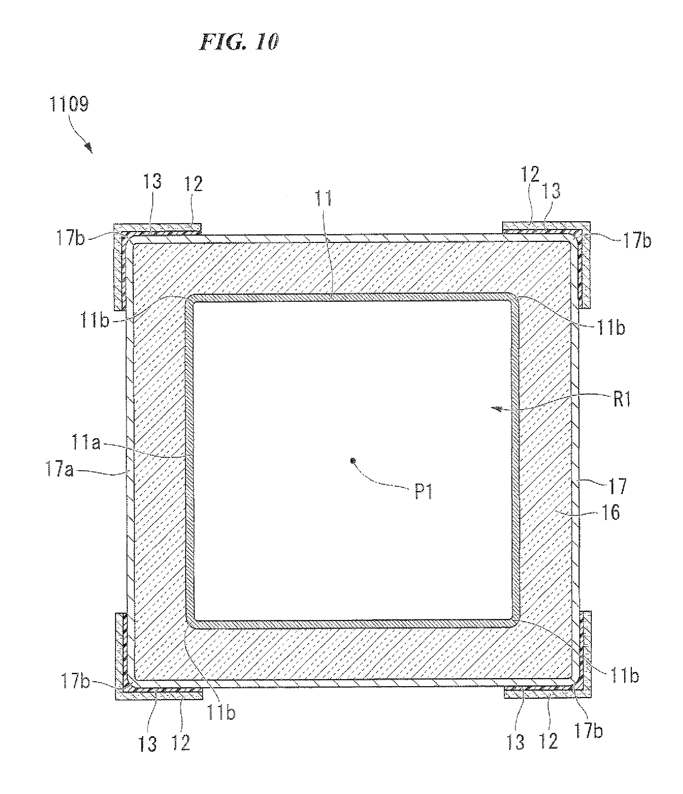

FIG. 10 is a cross-sectional view taken across the central axis P1 of duct equipment 1109 according to a ninth embodiment of the present invention. Components corresponding to components shown in FIGS. 1 to 9 are denoted by the same symbols and a description thereof is omitted.

As shown in FIG. 10, the duct equipment 1109 includes a duct body 11, a heat insulating material 16 installed on an outer circumference of the duct body 11, a external cover 17 installed on an outer circumference of the heat insulating material 16, and four fiber-reinforced moldings 12 installed on the external cover 17 via adhesive layers 13.

A cross-section of the external cover 17 is a closed cross-section where a external cover wall 17a is connected via four external cover corners 17b. The external cover 17 is disposed along the duct wall 11a. The external cover 17 encloses the heat insulating material 16 spaced apart from the duct wall 11a by a predetermined distance.
The fiber-reinforced holdings 12 are installed on the external cover corners 17b via the adhesive layers 13 one by one.

Reinforcement construction for the duct equipment 1109 according to the present embodiment is performed as follows. First, the heat insulating material 16 is installed on the outer circumference of the duct body 11. The external cover 17 is additionally installed on the outer circumference of the heat insulating material 16. Subsequently, an epoxy-based adhesive formed into the adhesive layers 13 is applied to the four external cover corners 17b of the external cover 17. Then, the fiber-reinforced moldings 12 are bonded to the external cover corners 17b by the adhesive. Then, the fiber-reinforced moldings 12 are coated with an epoxy-based impregnating adhesive resin, and are further subjected to surface finishing using, for instance, an acrylic urethane resin. Thereby, the duct equipment 1109 is obtained.

According to the present embodiment, the duct equipment 1109 is configured so that the fiber-reinforced moldings 12 installed on the external cover corners 17b via the adhesive layers 13 are provided for the external cover 17 to increase the strength of the duct body 11. As such, the duct equipment 1109 is configured so that the thicknesses of portions corresponding to the external cover corners 17b of the external cover 17 which are locally weak in strength are increased. Thereby, it is possible to increase strength, pertaining to bending of the entire duct equipment 1109 using a relatively simple structure.

Furthermore, since the fiber-reinforced moldings 12 are relatively lightweight, it is possible to suppress an increase in weight of the entire duct equipment 1109. Further, it is possible to handle the duct equipment 1109 in a relatively easy manner. Thereby, it is possible to reduce the time and labor required for reinforcement construction of the duct equipment 1109.
Further, since the fiber-reinforced moldings 12 are relatively lightweight, the duct equipment 1109 is allowed to obtain sufficient fixing force when the fiber-reinforced molding 12 are bonded to the external cover 17 using the adhesive layers 13. Thereby, it is possible to increase the entire strength of the duct equipment 1109 using a relatively simple structure.
Further, reinforcement of the duct equipment 1109 is possible without machining using electricity. As such, the duct equipment 1109 can meet construction requirements of nonuse of electricity and of the prohibition of welding and thermal cutting work. Accordingly, with the duct equipment 1109, the construction of reinforcement does not affect the control of a plant.
Further, the duct equipment 1109 structurally makes it easy to perform reinforcement construction from the outside. As such, the duct equipment 1109 allows easy construction of reinforcement without affecting the use of the plant control room. Particularly, it is not necessary to remove the external cover 17 and the heat insulating material 16, from the duct equipment 1109 as in the aforementioned first to eighth embodiments. Accordingly, the duct equipment 1109 makes reinforcement construction easier.

Further, the fiber-reinforced moldings 12 of the duct equipment 1109 are formed in a substantially L-shape when viewed in the cross-section. As such, it is possible for the duct equipment 1109 to increase in thickness within a necessary and sufficient range including the portions corresponding to the external cover corners 17b of the external cover wall 17a. Further, the duct equipment 1109 is easily handled when transported, so that workability is improved. Accordingly, it is possible for the duct equipment 1109 to further reduce time and labor required for reinforcement construction.

### (Tenth Embodiment)

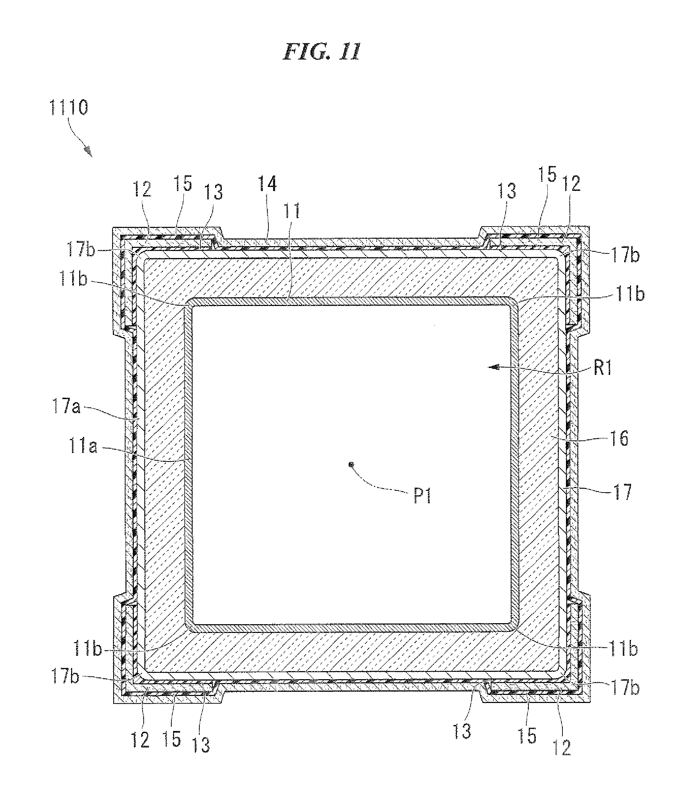

FIG. 11 is a cross-sectional view taken across the central axis P1 of duct equipment 1110 according to a tenth embodiment of the present invention. Components corresponding to components shown in FIGS. 1 to 10 are denoted by the same symbols and a description thereof is omitted.

As shown in FIG. 11, the duct equipment 1110 includes a duct body 11, a heat insulating material 16, a external cover 17, four fiber-reinforced moldings 12, and a fiber-reinforced sheet 14.
The heat insulating material 16 is installed on an outer circumference of the duct body 11.
The external cover 17 is installed on an outer circumference of the heat insulating material 16.
The fiber-reinforced moldings 12 are installed on the external cover 17 via adhesive layers 13. The fiber-reinforced sheet 14 encloses the external cover 17 and is simultaneously installed on the fiber-reinforced moldings 12 via an adhesive layer 15.

Reinforcement construction for the duct equipment 1110 according to the present embodiment is performed as follows. First, the heat insulating material 16 is installed on the outer circumference of the duct body 11. The external cover 17 is additionally installed on the outer circumference of the heat insulating material 16. Subsequently, an epoxy-based adhesive formed into the adhesive layers 13 is applied to the respective four external cover corners 17b of the external cover 17. Then, the fiber-reinforced moldings 12 are bonded to the external cover corners 17b to which the adhesive is applied. Further, an epoxy-based adhesive formed into the adhesive layer 15 is applied to the remaining portion of the external cover 17 (the portion excluding the external cover corners 17b) and surfaces of the fiber-reinforced moldings 12 bonded to the external cover corners 17b. Next, a tensile force is applied to the fiber-reinforced sheet 14 along the external cover 17. In this state, the fiber-reinforced sheet 14 is wound in a circumferential direction of the external cover 17. Thereby, the fiber-reinforced sheet 14 is disposed around the external cover 17. After the fiber-reinforced sheet 14 is installed in this way, the fiber-reinforced sheet 14 is coated with an epoxy-based impregnating adhesive resin. The coated fiber-reinforced sheet 14 is additionally subjected to surface finishing using, for instance, an acrylic urethane resin. Thereby, the duct equipment 1110 is obtained.

According to the duct equipment 1110 of the present embodiment, effects similar to those of the ninth embodiment described above are obtained. The duct equipment 1110 includes the fiber-reinforced sheet 14 that encloses the external cover 17 and is simultaneously installed on the fiber-reinforced moldings 12 via the adhesive layer 15. As such, the portions corresponding to the external cover corners 17b are further increased in thickness, so that it is possible for the duct equipment 1110 to further enhance strength pertaining to bending.
Further, since a closed cross-section is formed by the fiber-reinforced sheet 14, it is possible for the duct equipment 1110 to enhance strength pertaining to bending as well as strength pertaining to torsion or shear.

### (Eleventh Embodiment)

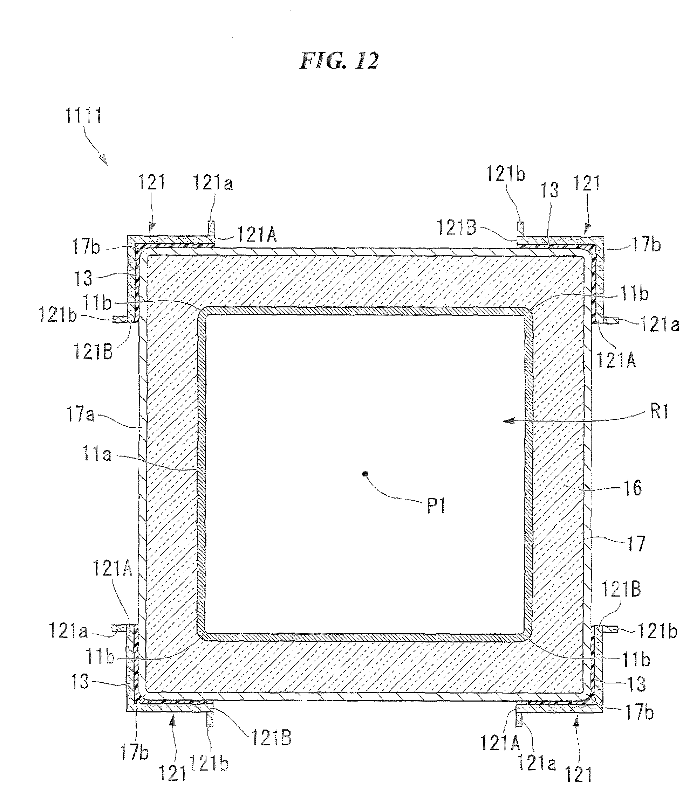

FIG. 12 is a cross-sectional view taken across the central axis P1 of duct equipment 1111 according to an eleventh embodiment of the present invention. Components corresponding to components shown in FIGS. 1 to 11 are denoted by the same symbols and a description thereof is omitted.

As shown in FIG. 12, the duct equipment 1111 includes a duct body 11, a heat insulating material 16, a external cover 17, and four fiber-reinforced moldings 121.
The heat insulating material 16 is installed on an outer circumference of the duct body 11.
The external cover 17 is installed on an outer circumference of the heat insulating material 16.
The fiber-reinforced moldings 121 are installed on four respective external cover corners 17b of the external cover 17 via adhesive layers 13 one by one.
Reinforcement construction for the duct equipment 1111 according to the present embodiment can be performed in a procedure similar to that of the aforementioned ninth embodiment. Accordingly, a detailed description thereof is omitted.

According to the present embodiment, the fiber-reinforced moldings 121 of the duct equipment 1111 each include rib parts 121a and 121b that protrude to extend toward the outside of the duct body 11 and are simultaneously formed so as to extend in the direction of a ventilation passage R1. Accordingly, it is possible to increases the strength of the duct equipment 1111 over the aforementioned ninth embodiment.

### (Twelfth Embodiment)

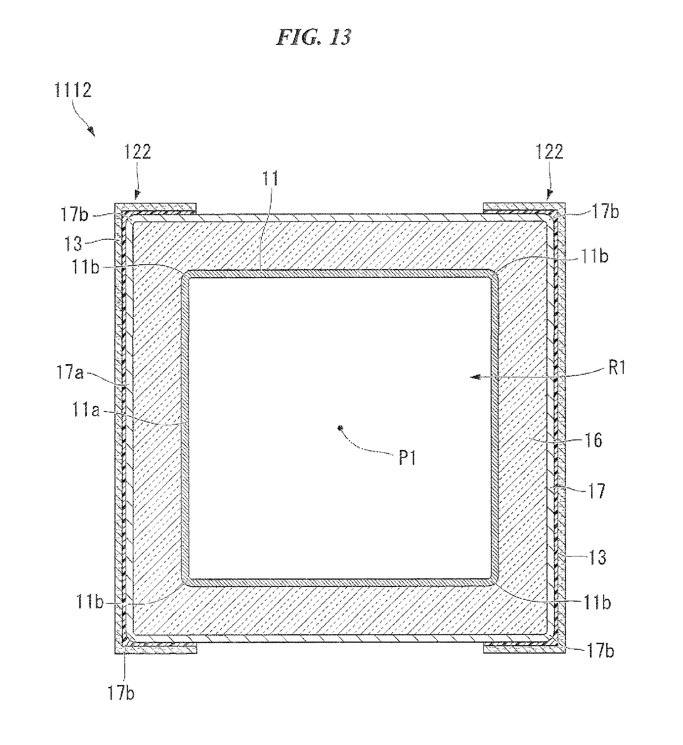

FIG. 13 is a cross-sectional view taken across the central axis P1 of duct equipment 1112 according to a twelfth embodiment of the present invention. Components corresponding to components shown in FIGS. 1 to 12 are denoted by the same symbols and a description thereof is omitted.

As shown in FIG. 13, the duct equipment 1112 includes a duct body 11, a heat insulating material 16 installed on an outer circumference of the duct body 11, a external cover 17 installed on an outer circumference of the heat insulating material 16, and two fiber-reinforced moldings 122 installed on the external cover 17 via adhesive layers 13.
Reinforcement construction for the duct equipment 1112 according to the present embodiment is similar to that of the aforementioned ninth embodiment. That is, the adhesive layers 13 are formed at portions having a substantially U-shape when viewed in a cross-section of opposite lateral portions of the external cover 17. Further, the fiber-reinforced moldings 122 are bonded to the portions where the adhesive layers are formed. In this manner, since reinforcement construction for the duct equipment 1112 is performed in a procedure similar to that of the aforementioned ninth embodiment, further detailed description thereof is omitted.

As shown in FIG. 13, the fiber-reinforced moldings 122 are each formed across two external cover corners 17b, which are adjacent to each other in a direction of gravitational force (a vertical direction), among four external cover corners 17b of the external cover 17. Further, the two fiber-reinforced moldings 122 are installed apart from each other in a widthwise direction (a horizontal direction).

According to the present embodiment, the fiber-reinforced moldings 122 of the duct equipment 1112 are formed in a substantially U-shape when viewed in a cross-section and are installed across the two external cover corners 17b. As such, it is possible for the duct equipment 1112 to increase thicknesses of portions corresponding to the two external cover corners 17b using one fiber-reinforced molding 122. Further, it is possible for the duct equipment 1112 to increase the thicknesses of the portions corresponding to the two external cover corners 17b only by laterally covering the fiber-reinforced molding 122 on one side of a external cover wall 17a, and to improve workability, so that it is possible to reduce the time and labor required for reinforcement construction.

Further, the fiber-reinforced moldings 122 of the duct equipment 1112 are each formed across the two external cover corners 17b, which are adjacent to each other in a direction of gravitational force. That is, in the duct equipment 1112, no fiber-reinforced moldings 122 are installed on the external cover wall 17a formed so as to extend in a horizontal direction. Accordingly, it is possible for the duct equipment 1112 to suppress an increase in weight and to efficiently increase bending strength against dead weight or load in a direction of gravitational force.

### (Thirteenth Embodiment)

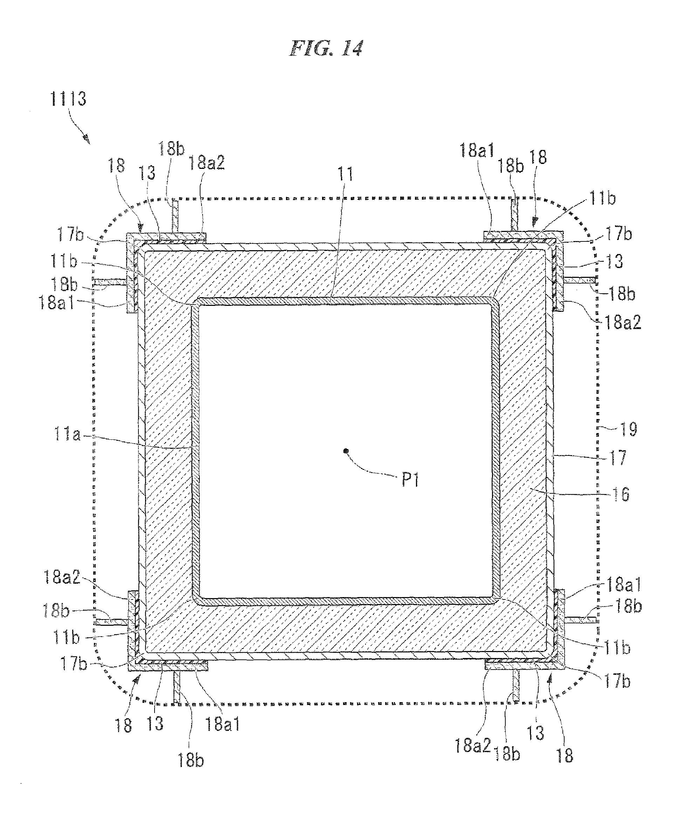

FIG. 14 is a cross-sectional view taken across the central axis P1 of duct equipment 1113 according to a thirteenth embodiment of the present invention. Components corresponding to components shown in FIGS. 1 to 13 are denoted by the same symbols and a description thereof is omitted.

As shown in FIG. 14, the duct equipment 1113 includes a duct body 11, a heat insulating material 16, a external cover 17, four steel reinforcements 18, and a wire 19.
The heat insulting material 16 is installed on an outer circumference of the duct body 11.
The external cover 17 is installed on an outer circumference of the heat insulating material 16.
The steel reinforcements 18 are installed on four external cover corners 17b of the external cover 17 via adhesive layers 13.
The wire 19 connects the four steel reinforcements 18.

The wire 19 connects all (eight) steel rib parts 18b outside the external cover 17. Further, the wire 19 is suspended on the tip of each steel rib part 18b, and is tensioned. Thereby, the wire 19 presses each steel reinforcement 18 against the external cover 17.

Reinforcement construction for the duct equipment 1113 according to the present embodiment is performed as follows. First, the heat insulating material 16 and the external cover 17 are installed on the duct body 11. Thereafter, the steel reinforcements 18 are disposed on adhered portions of the four external cover corners 17b of the external cover 17 via the adhesive layers 13. Meanwhile, the adhered portions of the external cover corners 17b and the steel reinforcements 18 are subjected to rasping in advance. After the steel reinforcements 18 are installed in this way, all the steel ribs 8b of these steel reinforcements 18 are connected by the wire 19. The duct equipment 1113 is obtained in this way. Meanwhile, the tensile force is applied to the wire 19, so that each steel reinforcement 18 is pressed against the external cover 17.

According to the present embodiment, the duct equipment 1113 includes steel plate bodies 18a, the steel reinforcements 18, and the wire 19. Here, the steel plate bodies 18a are installed on the external cover corners 17b via the adhesive layers 13 respectively, and are simultaneously formed in a substantially L-shape. Further, each of the four steel reinforcements 18 includes the steel rib parts 18b that protrude from both regions 18a1 and 18a2 of each steel plate body 18a. Further, the wire 19 connects the steel rib parts 18b of the four steel reinforcements 18.
Accordingly, in the duct equipment 1113, the portions corresponding to the external cover corners 17b of the external cover 17 which are locally weak in strength are increased in thickness. Thereby, it is possible for the duct equipment 1113 to increase the strength of the entire duct equipment 1113 using a relatively simple structure.
Furthermore, since the duct equipment 1113 has the steel rib parts 18b, it is possible to relatively greatly increase the strength of the duct equipment 1113.
Since the duct equipment 1113 is also provided with the steel reinforcements 18 having relatively high rigidity, it is possible to greatly increase the strength of the duct equipment 1113.
Further, since the duct equipment 1113 includes the adhesive layers 13 and the wire 19, it is possible to securely fix the steel reinforcements 18.
Further, the duct equipment 1113 allows construction of reinforcement without machining using electricity. As such, the duct equipment 1113 can meet construction requirements of nonuse of electricity and of the prohibition of welding and thermal cutting work. Accordingly, with the duct equipment 1113, construction of reinforcement does not affect the control of a plant.
Further, the duct equipment 1113 structurally allows reinforcement construction to be performed from the outside. Accordingly, the duct equipment 1113 makes it is possible to easily construct reinforcement without affecting the use of the plant control room.

### (Fourteenth Embodiment)

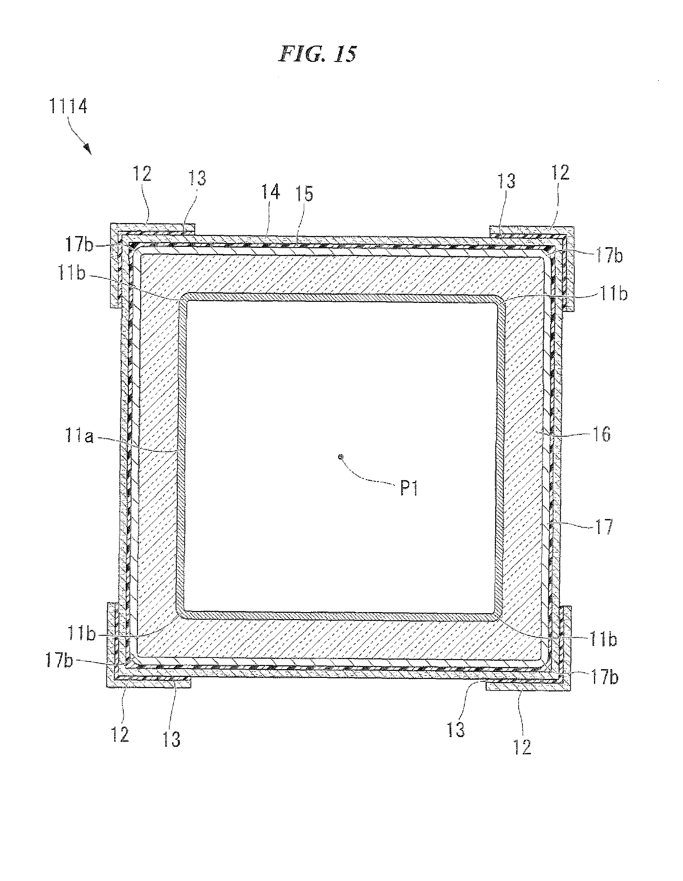

FIG. 15 is a cross-sectional view taken across the central axis P1 of duct equipment 1114 according to a fourteenth embodiment of the present invention. Components corresponding to components shown in FIGS. 1 to 14 are denoted by the same symbols and a description thereof is omitted.
As shown in FIG. 15, the duct equipment 1114 includes a duct body 11, a heat insulating material 16, a external cover 17, a fiber-reinforced sheet 14, and four fiber-reinforced moldings 12.
The heat insulating material 16 is installed on an outer circumference of the duct body 11 .
The external cover 17 is installed on an outer circumference of the heat insulating material 16.
The fiber-reinforced sheet 14 is installed on an outer circumference of the external cover 17 via an adhesive layer 15.
The fiber-reinforced moldings 12 are installed on the fiber-reinforced sheet 14 along external cover corners 17b via adhesive layers 13.

Reinforcement construction for the duct equipment 1114 according to the present embodiment is performed as follows. First, the heat insulating material 16 is installed on the outer circumference of the duct body 11, and furthermore the external cover 17 is installed on the outer circumference of the heat insulating material 16. Subsequently, an epoxy-based adhesive formed into the adhesive layer 15 is applied throughout the external cover 17. The fiber-reinforced sheet 14 is wound and disposed on a surface of the external cover 17 to which the epoxy-based adhesive is applied. Further, an epoxy-based adhesive formed into the adhesive layers 13 is applied to portions corresponding to the external cover corners 17b of the disposed fiber-reinforced sheet 14. Then, the fiber-reinforced moldings 12 are bonded to the fiber-reinforced sheet 14 by the epoxy-based adhesive. After the fiber-reinforced moldings 12 are installed on the portions corresponding to the external cover corners 17b in this way, the fiber-reinforced moldings 12 and the fiber-reinforced sheet 14 are coated with an epoxy-based impregnating adhesive resin, and surface finishing is additionally performed using, for instance, an acrylic urethane resin. The duct equipment 1114 is obtained in this way.

According to the present embodiment, in the duct equipment 1114, the portions corresponding to the external cover corners 17b are increased in thickness by the fiber-reinforced sheet 14 and the fiber-reinforced moldings 12. As such, the thicknesses of the portions corresponding to the external cover corners 17b of the external cover which are locally weak in strength are increased in the duct equipment 1114. Accordingly, it is possible to increase the strength of the entire duct equipment 1114.

Further, the duct equipment 1114 has the fiber-reinforced sheet 14 installed on the outer circumference of the duct body 11. As such, a closed cross-section is formed by the fiber-reinforced sheet 14. Thereby, it is possible to further increase the strength of the duct equipment 1114.

Furthermore, since the fiber-reinforced sheet 14 and the fiber-reinforced moldings 12 are relatively lightweight, it is possible to suppress an increase in weight of the entire duct equipment 1114. Further, it is possible to handle the duct equipment 1114 in a relatively easy manner. Thereby, it is possible to reduce the time and labor required for reinforcement construction of the duct equipment 1114.

Further, since the fiber-reinforced sheet 14 and the fiber-reinforced moldings 12 are relatively lightweight, it is possible to obtain a sufficient fixing force when the fiber-reinforced sheet 14 and the fiber-reinforced moldings 12 are bonded to the external cover 17 from the outside using the adhesive layers 13 and 15. Thereby, it is possible to increase the strength of the entire duct equipment 1114 using a relatively simple structure.
Further, the duct equipment 1114 allows construction of reinforcement without machining using electricity. Accordingly, the duct equipment 1114 can meet construction requirements of nonuse of electricity, and of the prohibition of welding or thermal cutting work, and does not affect the control of a plant.
Further, the duct equipment 1114 structurally makes it easy to perform reinforcement construction from the outside. Accordingly, the duct equipment 1114 makes it possible to easily construct reinforcement without affecting the use of the plant control room.

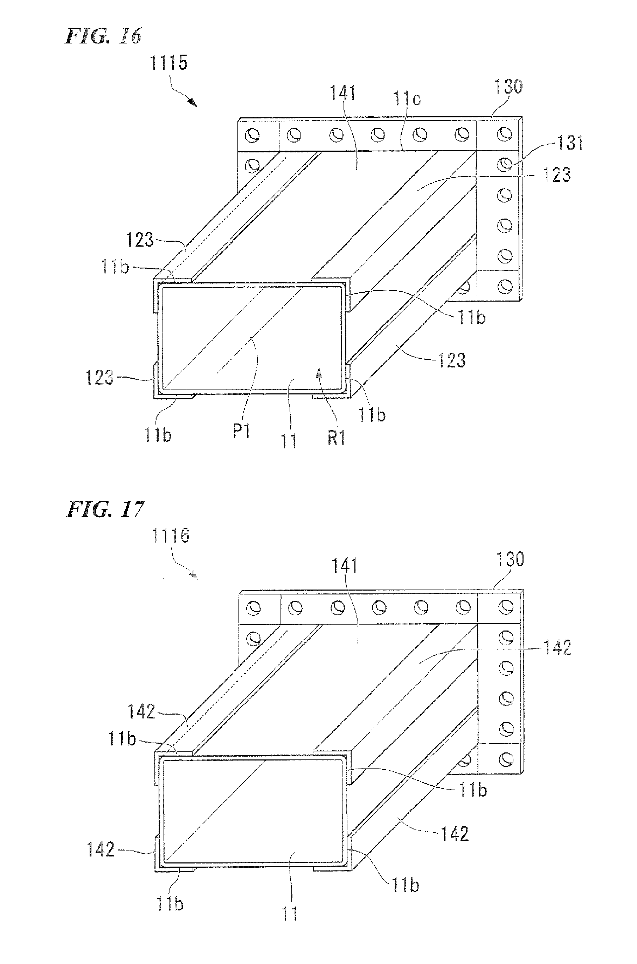

Next, the duct equipment according to fifteenth to twenty-second embodiments shown in FIGS. 16 to 21 have a structure in which a connection flange 130 is joined to one axial end of the aforementioned angular duct body 11. Components corresponding to components shown in FIGS. 1 to 15 are denoted by the same symbols and a description thereof is omitted. Further, in FIGS. 16 to 21, a heat insulating material installed on an outer circumference of the duct body 11, a external cover installed on an outer circumference of the heat insulating material, and an adhesive layer will neither be described nor shown here.
Here, the connection flange 130 shown in FIGS. 16 to 21 protrude from an edge 11c of the duct body 11 in a direction that crosses the central axis P1 of the duct body 11. The connection flange 130 is formed in a quadrilateral external shape. The connection flange 130 is provided with a plurality of bolt holes 131, 131, ... at regular intervals. The bolt holes 131 are used when the connection flange 130 is joined to a joined member, which is not shown, by bolts.

### (Fifteenth Embodiment)

FIG. 16 is a perspective view of duct equipment 1115 according to a fifteenth embodiment of the present invention.
As shown in PIG. 16, the duct equipment 1115 includes a duct body 11, a connection flange 130, a fiber-reinforced sheet 141, and four fiber-reinforced moldings 123.
The connection flange 130 is installed on a base end of the duct body 11.
The fiber-reinforced sheet 141 is installed from the duct body 11 to the connection flange 130 via an adhesive layer.
The fiber-reinforced moldings 123 are installed on the fiber-reinforced sheet 141 along duct corners 11b via adhesive layers.
The fiber-reinforced sheet 141 is disposed on an entire circumferential surface of the duct body 11. The fiber-reinforced sheet 141 extends from each face of the duct body 11 toward the connection flange 130, is bent at a connection portion between the duct body 11 and the connection flange 130, and is disposed along the connection flange 130.
The fiber-reinforced moldings 123 are formed in an L-shape when viewed in a cross-section, and are installed on portions of the fiber-reinforced sheet 141, which correspond to four duct corners 11b of the duct body 11, one by one. The fiber-reinforced moldings 123 are formed so as to extend in the direction of a ventilation passage R1 and have substantially the same length as the duct body 11 in a longitudinal direction.

Reinforcement construction for the duct equipment 1115 according to the present embodiment is performed as follows. First, before the adhesive layer for the fiber-reinforced sheet 141 is applied, priming coat is performed on the duct body 11 using an epoxy resin. Thus, the roughness of a duct surface is smoothed by a thickness of the resin. Subsequently, an epoxy-based adhesive formed into the adhesive layer is applied to the entire duct body 11 and the entire connection flange 130. Then, the fiber-reinforced sheet 141 is wound and disposed on the surfaces of the duct body 11 and the connection flange 130 to which the adhesive is applied. Further, an epoxy-based adhesive formed into the adhesive layers is applied to the portions of the disposed fiber-reinforced sheet 141 which correspond to the duct corners 11b. Then, the fiber-reinforced moldings 123 are bonded to the fiber-reinforced sheet 141. Then, the fiber-reinforced moldings 123 and the fiber-reinforced sheet 141 are coated with an epoxy-based impregnating adhesive resin. Further, surface finishing is performed on the coated fiber-reinforced moldings 123 and the coated fiber-reinforced sheet 141 using, for instance, an acrylic urethane resin. Thereby, the duct equipment 1115 is obtained.

As described above, according to the present embodiment, the duct equipment 1115 has the fiber-reinforced sheet 141 installed on the duct body 11 via the adhesive layer and the fiber-reinforced moldings 123. As such, the entirety of the duct equipment 1115 which corresponds to the entire duct body 11 is increased in thickness. In addition, the portions of the duct equipment 1115 which correspond to the duct corners 11b of the duct body 11 which are locally weak in strength are increased in thickness. The connection flange 130 is also increased in thickness by the fiber-reinforced sheet 14I. Thereby, it is possible to increase the strength of an entire duct arrangement including the connection flange 130 using a relatively simple structure.

### (Sixteenth Embodiment)

FIG. 17 is a perspective view of duct equipment 1116 according to a sixteenth embodiment of the present invention.
The duct equipment 1116 shown in FIG. 17 has configutarion that a fiber-reinforced sheets 142 is adopted in place of the fiber-reinforced molding 123 of the aforementioned fifteenth embodiment. The fiber-reinforced sheets 142 are the same members as a fiber-reinforced sheet 141. The duct equipment 1116 of the present embodiment can be constructed using a construction method similar to that of the duct equipment 1115 of the fifteenth embodiment. Further, the duct equipment 1116 of the present embodiment has the same working effect as the duct equipment 1115 of the fifteenth embodiment.

### (Seventeenth Embodiment)

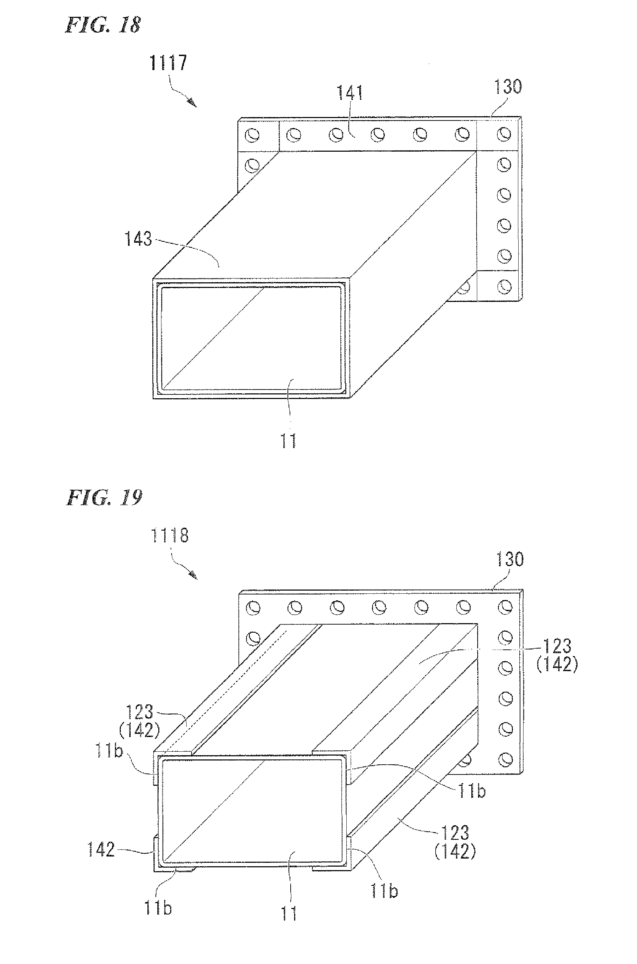

FIG. 18 is a perspective view of duct equipment 1117 according to a seventeenth embodiment of the present invention.
The duct equipment 1117 shown in FIG. 18 includes a structure in which, in place of the fiber-reinforced sheets 142 of the aforementioned seventeenth embodiment, a fiber-reinforced sheet 143 is wound around the entire circumference of a duct body 11. In the duct equipment 1117 the duct body 11 has a reinforced structure in which the fiber-reinforced sheet 143 and a fiber-reinforced sheet 141 one laminated in the layers. The fiber-reinforced sheets 141 and 143 are the same member.
In the present embodiment, the duct equipment 1117 is constructed using a method similar to that of the sixteenth embodiment. The duct equipment 1116 of the sixteenth embodiment includes the fiber-reinforced sheets 142 (see PIG. 17) installed on the duct corners 11b only, whereas the duct equipment 1117 of the present embodiment has the fiber-reinforced sheets covering the entire duct body 11 and thereby making it possible to increase its thickness. Accordingly, the duct equipment 1117 of the present embodiment is improved in strength over the duct equipment 1116 of the sixteenth embodiment.

### (Eighteenth Embodiment)

FIG. 19 is a perspective view of duct equipment 1118 according to an eighteenth embodiment of the present invention.
The duct equipment 1118 shown in FIG. 19 is configured to provide fiber-reinforced moldings 123, which are formed only at four duct corners 11b of a duct body 11 in an L-shape when viewed in a cross-section, or fiber-reinforced sheets 142 having a sheet shape. That is, the duct equipment 1118 has a structure in which the fiber-reinforced sheet 141 of the aforementioned fifteenth and sixteenth embodiments is omitted and the connection flange 130 is not reinforced.
Reinforcement construction for the duct equipment 1118 according to the present embodiment is performed as follows. First, primer treatment is performed on a circumferential surface of the duct body 11 using an epoxy resin. Thus, the roughness of the duct surface is smoothed by a thickness of the epoxy resin. Subsequently, an epoxy-based adhesive formed into the adhesive layers is applied to the duct corners 11b of the duct body 11. Then, the fiber-reinforced moldings 123 or the fiber-reinforced sheets 142 are bonded to the duct corners 11bf the duct body 11. Then, the fiber-reinforced moldings 123 or the fiber-reinforced sheets 142 are coated with an epoxy-based impregnating adhesive resin. Further, surface finishing is performed on the coated fiber-reinforced moldings 123 or the coated fiber-reinforced sheets 142 using, for instance, an acrylic urethane resin. Thereby, the duct equipment 1118 is obtained.
According to the present embodiment, the duct equipment 1118 includes the fiber-reinforced moldings 123 or the fiber-reinforced sheets 142 that are installed on the duct body 11 via the adhesive layers. As such, portions of the duct equipment 1118, which correspond to the duct corners 11b of the duct body 11 which are locally weak in strength, are increased in thickness. Accordingly, the duct equipment 1118 makes it possible to increase the strength of an entire duct arrangement using a relatively simple structure.

### (Nineteenth Embodiment)

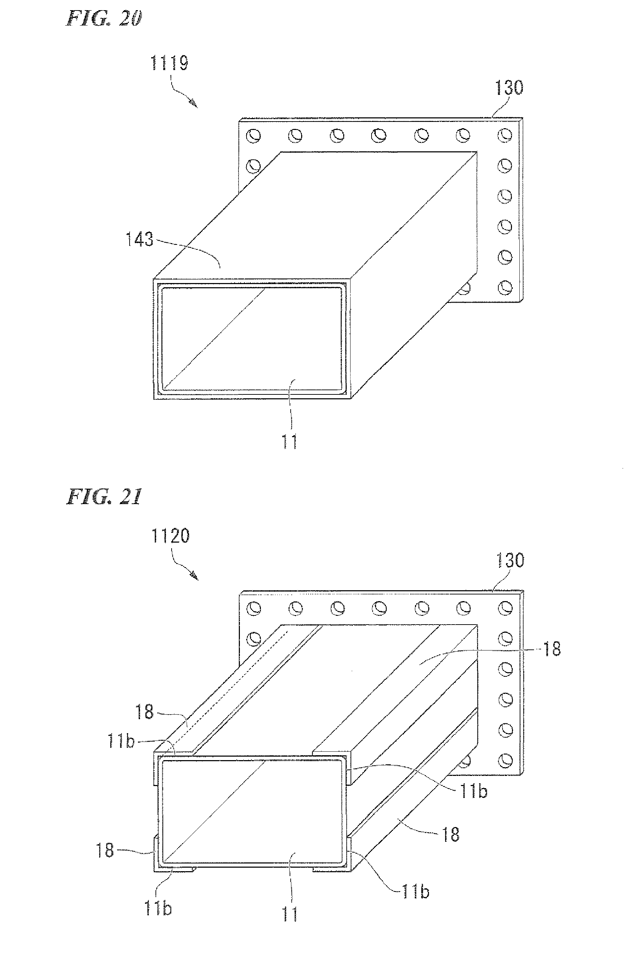

FIG. 20 is a perspective view of duct equipment 1119 according to a nineteenth embodiment of the present invention.
The duct equipment 1119 shown in FIG. 20 is configured to install a fiber-reinforced sheet 143 on an outer circumference of a duct body 11 via an adhesive layer. That is, the duct equipment 1119 includes a structure in which the fiber-reinforced sheet 141 of the aforementioned seventeenth embodiment is omitted and the connection flange 130 is not reinforced.
Reinforcement construction for the duct equipment 1119 according to the present embodiment is performed as follows. First, priming coat is performed on the duct body 11 using an epoxy resin, and the roughness of the duct surface is smoothed by a thickness of the resin. Subsequently, an epoxy-based adhesive formed into the adhesive layer is applied to an entire circumferential surface of the duct body 11, and the fiber-reinforced sheet 143 is bonded to the duct body 11. Then, the fiber-reinforced sheet 143 is coated with an epoxy-based impregnating adhesive resin, and is additionally subjected to surface finishing using, for instance, an acrylic urethane resin. Thereby, the duct equipment 1119 is obtained.
According to the present embodiment, the duct equipment 1119 includes the fiber-reinforced sheet 143 installed on the duct body 11 via the adhesive layer. Accordingly, the duct equipment 1119 corresponding to the entire duct body 11 is increased in thickness, and it is possible for the duct equipment 1119 to increase the strength of an entire duct arrangement using a relatively simple structure.

### (Twentieth Embodiment)

FIG. 21 is a perspective view of duct equipment 1120 according to a twentieth embodiment of the present invention.
The duct equipment 1120 shown in FIG. 21 is configured to adopt steel reinforcements (metal reinforcements) 18 in place of the fiber-reinforced moldings 123 or the fiber-reinforced sheets 142 of the aforementioned eighteenth embodiment.
Reinforcement construction for the duct equipment 1120 according to the present embodiment is performed as follows. First, before adhesive layers 13 for the steel reinforcements 18 are applied, degreasing and rasping are performed on duct corners 11b of the duct body 11. The rasping is also performed on adhered portions of the steel reinforcements 18. Subsequently, an epoxy-based adhesive formed into the adhesive layers 13 is applied to the duct corners 11b, and the steel reinforcements 18 are installed on the duct corners 11b. Thereby, the duct equipment 1120 is obtained.
According to the present embodiment, the duct equipment 1120 includes the steel reinforcements 18 installed on the duct body 11 via the adhesive layers. Accordingly, the duct equipment 1120 corresponding to the entire duct body 11 is increased in thickness, and it is possible for the duct equipment 1120 to increase the strength of an entire duct arrangement using a relatively simple structure.

Meanwhile, operating procedures and various shapes or combinations of the components shown in the aforementioned embodiments are taken by way of example, and can be modified on the basis of design requirements without departing from the scope of the present invention.
For example, the aforementioned embodiments have used a member which is obtained by molding and hardening carbon fibers as the fiber-reinforced moldings 12, 121, 122 and 123. However, the fibers used in the fiber-reinforced moldings may be other fibers, for instance, glass fibers.
Further, although each of the aforementioned embodiments has used the steel plate in the duct body 11 and the external cover 17, another material may be used.
Further, although each of the aforementioned embodiments is configured to use a fabric material in the heat insulating material 16, a filler may be used.
Further, although each of the aforementioned embodiments has the duct equipment 1101 installed as a ventilation duct, the duct equipment may be installed for other purposes (e.g. air conditioning, uptake of outdoor air, and smoke discharge).

Further, in the first to eighth embodiments and the fifteenth to twentieth embodiments mentioned above, the heat insulating material 16 and the external cover 17 are installed as part of the duct equipment, and the duct equipment is used as a duct: However, a duct arrangement without the heat insulating material 16 and the external cover 17 may be used as the duct.

Further, as a configuration for the arrangement according to the ninth to fourteenth embodiments mentioned above, the fiber-reinforced sheet 14 may be installed on the outer circumference of the external cover 17 via the adhesive layer 15, as in the seventh embodiment. That is, a structure configured of the duct body 11, the heat insulating material 16 installed on the outer circumference of the duct body, and the external cover 17 installed on the outer circumference of the heat insulating material 16 is adopted. In this case, the fiber-reinforced sheet 14 may be installed on the outer circumference of the external cover 17 via the adhesive layer 15. This configuration can also be applied to the case where the duct body is a circular duct as in the seventh embodiment, i.e., the duct body 11 A shown in FIG. 9.

Further, in the aforementioned second, sixth, seventh, eighth, tenth, and fifteenth embodiments, the number of turns (layers) of the fiber-reinforced sheet 14 may be a single layer or multiple layers.

Further, in the third and thirteenth embodiments, the rib parts 121a and 121b are installed on the side ends 121A and 121B. However, the rib part may be installed on only one of the side ends.
Further, the positions of the rib parts are not limited to the side ends 121A and 121B. Thus, as long as the positions are between the side ends 121A and 121B any positions, the rib parts may be installed at any position.
Further, the number of rib parts may be set to one or three or more.

Further, in the aforementioned fifth and thirteenth embodiments, the steel rib parts 18b are fixed by the adhesive layers 13 and the wire 19. However, when a sufficient fixing force can be obtained only by the adhesive layers 13, the wire 19 may not be used.

Hereinafter, a support reinforcement structure of a long object according to a second aspect of the present invention will be described with reference to the figures.

### (Twenty-First Embodiment)

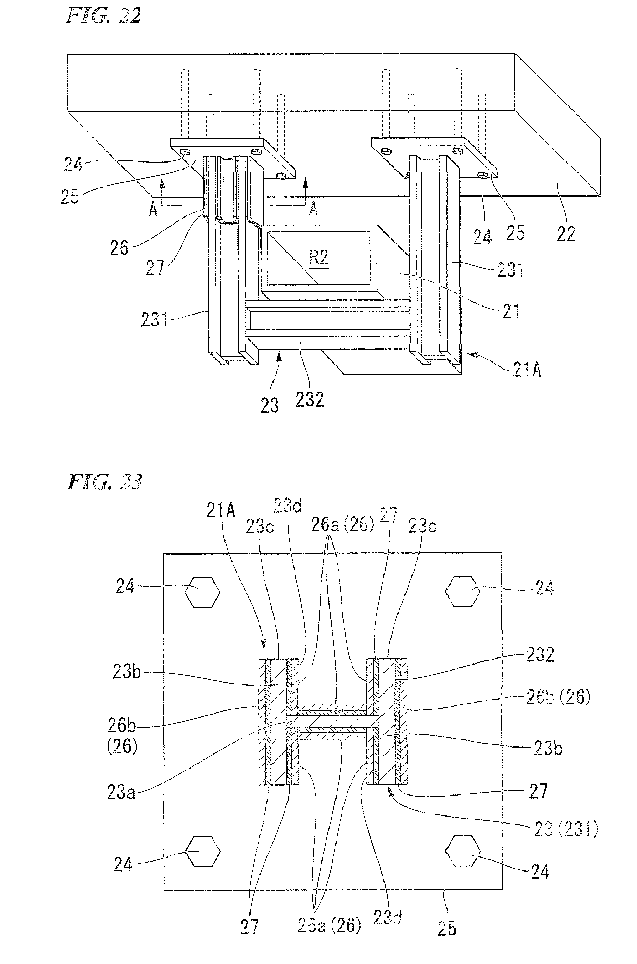

The support reinforcement structure 21A shown in FIG. 22 is to reinforce an outer circumference of a support 23 supporting a duct (a long object) 21 by installing a fiber-reinforced plate (a fiber stiffener) 26. Here, the duct 21 is installed for ventilation of control rooms of plant facilities. The duct 21 is installed so as to extend along a ceiling (a supporting target or a structure) 22, supported by the support 23.

The duct 21 is an angular duct including a rectangular cross-section, and includes a duct wall formed of a relatively thin steel plate. A closed cross-section including a series of four corners is formed by this duct wall. A space surrounded by this duct wall becomes a ventilation passage R2.

As shown in FIGS. 22 and 23, the support 23 is formed of an H-shaped steel member and is fixed to the ceiling 22 via fixing plates (fixing units) 25. In detail, the support 23 is configured of a pair of vertical members 231 and 231 disposed on both left and right sides of the duct 21, and a horizontal member 232 connected between lower ends of these vertical members 231 and 231. That is, the duct 21 is supported from below by the horizontal member 232.
A fiber-reinforced plate 26 is integrally adhered to surfaces of web 23a and flanges 23b of the support 23 by an adhesive layer 27 formed of, for instance, an epoxy-based penetrating adhesive resin.

Here, the fixing plates 25, which fix upper ends of the vertical members 231 of the support 23, are steel plates having a quadrilateral shape when viewed from the top, and are fixed to the ceiling 22 at the positions of four corners by anchor bolts 24, 24, ....

The fiber-reinforced plate 26 (26a and 26b) is a plate-shaped molding molded by arranging carbon fibers in one direction or in multiple directions to impregnate a resin material. The fiber-reinforced plate 26 is relatively lightweight and has high strength as well as high rigidity. As for the resin material impregnated into the carbon fibers, an epoxy resin or the like can be used by way of example.
The fiber-reinforced plate 26 bonded to the support 23 includes plate-shaped fiber-reinforced plates 26a and plate-shaped fiber-reinforced plates 26b. The fiber-reinforced plates 26a are provided on three faces of a concavity 23d surrounded by the web 23a and flanges 23b of the vertical and horizontal members 231 and 232 of the support 23, respectively. The fiber-reinforced plates 26b are provided on outer faces of the flanges 23b. Each of the fiber-reinforced plates 26a and 26b extends by a length approximately equal to a length dimension in longitudinal directions (axial directions) of the vertical and horizontal members 231 and 232. Meanwhile, the fiber-reinforced plate 26 is not installed on thickness parts 23c of the support 23 formed of an H-shaped steel member.

The adhesive layer 27 is formed between the support 23 and the fiber-reinforced plate 26. The adhesive layer 27 is formed by drying and hardening an epoxy-based adhesive.

The support reinforcement structure 21A improves strength by adding the fiber-reinforced plate 26 to the support 23 supporting the duct 21 in the future.
The construction of the support reinforcement structure 21A can be performed while continuously ventilating the inside of the duct 21. In detail, the construction of the support reinforcement structure 21 A is performed on the support 23 with the duct 21 supported as follows.

First, surface treatment is performed on the support 23. That is, the surface treatment is performed on each face of the support 23, particularly pasting portions for pasting the fiber-reinforced plates 26a and 26b. The surface treatment refers to surface preparation such as mechanical polishing or chemical polishing that is carried out manually. Thereafter, an epoxy-based adhesive formed into the adhesive layer 27 is applied to the faces on which the surface treatment has been performed. Then, the fiber-reinforced plates 26a and 26b, which are formed to the sizes of the pasting portions of the support 23 in advance, are pasted onto predetermined pasting portions of the support 23 to which the adhesive has been applied. Thereby, construction is completed and the support reinforcement structure 21 A is obtained. In detail, before the adhesive formed into the adhesive layer 27 is applied to the support 23, priming coat is performed using an epoxy resin. Thus, the roughness of the surfaces of the support 23 is smoothed by the thickness of the applied epoxy resin.
Further, the fiber-reinforced plates 26a and 26b bonded to the support 23 are coated with an epoxy-based containing adhesive resin. Surface finishing is additionally performed using a surface finishing agent such as an acrylic urethane resin. Thereby, an impermeable layer is formed on surfaces of the fiber-reinforced plates 26a and 26b. This impermeable layer is effective as a salt damage countermeasure.

In this manner, in the support reinforcement structure 21A, the fiber-reinforced plates 26a and 26b are pasted and bonded to the outer circumference of the support 23 formed of an H-shaped steel member by the adhesive layer. That is, the support reinforcement structure 21A increases the thickness of the support 23, performing reinforcement that increases rigidity by means of a reinforcement structure in which welding is not required.
Further, even when working in a narrow site or where welding is difficult due to insufficient clearance for welding equipment, and so on, it is possible to reinforce the support 23 in an easy and reliable manner without welding. Accordingly, it is possible to reduce the time and labor required for reinforcement construction for the support 23.
Furthermore, the member formed of a relatively lightweight plate-shaped molding is adopted as the fiber-reinforced plate 26, so that it is possible to suppress an increase in the weight of the entire support 23. Accordingly, it is possible to easily handle the support 23 during reinforcement construction.

In the support reinforcement structure of the long object according to the aforementioned twenty-first embodiment, it is possible to increase the rigidity of the support 23 by means of a simple and lightweight structure. In addition, it is possible to simplify reinforcement construction for the existing support 23.

Next, the support reinforcement structure of the long object according to other embodiments of the present invention will be described with reference to the attached drawings, Components corresponding to components of the aforementioned twenty-first embodiment are denoted by the same symbols and description thereof is omitted. Only configurations that differ from the twenty-first embodiment will be described.

### (Twenty-Second Embodiment)

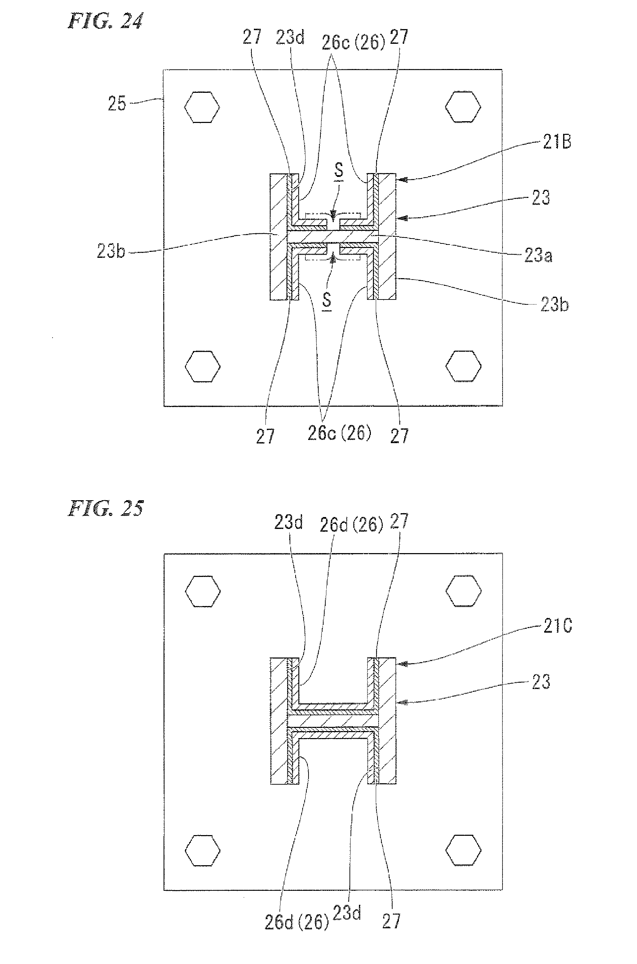

As shown in FIG. 24, the support reinforcement structure 21B includes a fiber-reinforced plate 26, like the aforementioned twenty-first embodiment. The support reinforcement structure 21B includes the fiber-reinforced plate 26 (26c) including an L-shape when viewed in a cross-section at each of two inner corners of a a concavity 23d of the support 23. The fiber-reinforced plates 26c are disposed at the inner corners of the concavity 23d of the support 23 via adhesive layers 27. Here, materials of the fiber-reinforced plates 26c and the adhesive layers 27, and a structure of the support 23 are similar to those of the twenty-first embodiment, and so a detailed description thereof will be omitted.
Meanwhile, reinforcement construction according to the present embodiment can be performed in a procedure similar to that of the aforementioned twenty-first embodiment, and so a detailed description thereof will be omitted herein.

According to the present embodiment, it is possible to obtain an effect similar to that of the aforementioned first embodiment. In addition, since the L-shaped fiber-reinforced plates 26c having a predetermined dimension fitted to the concavity 23d in advance are formed, construction in the field becomes easy. Accordingly, it is possible to further improve the efficiency of reinforcement construction for the support reinforcement structure 21 B.
A gap s formed between the fiber-reinforced plates 26c in the concavity 23d can also be closed by a separate sheet-like fiber stiffener (two-dot chain line in PIG. 24).

### (Twenty-Third Embodiment)

As shown in FIG. 25, the support reinforcement structure 21C includes a fiber-reinforced plate 26 (26d) having a U-shape (a channel shape) when viewed in a cross-section in place of the L-shaped fiber-reinforced plates (26c) of the aforementioned second embodiment. The fiber-reinforced plate 26d is disposed in a concavity 23d of the support 23 via an adhesive layer 27.
Meanwhile, reinforcement construction according to the present embodiment can be performed in a procedure similar to that of the aforementioned embodiment, and so a detailed description thereof will be omitted herein.

According to the present embodiment, it is possible to obtain an effect similar to that of the aforementioned twenty-second embodiment. In addition, since the fiber-reinforced plate 26d is formed to have the U-shape (channel shape) fitted to the concavity 23d in advance, construction in the field becomes easy. Accordingly, it is possible to further improve the efficiency of reinforcement construction for the support reinforcement structure 21C.

### (Twenty-Fourth Embodiment)

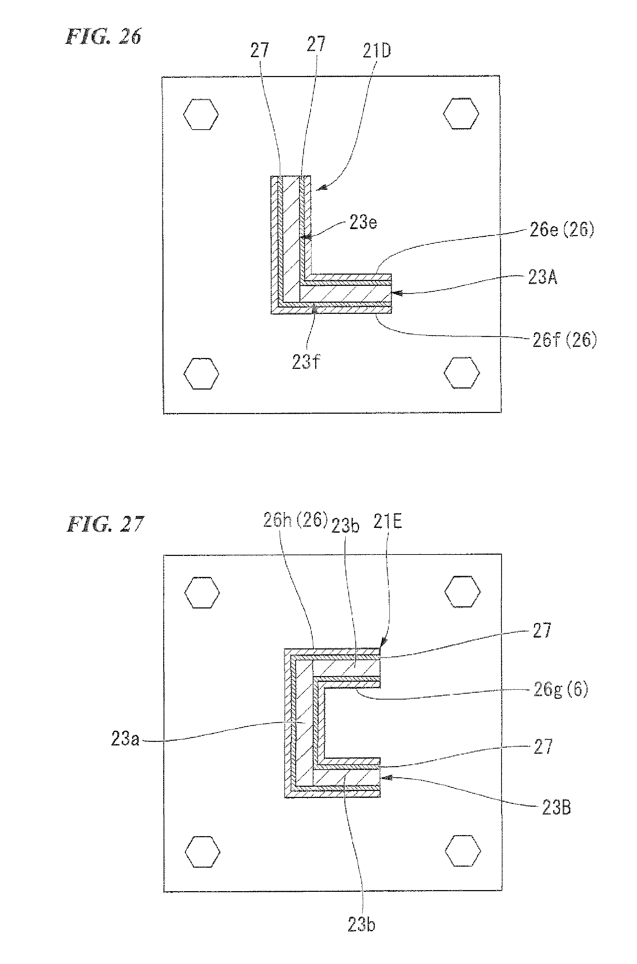

The support reinforcement structure 21 D shown in FIG. 26 is to reinforce a support 23A using an L-shaped steel member by installing a fiber-reinforced plate 26 on the support 23A. The support 23A is configure similarly to the support 23 in which the aforementioned pair of vertical members 231 and 231 and the aforementioned horizontal member 232 shown in FIG. 22 are framed, and has the shape of a portal similar to that of the support 23.
In detail, the support reinforcement structure 21D includes an L-shaped fiber-reinforced plate 26e fitted to a shape of an L-shaped face 23e on an inner angle side of the support 23A, and an L-shaped fiber-reinforced plate 26f fitted to an L-shaped face 23f on an outer angle side of the support 23A. The fiber-reinforced plate 26e is disposed on the L-shaped face 23e on the inner angle side via an adhesive layer 27. The fiber-reinforced plate 26f is disposed on the L-shaped face 23f on the outer angle side via another adhesive layer 27. Meanwhile, reinforcement construction according to the present embodiment can be performed in a procedure similar to that of the aforementioned embodiment.

According to the support reinforcement structure 21D of the present embodiment, like the aforementioned support 23 formed of an H-shaped steel member (see FIGS. 22 to 25), the support 23A is reinforced. That is, the support 23A formed of an L-shaped steel member is reinforced in such a manner that its thickness is increased by the fiber-reinforced plates 26e and 26f. Further, the fiber-reinforced plates 26e and 26f are formed in advance in an L-shape in accordance with the shape of the support 23A, so that construction in the field is made easy.
In the support reinforcement structure 21D, a flat plate-shaped fiber-reinforced plate may be installed in accordance with each of the L-shaped faces 23e and 23f on the inner and outer angle sides of the support 23A.

### (Twenty-Fifth Embodiment)

The support reinforcement structure 21E shown in FIG. 27 is to reinforce a support 23B using a channel-shaped steel member by installing a fiber-reinforced plate 26 on the support 23B. The support 23B is configured similarly to the support 23 in which the aforementioned pair of vertical members 231 and 231 and the aforementioned horizontal member 232 shown in FIG. 22 are framed, and has the shape of a portal similar to that of the support 23.
In detail, the support reinforcement structure 21E includes a fiber-reinforced plate 26g and another fiber-reinforced plate 26h. The fiber-reinforced plate 26g is disposed in a concavity surrounded by a web 23a and flanges 23b of the support 23B via an adhesive layer 27. The fiber-reinforced plate 26g is formed in a concave shape (a U-shape or a channel shape) fitted to the shape of the concavity of the support 23B. The fiber-reinforced plate 26h is disposed on an outer circumference on the opposite side of the concavity of the support 23B via another adhesive layer 27, and is formed in a concave shape (a U-shape or a channel shape). Meanwhile, reinforcement construction according to the present embodiment can be performed in a procedure similar to that of the aforementioned embodiment.

According to the support reinforcement structure 21 E of the present embodiment, like the aforementioned support 23 or 23A formed of an H-shaped steel member or an L-shaped steel member (see FIGS. 22 to 26), the support 23B is reinforced. That is, the support 23B formed of a channel-shaped steel member is reinforced in such a manner that its thickness is increased by the fiber-reinforced plates 26g and 26h. Further, the fiber-reinforced plates 26g and 26h are formed in advance in a concave shape in accordance with the shape of the support 23B, so that construction in the field is made easy.
In the support reinforcement structure 21E, a flat plate-shaped fiber-reinforced plate may be installed in accordance with each face of the support 23B.

### (Twenty-Sixth Embodiment)

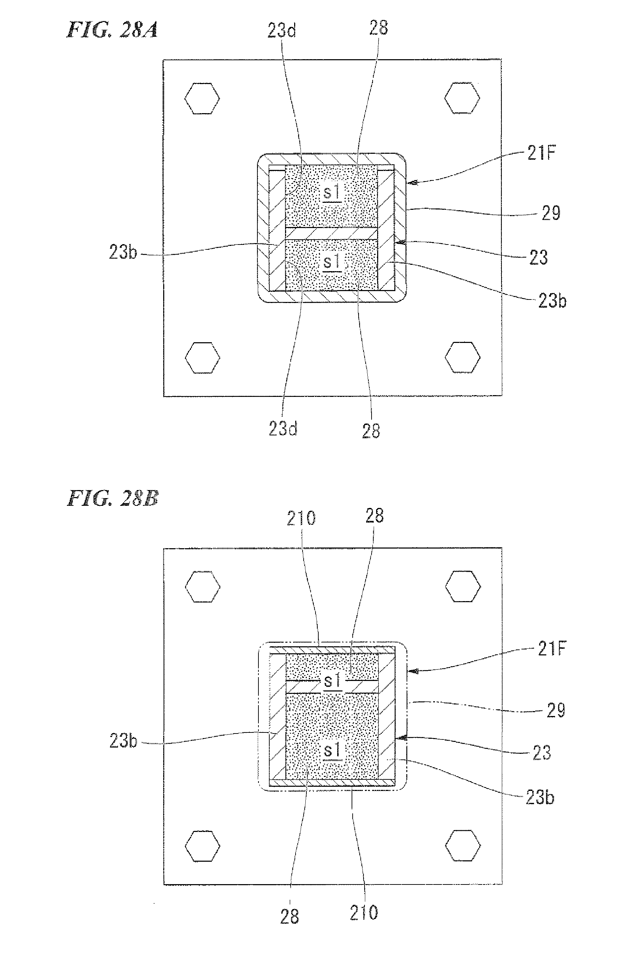

As shown in FIG. 28A, the support reinforcement structure 21F is configured to reinforce a support 23 formed of an H-shaped steel member similar to that of the aforementioned twenty-first embodiment by installing a fiber-reinforced sheet 29 on the support 23. That is, the support reinforcement structure 21F is a solid structure in which spaces sl of the concavities 23d of the support 23 are filled with a filler 28. The fiber-reinforced sheet (fiber stiffener) 29 is additionally wound and disposed on an outer circumference of the support reinforcement structure 21F that is the solid structure. Meanwhile, the fiber-reinforced sheet 29 is adhered to flanges 23b of the support 23 via adhesive layers, which are not shown.

The filler 28 is added to a position of an open end of each concavity 23d of the support 23. As the filler 28, a material (a curing stiffener), which is cured after being charged into the concavities 23d and functions as a stiffener, such as an epoxy-based adhesive resin, a fibrous material (steel fiber or carbon fiber), expandable concrete, and so on, is adopted.

The fiber-reinforced sheet 29 is molded by arranging carbon fibers in one direction or in multiple directions and impregnating the carbon fibers with a resin material. As such, the fiber-reinforced sheet 29 is relatively lightweight and simultaneously has high strength and rigidity. As the resin material impregnated into the carbon fibers, an epoxy resin or the like can be used by way of example.

Reinforcement construction of this support reinforcement structure 21F is performed as follows. As shown in FIG. 28A, first, surface treatment is performed on outer faces of the flanges 23b of the support 23. Thereafter, an epoxy-based adhesive formed into the adhesive layers (not shown) is applied to the outer faces of the support 23 which are subjected to the surface treatment. Then, the fiber-reinforced sheet 29 is wound and disposed on the outer circumference of the support 23 to which the adhesive is applied with the spaces sl in the concavities 23d secured. Subsequently, the filler 28 is charged into the spaces sl without any gaps, and is cured to a predetermined strength. Thereby, the support reinforcement structure 21F is obtained.

Further, as for another construction method as shown in FIG. 28B, form sheets 210 having a predetermined strength such as a Teflon (registered trademark) sheet are detachably disposed so as to close openings of the two concavities 23d of the support 23, respectively. Here, no gap is formed between the form sheets 210 and the flanges 23b of the support 23. Next, the filler 28 is charged into the spaces sl between the concavities 23d and the form sheets 210 without any gaps. When the filled filler 28 is cured to a predetermined strength, the form sheets 210 are removed from the support 23. Then, the fiber-reinforced sheet 29 (two-dot chain line shown in FIG. 28B) is wound and disposed on the outer circumference of the support 23 that becomes the solid structure via an adhesive layer, which is not shown. Thereby, the support reinforcement structure 21F is obtained.

According to the support reinforcement structure 21F of the present embodiment, it is possible to secure cross-sectional rigidity by forming the support 23 in the solid structure using the filler 28. In addition, since the support reinforcement structure 21F that is the solid structure is configured so that the fiber-reinforced sheet 29 is wound around the entire outer circumference thereof, it is possible to further increase the rigidity of the support 23.
Further, even when working in a narrow site or where welding is difficult due to insufficient clearance for welding equipment, and so on, it is possible to reinforce the support 23 in an easy and reliable manner without employing a welding method.

### (Twenty-Seventh Embodiment)

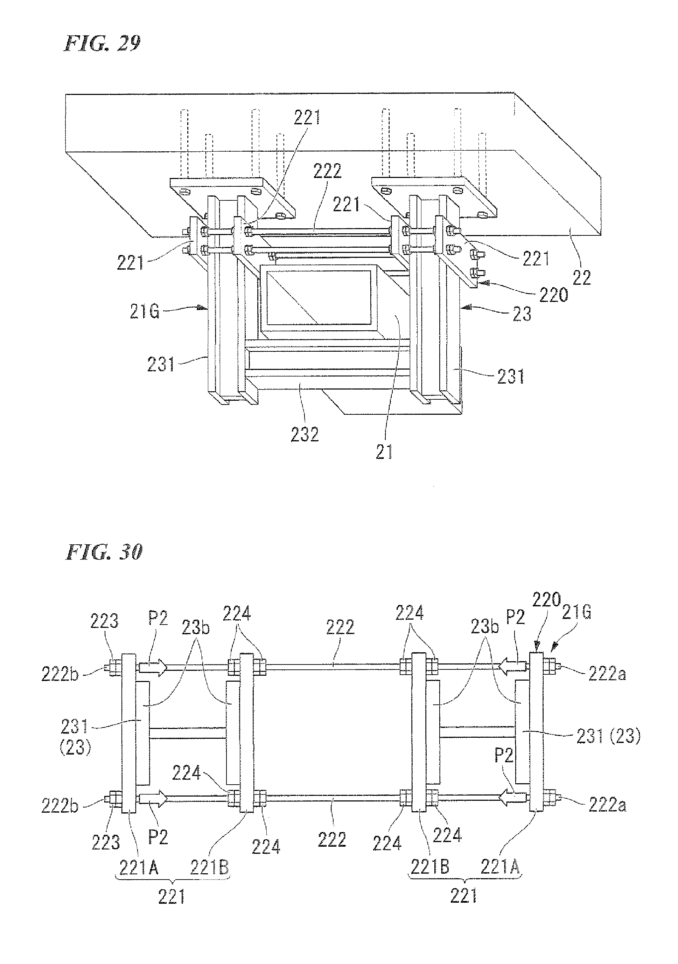

The support reinforcement structure 21G shown in FIG. 29 is configured to install a beam member 220 connecting the vertical members 231 and 231 to each other at a position above the duct 21 in a transverse direction with respect to the support reinforcement structure 21 A (see FIG. 22) of the aforementioned twenty-first embodiment. Meanwhile, the support 23 is reinforced by the fiber-reinforced plates 26a and 26b (see FIG. 22), which are not shown specifically.

As shown in FIG. 30, the beam member 220 includes two locking plates 221, each of which has a pair of locking plates 221A and 221B, and a plurality of long bolts 222 that connect the two locking plates 221. Flanges 23b of each vertical member 231 are sandwiched between the pair of locking plates 221A and 221B of each locking plate 221.
The locking plate 221 is a rectangular plate whose longitudinal direction (a width diction of the flange 23b) is orthogonal to a direction in which the vertical members 231 extends. The locking plate 221 has a length that is longer than a width dimension of the flange 23b and is provided with insertion holes for the bolts 222 in opposite longitudinal ends thereof. The bolts 222 are inserted into the insertion holes of each of the locking plates 221 A and 221B of the pair of locking plates 221 and 221 installed on the pair of vertical members 231 and 231. First nuts 223 are screwed and fastened to trailing ends 222b of the bolts 222. Thus, the bolts 222 are disposed two by two on opposite widthwise sides of each flange 23b of the vertical members 231 when viewed from the top as shown in FIG. 30.

In this beam member 220, a tensile force acts in directions of arrows P2 shown in FIG. 30 by fastening the first nuts 223 to the bolts 222. Then, the locking plates 22IA and 221A on the sides of the heads 222a and the trailing ends 222b of the bolts 222 come into contact with the flanges 23b of the support 23. Further, the two locking plates 221B and 221B located at intermediate portions of the bolts 222 are fastened on the sides of the flanges 23b by second nuts 224 and come into contact with the flanges 23b. Thereby, the beam member 220 becomes a rigid joint with respect to the pair of vertical members 231 and 231.

According to the support reinforcement structure 21G of the present embodiment, a multiple rigid-frame structure is formed by the pair of vertical members 231 and 231, the horizontal member 232, and the beam member 220. As such, it is possible to achieve higher rigidity compared to the support reinforcement structure 21A of the aforementioned twenty-first embodiment.
Further, even when working in a narrow site or where welding is difficult due to insufficient clearance for welding equipment, and so on, it is possible to reinforce the support 23 in an easy and reliable manner without the need for welding.

### (Twenty-Eighth Embodiment)

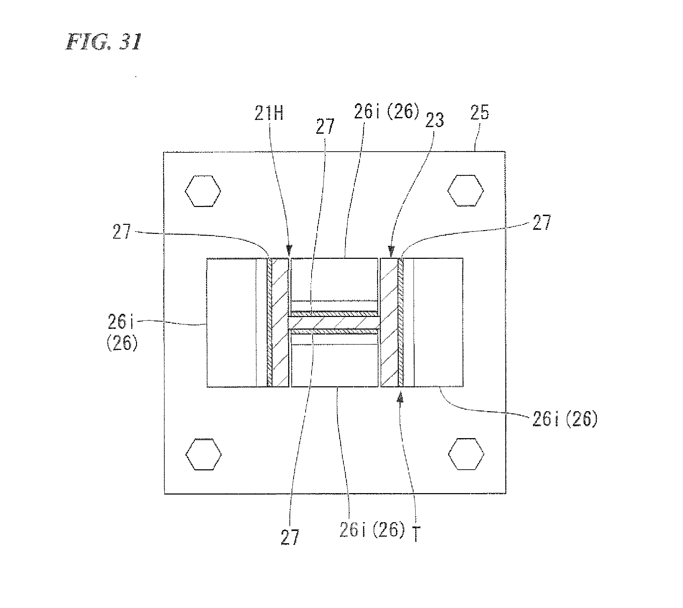

As shown in FIG. 31, the support reinforcement structure 21H is to reinforce a joint T between a fixing unit 5 and a vertical members 231 of a support 23 formed of an H-shaped steel member by installing a fiber-reinforced plate 26 via an adhesive layer 27. The support 23 is configured similarly to the support 23 in which the aforementioned pair of vertical members 231 and 231 and the aforementioned horizontal member 232 shown in FIG. 22 are framed, and has the shape of a portal similar to that of the support 23. The fixing unit 25 and the adhesive layer 27 are also similar to those of the twenty-first embodiment, and so a detailed description thereof will be omitted.

The fiber-reinforced plate 26 (26i) is installed across both of the fixing unlit 25 and the vertical members 231. In the support 23, the fiber-reinforced plate 26 is installed on the faces of the web 23a of the vertical members 231 and the outer faces of the flanges 23b of the vertical members 231.
According to the support reinforcement structure 21H according to the present embodiment, there is no need for welding, and it is possible to increase rigidity by reinforcing the joint T between the vertical members 231 and the fixing unit 25. Accordingly, even when working in a narrow site or where welding is difficult due to insufficient clearance for welding equipment, and so on, it is possible to more effectively reinforce the support 23.

While the embodiments of the support reinforcement structure of the long object according to the second aspect of the present invention are described, the present invention is not limited to the embodiments, and may be appropriately modified without departing from the spirit and scope thereof
For example, in the aforementioned embodiments, the long object supported by the support 23, 23A or 23B is intended to be the duct 21. However, the long object is not limited to the duct and may be a pipe, a cable tray, a conduit, or the like.

Further, in the present embodiment, the fiber stiffener is installed on the vertical members 231 of the support 23, 23A or 23B. However, the horizontal member 232 may be reinforced using the fiber stiffener similar to those of the aforementioned embodiments.
Further, in the aforementioned embodiments, as the shape of the support, a suspension structure made up of the pair of vertical members 231 and 231 and the horizontal member 232 connecting the lower ends of the vertical members to each other is provided, and the duct 21 is supported from below by the horizontal member. However, the present invention is not limited to the support having this shape. For example, a support configured to extend from a wall in a horizontal direction or a frame-shaped support installed on a floor will do.

Further, in the twenty-sixth embodiment above, the filler 28 is charged into the spaces sl of the concavities 23d of the H-shaped steel member support 23. However, the present invention is not limited to this configuration. For example, when the support is an angular steel pipe, its cavity may be filled with a filler as a curing stiffener.
Furthermore, the member, the length dimension, the thickness dimension (the number of sheet layers), the shape, the range installed on the support, and so on of each of the fiber-reinforced plate 26 and the fiber-reinforced sheet 29 may be appropriately modified depending on the shape, the dimension, and so on of the support.
In addition to the foregoing, the components of the aforementioned embodiments may be substituted with other known components without departing from the spirit and scope of the present invention. Further, the aforementioned embodiments may be appropriately combined.

Hereinafter, a reinforcement structure for a support fixing unit according to a third aspect of the present invention will be described with reference to the figures.

### (Twenty-Ninth Embodiment)

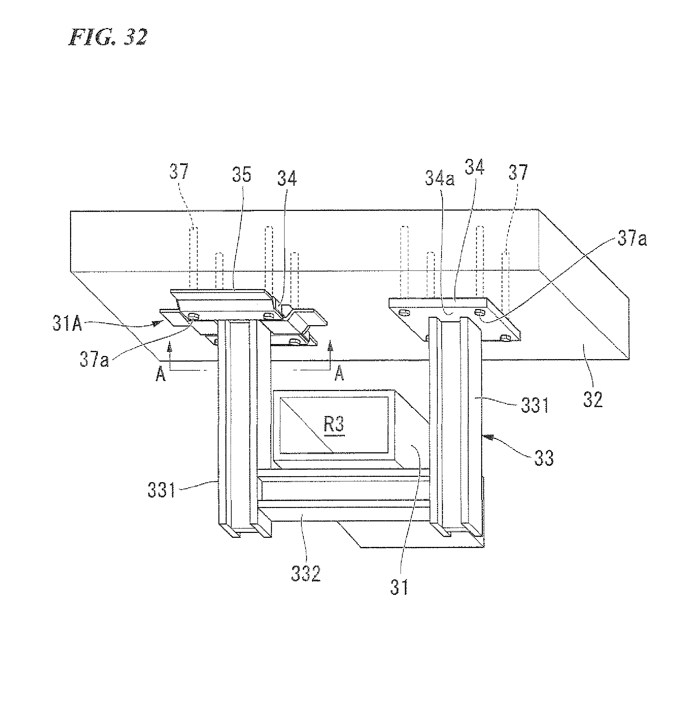

The reinforcement structure for a support fixing unit (hereinafter, referred to as a "reinforcement structure 31 A") according to the present invention includes a support 33 that supports a duct (a long object) 31, and a fixing plate (a fixing unit) 34 for fixing the support 33 to a ceiling 32 that is a neighboring structure (a supporting target). The reinforcement structure 31A reinforces the fixing plate 34 by installing a fiber-reinforced sheet (a fiber-reinforced member) 35 on the fixing plate 34. Meanwhile, to facilitate understanding a configuration of the reinforcement structure 31A, FIG. 32 shows only one fiber-reinforced sheet 35 installed on the fixing plate 34 on one side (on the left side of the sheet of paper) of the fiber-reinforced sheets 35 installed on a pair of fixing plates 34.
The duct 31 is installed for the purpose of ventilation of control rooms of plant facilities and is provided so as to extend along the coiling 32, supported by the support 33.

The duct 31 is an angular duct having a rectangular cross-section. The duct 31 includes four duct walls, each of which is formed of a steel plate having a relatively thin thickness. The duct 31 has corners formed by the duct walls. A cross-section of the duct 31 is a closed cross-section, and a space surrounded by the duct walls becomes a ventilation passage R3.

As shown in FIGS. 32 to 34, the support 33 is formed of an H-shaped steel member and is fixed to the ceiling 32 via the fixing plates (fixing units) 34. In detail, the support 33 is configured of a pair of vertical members 331 and 331 disposed on both left and right sides of the duct 31, and a horizontal member 332 connecting lower ends of these vertical members 331 and 331 to each other. That is, the duct 31 is supported from below by the horizontal member 332.

The reinforcement structure 31A includes ramp blocks 38, each of which has a triangular shape when viewed in a cross-section, on an outer circumference of the fixing plate 34 which corresponds to each side of a rectangle when viewed from the top. The reinforcement structure 31 A is configured so that the sheet-shaped fiber-reinforced sheet 35 is integrally adhered from a front face 34a of the fixing plate 34 to the ceiling 32 by adhesive layers (not shown) formed of an epoxy-based penetrating adhesive resin.

The fixing plate 34, which fixes an upper end of the vertical member 331 of the support 33 to the ceiling 32, is a steel plate having a quadrilateral shape (a square shape) when viewed from the top. The fixing plate 34 is fixed to the ceiling 32 at the positions of four corners by anchor bolts 37, 37, .... Meanwhile, a head 37a of the anchor bolt 37 protrudes to a lower face (a front face 34a) of the fixing plate 34 on the opposite side of the face facing the ceiling 32. Here, in the fixing plate 34, the face on the side of the ceiling 32, which faces the ceiling 32, is defined as a rear face 34b.

Each ramp block 38 is disposed so that two sides thereof orthogonal to each other when viewed in a cross-section are located at a corner of each step of the boundary between the fixing plate 34 and the ceiling 32. The ramp block 38 is provided with an inclined face 38a that removes a height difference, which is formed by the fixing plate 34 and the ceiling 32, in a thickness direction of the fixing plate 34.
That is, the ramp block 38 has the face facing the ceiling 32 and the inclined face 38a inclined with respect to this face. The inclined face 38a is formed so as to extend to both a face of the ceiling 32 which is opposite to the fixing plate 34 and the front face 34a of the fixing plate 34 without a height difference.

The fiber-reinforced sheet 35 includes a pair of fist fiber-reinforced sheets 35A and 35A and a pair of second fiber-reinforced sheets 35B and 35B. The first fiber-reinforced sheets 35A and 35A have substantially the same dimension as a width dimension of the fixing plate 34. The second fiber-reinforced sheets 35B and 35B have substantially the same dimension as a width dimension of a flange 3b. The first fiber-reinforced sheets 35A and 35A are respectively disposed on a pair of sides which are opposite to each other in a width direction of the flanges of the support 33, among the four sides of the fixing plate 34 having a rectangular shape when viewed from the top.
The fiber-reinforced sheet 35 (35A or 35B) is a sheet-shaped member in which carbon fibers are arranged in one direction or in multiple directions and are impregnated with a resin material, is relatively lightweight, and has high strength and rigidity. As the resin material impregnated into the carbon fibers, an epoxy resin or the like may be used by way of example.
Meanwhile, a length dimension of the fiber-reinforced sheet 35 (a length dimension in a direction orthogonal to the side of the fixing plate 34 on which the fiber-reinforced sheet 35 is disposed) is determined as follows by way of example. When one lengthwise end of the fiber-reinforced sleet 35 is disposed at a position where it abuts the support 33 (the vertical member 331) on the fixing plate 34, the other end is adapted to be located on the ceiling 32. Mean while, the position of the other end of the fiber-reinforced sheet 35 on the ceiling 32 can be set arbitrarily.

The adhesive layers are formed between the fixing plate 34 and the fiber-reinforced sheet 35, between the ramp block 38 and the fiber-reinforced sheet 35, and between the ceiling 32 and the fiber-reinforced sheet 35, respectively. The adhesive layers are formed by drying and curing an epoxy-based adhesive.

The reinforcement structure 31A can improve strength by adding the fiber-reinforced sheet 35 to the fixing plate 34 of the support 33 in the future.
The construction of the reinforcement structure 31A is performed on the fixing plate 34 of the support 33 with the duct 31 supported while continuously ventilating the inside of the duct 31 shown in FIG. 32, according to the following procedure.

First, surface treatment is performed on the fixing plate 34. That is, the surface treatment is performed on the front face 34a of the fixing plate 34, particularly pasting portions for pasting the fiber-reinforced plate 35. This surface treatment is, for instance, a mechanical polishing or chemical polishing that is carried out manually. After this surface treatment is performed, an epoxy-based adhesive formed into the adhesive layers is applied to the face on which the surface treatment has been performed. Then, the fiber-reinforced plates 35A and 35B, which are formed to the sizes of the pasting portions of the fixing plate 34 in advance, are pasted onto predetermined pasting portions of the fixing plate 34 by the adhesive. Thereby, construction is completed and the reinforcement structure 31A is obtained.
As a further detail, before the adhesive layers are applied to the fixing plate 34, priming coat is performed on the fixing plate 34 using an epoxy resin. Thus, the roughness of the front face 34a of the fixing plate 34 is treated by a thickness of the epoxy resin.

In this manner, in the present reinforcement structure 31A, the fiber-reinforced sheet 35 is pasted and bonded to the front face 34a of the fixing plate 34 and the ceiling 32 by the adhesive. With this reinforcement structure that does not require welding, it is possible to increase the thickness of the fixing plate 34 and thus to enhance rigidity. Thereby, it is possible to reinforce the fixing plate 34 of the support 33 supporting the duct 31 against bending stress.
Further, even when working in a narrow site or where welding is difficult due to insufficient clearance for welding equipment, and so on, the reinforcement structure 31A does not require the welding. Accordingly, the reinforcement structure 31 A can reinforce the fixing plate 34 in an easy and reliable manner, and reduce the time and labor required for reinforcement construction.
Furthermore, since the relatively lightweight sheet member such as the present embodiment is adopted as the fiber-reinforced plate 35, it is possible to easily handle the reinforcement structure 31A during reinforcement construction.

Further, since the fiber-reinforced sheet 35 is installed across the fixing plate 34 and the ceiling 32, the thickness of the fixing plate 34 is increased, and the fiber-reinforced sheet 35 adhered to the fixing plate 34 is adhered to the ceiling 32. Thereby, the fixing plate 34 and the ceiling 32 are more integrally installed. Accordingly, the reinforcement structure 31A can easily reinforce the fixing plate 34 to increase the rigidity of the fixing plate 34.
Further, the fiber-reinforced sheet 35 is disposed on the face of the fixing plate 34 which is opposite to the ceiling 32 and the front face 34a of the fixing plate 34 on the opposite side of the face. As such, the reinforcement structure 31A can easily adhere the fiber-reinforced sheet 35 without removing the fixing plate 34 that has already been fixed to the ceiling 32.

Further, the ramp blocks 38 adhered to the ceiling 32 are disposed on the outer circumference of the fixing plate 34. The reinforcement structure 31 A is configured so that the fiber-reinforced sheet 35 is installed across the fixing plate 34 and the ceiling 32 with the ramp blocks 38 interposed between the fiber-reinforced sheet 35 and the ceiling 32. That is, the fixing plate 34, the ramp blocks 38, and the ceiling 32 are integrally installed by the fiber-reinforced sheet 35.
Further, the height difference formed between the fixing plate 34 and the ceiling 32 is removed by the inclined face 38a of the ramp block 38. That is, the height difference is formed between the face of the ceiling 32 which is opposite to the fixing plate 34 and the front face 34a of the fixing plate 34. However, the inclined face 38a is formed so as to extend to the faces of both of the ceiling 32 and the fixing plate 34 without the height difference. Accordingly, it is possible to adhere the fiber-reinforced sheet 35 to the fixing plate 34, the ramp blocks 38, and the ceiling 32 without any gap.
With the configuration above, the reinforcement structure 31A can provide more reliable reinforcement.

As described above, the reinforcement structure 31A of the present embodiment increases the rigidity of the fixing plate 34 by means of a simple and lightweight structure. In addition, it is possible to simply perform reinforcement construction on the existing fixing plate 34.

Next, other embodiments of the reinforcement structure for a support fixing unit according to the third aspect of the present invention will be described with reference to the attached drawings. Components corresponding to components of the aforementioned twenty-ninth embodiment are denoted by the same symbols and further a description thereof is omitted. Only configurations that differ from the twenty-ninth embodiment will be described.

### (Thirtieth Embodiment)

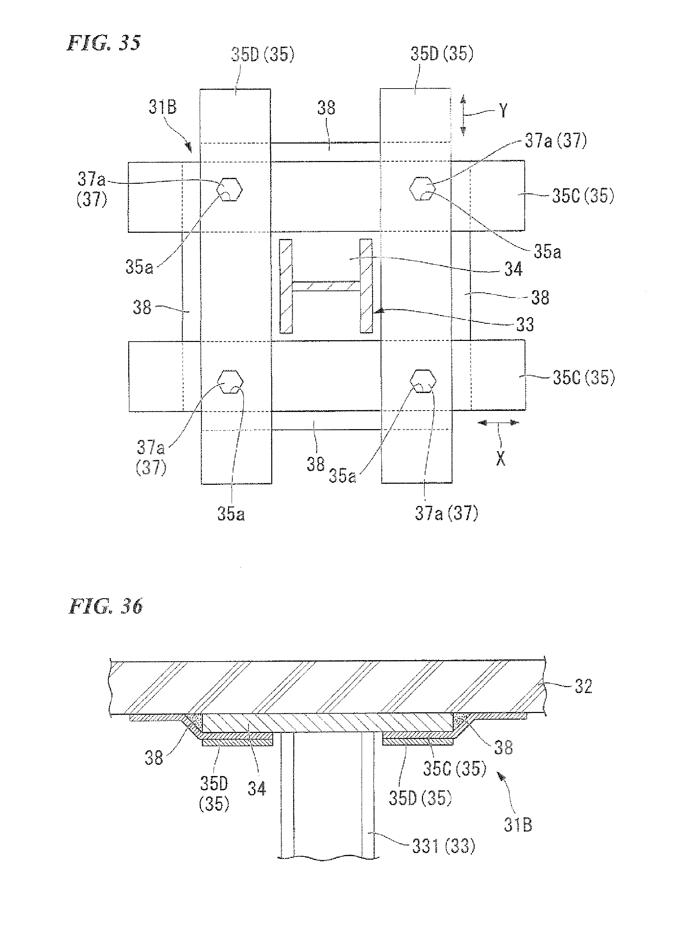

As shown in FIGS. 35 and 36, the reinforcement structure for a support fixing unit (the reinforcement structure 31B) according to a thirtieth embodiment is configured to cross and dispose strip-shaped fiber-reinforced sheets 35 (35C and 35D) in longitudinal and transverse directions.

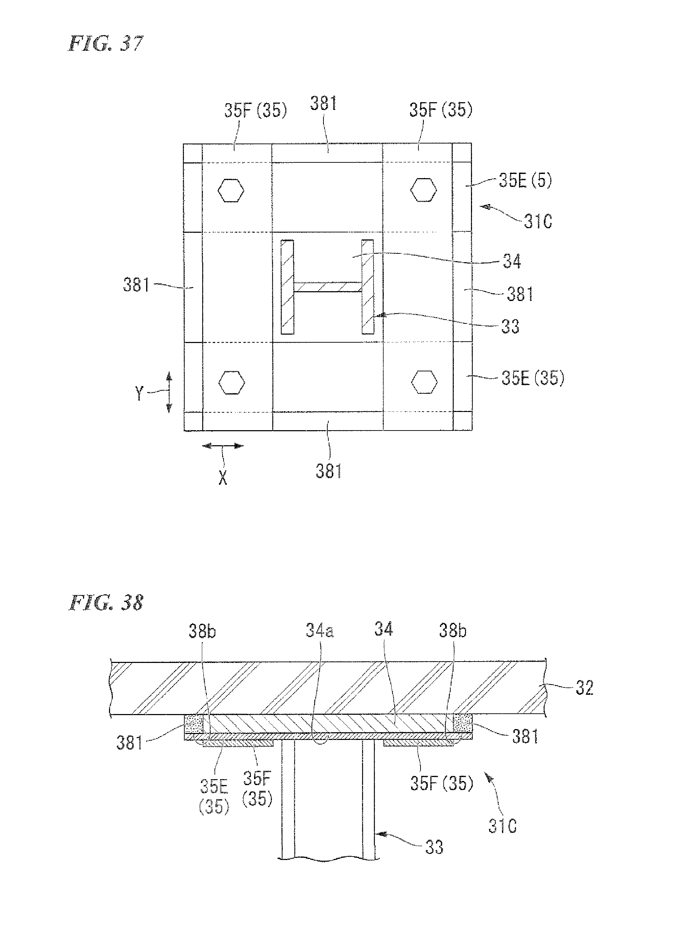

The fiber-reinforced sheets 35 include a pair of third fiber-reinforced sheets 5C and 5C and a pair of fourth fiber-reinforced sheets 35D and 35D. The third fiber-reinforced sheet 35C is disposed so that a longitudinal direction thereof runs along a first direction X shown in FIG. 37. Here, the first direction Y is a direction that is substantially parallel to the width direction of the web of the support 33. The fourth fiber-reinforced sheet 35D is disposed so that a longitudinal direction thereof runs along a second direction Y shown in F1G. 37. Here, the second direction Y is a direction that is orthogonal to the first direction X and that is substantially parallel to the width direction of the flange of the support 33. That is, the third fiber-reinforced sheets 35C and the fourth fiber-reinforced sheets 35D are orthogonal to each other and are disposed with the support 33 centered in a double cross shape when viewed from the top (FIG. 35). Further, the third fiber-reinforced sheets 35C and the fourth fiber-reinforced sheets 35D are bonded to a fixing plate 34 and a ceiling 32 by adhesive layers. Thereby, the third fiber-reinforced sheets 35C and the fourth fiber-reinforced sheets 35D are adhered from the fixing plate 34 to the ceiling 32. That is, the pair of third fiber-reinforced sheets 35C and the pair of fourth fiber-reinforced sheets 35D, both of which are fixed to the fixing plate 34, are located on both sides of the support 33 respectively, and are each fixed to the ceiling 32 at opposite ends thereof.

Further, each of the fiber-reinforced sheets 35C and 35D is provided with bolt holes 5a. The bolt holes 5a are formed at positions corresponding to anchor bolts 37 anchoring the fixing plate 34 to the ceiling 32 so as to be able to receive heads 37a of the anchor bolts 37. Thereby, it is possible to adhere the fiber-reinforced sheets 35C and 35D to the fixing plate 34 without any gap, even around the heads 37a of the anchor bolts 37.

Here, materials of the fiber-reinforced sheets 35 (35C and 35D) and the adhesive, and a structure of the support 33, are similar to those of the twenty-ninth embodiment, and so a detailed description will be omitted. Further, ramp blocks 38 are disposed on an outer circumference corresponding to each side of the fixing plate 34 having a rectangular shape when viewed from the top, and are configured similarly to those of the twenty-ninth embodiment above. As such, the detailed configuration of the ramp blocks 38 will not be described herein.
Furthermore, reinforcement construction for the reinforcement structure 31B according to the present embodiment can be performed in a procedure similar to that of the twenty-ninth embodiment above.

According to the reinforcement structure 31 B of the present embodiment, like the twenty-ninth embodiment above, it is possible to easily perform the construction on an existing fixing plate 34 for the support by means of a simple structure without using a welding method. In addition, since the fiber-reinforced sheets 35C and 35D are intersected and bonded, the reinforcement structure 31 B can increase a reinforcement effect. Further, since it is possible to use the fiber-reinforced sheets 35C and 35D having the same shape, the reinforcement structure 31B can save trouble when manufactured.

### (Thirty-Second Embodiment)

As shown in FIGS. 37 and 38, the reinforcement structure for a support fixing unit (the reinforcement structure 31C) according to a thirty-second embodiment has an altered longitudinal dimension of the fiber-reinforced sheets 35C and 35D (see FIG. 35) of the aforementioned thirtieth embodiment. In the reinforcement structure 31C, fiber-reinforced sheets 35 (35E and 35F) are disposed only within a range where a fixing plate 34 and ramp blocks 381 are disposed.
The ramp blocks 381 according to the present embodiment have a quadrilateral cross-section. A height dimension of each ramp block 381 is approximately equal to a thickness dimension of the fixing plate 34. The ramp blocks 381 are disposed along an outer circumference of the fixing plate 34. A lower face 8b of each ramp block 381 abuts on a front face 34a of the fixing plate 34 without a height difference, and is formed to be flush with a front face 34a of the fixing plate 34.

Here, a pair of fifth fiber-reinforced sheets 35E and 35E is disposed so that a longitudinal direction thereof runs along a first direction X shown in FIG. 37. A pair of sixth fiber-reinforced sheets 35F and 35F is disposed so that a longitudinal direction thereof runs along a second direction Y shown in FIG. 37. Here, the first direction X and the second direction Y are orthogonal to each other, like the thirtieth embodiment. The fifth fiber-reinforced sheets 35E and the sixth fiber-reinforced sheets 35F are disposed so as to be approximately orthogonal to each other.
That is, the pair of fifth fiber-reinforced sheets 35E and 5E and the pair of sixth fiber-reinforced sheets 35F and 35F are installed across the fixing plate 34 and the ramp blocks 381, and are bonded to the fixing plate 34 and the ramp blocks 381. However, the fifth fiber-reinforced sheets 35E and the sixth fiber-reinforced sheets 35F are not bonded to the ceiling 32.
According to the reinforcement structure 31C of the present embodiment, it is possible to obtain effects, similar to those of the thirtieth embodiment above, of enabling easy construction in the field and improving work efficiency.

### (Thirty-Third Embodiment)

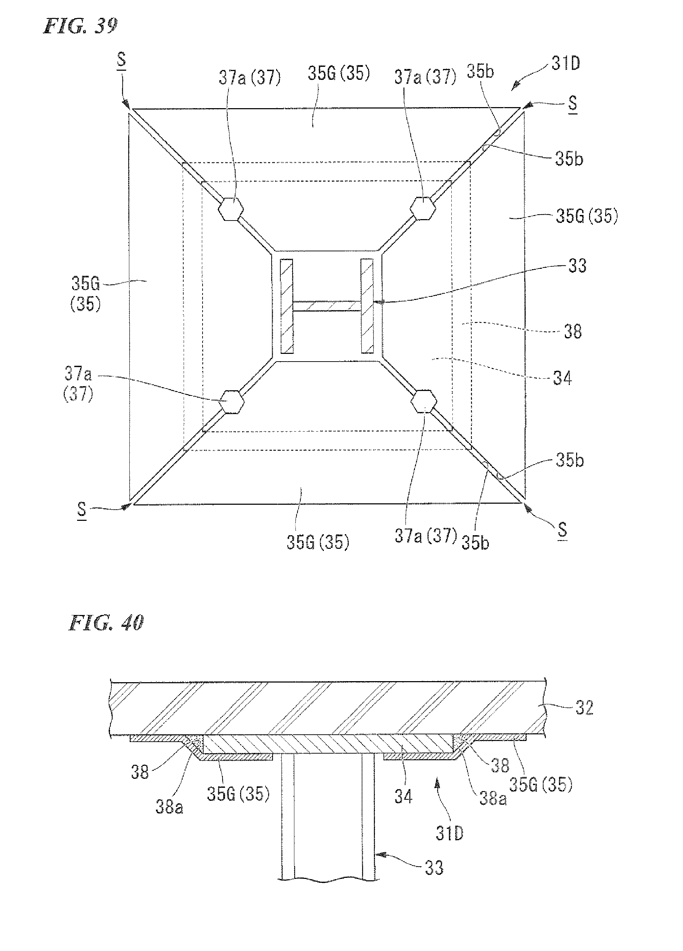

The reinforcement structure for a support fixing unit (the reinforcement structure 31D) according to a thirty-third embodiment shown in FIGS. 39 and 40 includes four fiber-reinforced sheets 35 (35G) having a trapezoidal shape when viewed from the top. The four fiber-reinforced sheets 35G are adapted to enclose the circumference of the support 33, and to be adhered to a fixing plate 34 and a ceiling 32. The reinforcement structure 31D is reinforced with this configuration. Ramp blocks 38 are similar to those of the twenty-ninth embodiment, are formed in a triangular shape when viewed in a cross-section, and have an inclined face 38a (see FIG. 40).

In the seventh fiber-reinforced sheets 35G, an upper side portion adjacent to an upper side that is an upper base of a trapezoidal shape when viewed from the top is disposed adjacent to the support 33. Further, in the seventh fiber-reinforced sheets 35G, a lower side portion adjacent to a lower side that is a lower base of the trapezoidal shape when viewed from the top is disposed on the ceiling 32. That is, the seventh fiber-reinforced sheets 35G are each shaped so that an inclined ridgeline 5b connecting the upper side and the lower side to each other passes through the vicinity of each corner of the fixing plate 34. In other words, the seventh fiber-reinforced sheets 35G are disposed so that each inclined ridgeline 5b divides each corner of the fixing plate 34 and intersects the corner in the vicinity of the corner of the fixing plate 34. Further, the inclined ridgelines 5b of the neighboring seventh fiber-reinforced sheets 35G are disposed on both sides of a straight line dividing the corner of the fixing plate 34 so as to be substantially parallel to each other. That is, the neighboring fiber-reinforced sheets 35G and 35G are disposed so as to have a predetermined gap S between the mutually inclined ridgelines 5b and 5b. A head 37a of each anchor bolt 37 is adapted to be disposed in the gap S.
According to the reinforcement structure 31D of the present embodiment, it is possible to obtain an effect similar to that of the twenty-ninth embodiment above. If the fixing plate 34 has a square shape when viewed from the top as in the reinforcement structure 31D of the present embodiment, it may be processed by the seventh fiber-reinforced sheets 35G having the same shape. Accordingly, the reinforcement structure 31D can save the trouble in manufacturing.

### (Thirty-Fourth Embodiment)

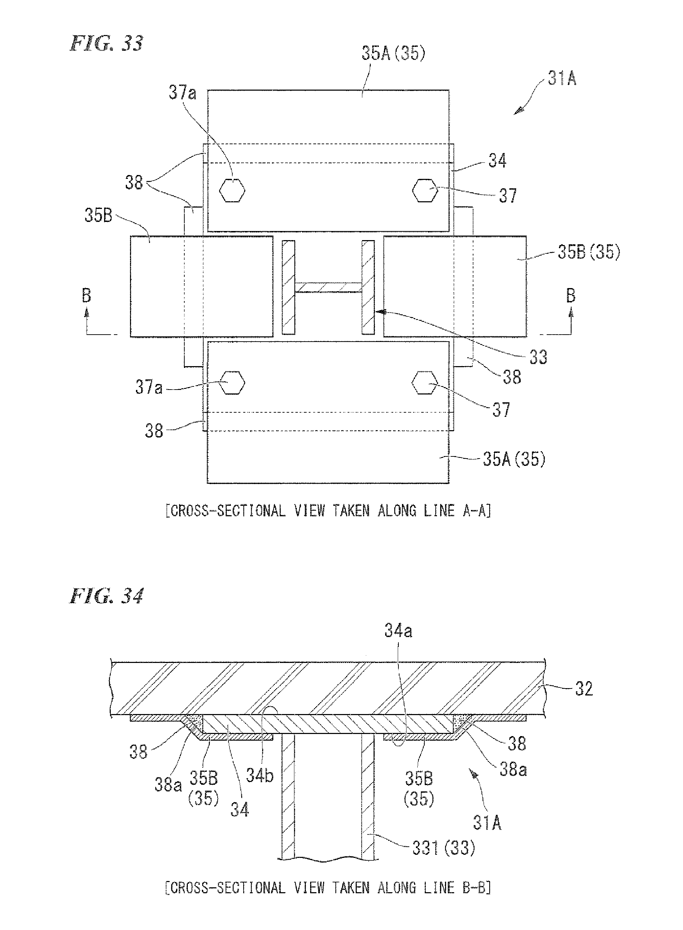

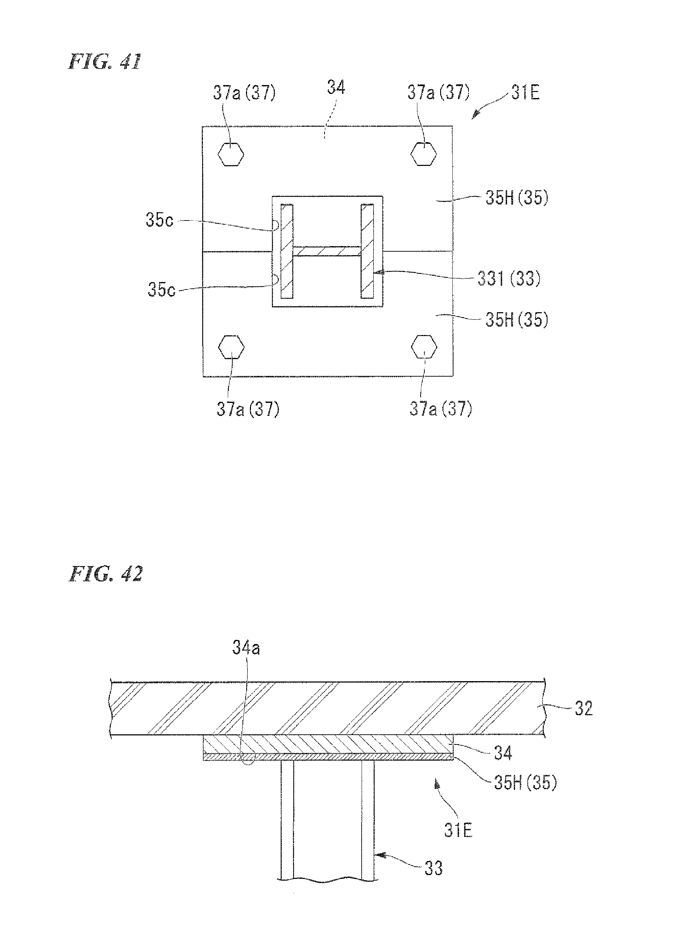

As shown in FIGS. 41 and 42, the reinforcement structure for a support fixing unit (the reinforcement structure 31E) according to a thirty-fourth embodiment is configured to bond fiber-reinforced sheets 35 (35H) only to a front face 34a of a fixing plate 34 via adhesive layers. In the present embodiment, the ramp blocks 38 or 381 such as in the aforementioned embodiment (see FIGS. 33 to 40) are omitted.
The eighth fiber-reinforced sheets 35H are formed in a rectangular shape when viewed from the top, and are each provided with a recess 35c in the middle portion of one side of the rectangle. The eighth fiber-reinforced sheets 35H are disposed so that part of a vertical member 331 of a support 33 is located inside the recess 35c when viewed from the top. The size of each of the eighth fiber-reinforced sheets 35H including the recess 35c is equivalent to a size to which the fixing plate 34 is divided by a central axial line that is parallel in a width direction of a web of the support 33. The two eighth fiber-reinforced sheets 35H and 35H are disposed on opposite sides of the support 33 so as to face each other with the support 33 sandwiched therebetween. Each of the eighth fiber-reinforced sheets 35H is provided with bolt holes 5a, each of which receives a head 37a of each anchor bolt 37, at positions corresponding to the heads 37a of the anchor bolts 37 anchoring the fixing plate 34 to the ceiling 32.

In the reinforcements structure 31 E of the present embodiment, regions where the eighth fiber-reinforced sheets 35H are disposed are only the front face 34a of the fixing plate 34. Accordingly, the reinforcement structure 31E can reduce the cost of materials and save the trouble.

### (Thirty-Fifth Embodiment)

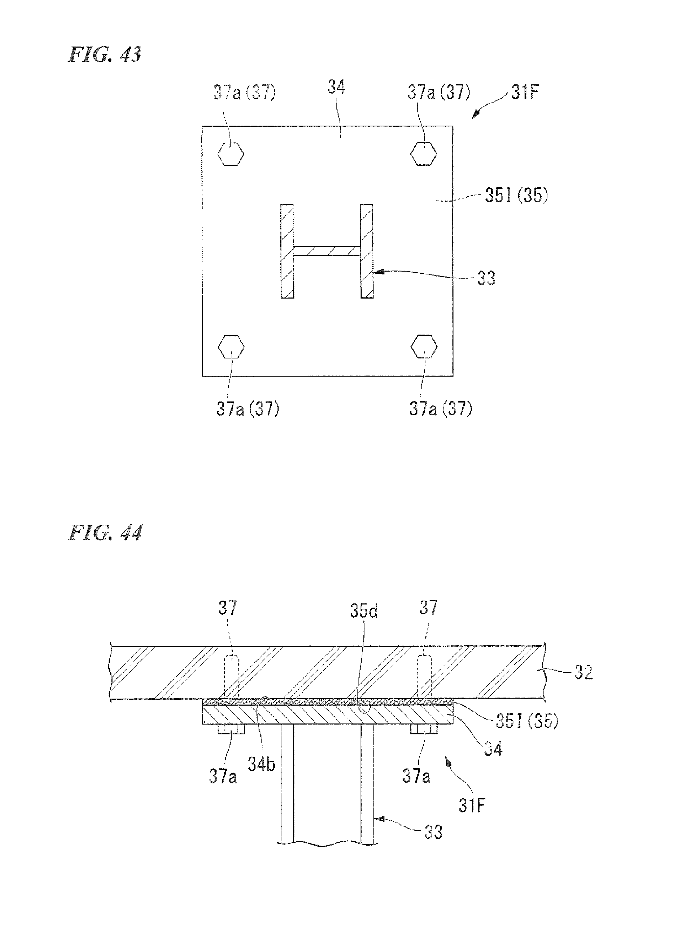

As shown in FIG. 43, the reinforcement structure for a support fixing unit (the reinforcement structure 31F) according to a thirty-fifth embodiment is configured so that a fiber-reinforced sheet 35 (35I) is bonded to a rear face 34b of a fixing plate 34 (a face facing a ceiling 32). At this time, the ninth fiber-reinforced sheet 35I is configured so that both a face facing the ceiling 32 and a face on the opposite side of the face are bonded to the ceiling 32 and the fixing plate 34 via adhesive layers.

Reference is now made to an example of a construction method of the reinforcement structure 31F. First, the ninth fiber-reinforced sheet 35I is adhered to a predetermined position of the ceiling 32 via an adhesive layer. Next, another adhesive layer is formed on a face (a lower face) 5d of the ninth fiber-reinforced sheet 351 adhered to the ceiling 32. The adhesive layer is formed by applying an adhesive. Subsequently, the fixing plate 34 is adhered to the ceiling 32 by the formed adhesive layer. Thereafter, four corners of the fixing plate 34 are fastened to the ceiling 32 by anchor bolts 37. Thereby, the reinforcement structure 31F is obtained.
In the reinforcement structure 31F of the present embodiment, when a support 33 is installed, the ninth fiber-reinforced sheet 35I is sandwiched and provided between the ceiling 32 and the fixing plate 4. Thereby, it is possible to increase the thickness of the fixing plate 34 and to enhance rigidity. It is possible to reinforce the fixing plate 34 against bending stress caused by the support 33 supporting a duct 31.

Meanwhile, in the reinforcement structure 31F according to the thirty-fifth embodiment shown in FIG. 44, an epoxy-based adhesive containing fiber-reinforced members such as carbon fibers may be adopted in place of the ninth fiber-reinforced sheet 35I. That is, it does not matter if the adhesive layer of the aforementioned embodiment is configured to serve as a fiber-reinforced member.
In this case, when the support is installed, the fixing plate 34 is adhered to the ceiling 32 by the adhesive containing the fiber-reinforced members, so that the fixing plate 34 is configured to further increase the thickness by means of the adhesive layer based on the adhesive. Thereby, since it is possible to increase the rigidity, it is possible to reinforce the fixing plate 34 against bending stress caused by the support 33 supporting the duct 31.

While the embodiments of the reinforcement structure of a support fixing unit according to the third aspect of the present invention are described, the present invention is not limited to the embodiments, and may be appropriately modified without departing from the spirit and scope thereof.
For example, in the aforementioned embodiments, the long object supported by the support 33 is intended to be the duct 31. However, the long object is not limited to the duct and may be a pipe, a cable tray, a conduits, or the like.
Further, in the aforementioned embodiments, as the shape of the support, a suspension structure configured of the pair of vertical members 331 and 331 and the horizontal member 332 connecting the lower ends of the vertical members to each other is provided, and the duct 31 is supported from below by the horizontal member. However, the present invention is not limited to the support having this shape. Further, as the material of the support, an L-shaped steel member, a channel-shaped steel member, or a steel pipe other than an H-shaped steel member may be used.

In the aforementioned embodiments, the external shape of the fixing plate 34 is approximately square when viewed from the top. However, the external shape is not substantially limited.
Further, in the aforementioned embodiment, the fixing plate 34 is fixed by a plurality (four) of anchor bolts 37. However, there is no limitation on a structure according to this fixing type. For example, the fixing plate 34 may be fixed to the ceiling (the supporting target or the structure) 32 by studs installed on the rear face 34b of the fixing plate 34. In the case of these studs, the bolt heads 37a such as the present embodiment do not protrude to the front face 34a of the fixing plate 34. As such, it is possible to remove the bolt holes 5a of the fiber-reinforced sheet 35 which correspond to the positions of the heads 37a.

Further, the reinforcement structures 31A to 31 E of the twenty-ninth to thirty-fourth embodiments are configured to install the fiber-reinforced sheets 35 on the side of the front face 34a of the fixing plate 34. The reinforcement structure 31F of the thirty-fifth embodiment is configured to install the fiber-reinforced sheet 35 on the side of the rear face 34b of the fixing plate 34 (on the side of the ceiling 32). However, the reinforcement structure 31F may be configured to install the fiber-reinforced members on the opposite faces (the front face 34a and the rear face 34b) of the fixing plate 34.
Further, in the aforementioned embodiments, the sheet-shaped fiber-reinforced sheet 35 is adopted as the fiber-reinforced member. However, the present invention is not limited to this configuration. The fiber-reinforced member may be bonded to the fixing unit via an adhesive using a fiber-reinforced molding molded to a predetermined shape and thickness.

Further, the member, the length dimension, the thickness dimension, the number of sheet layers, the shape, the range installed on the support, and so on of the fiber-reinforced sheet 35 may be appropriately modified depending on the shape, the dimension, and so on of the support.
In addition to the foregoing, the components of the aforementioned embodiments may be substituted with other know components without departing from the spirit and scope of the present invention. Further, the aforementioned embodiments may be appropriately combined.

### [Industrial Applicability]

A duct arrangement including a duct body and fiber-reinforced moldings is provided. The duct body includes a duct wall, a duct passage defined by the duct wall, and duct corners formed in the duct wall when viewed in a cross-section in a direction intersecting a direction in which the duct passage extends. The fiber-reinforced moldings are disposed at the duct corners via adhesive layers.
Thereby, it is possible to improve strength using a relatively simple structure, and the reinforcement construction becomes relatively simple.

### [Description of Reference Numerals]

11, 11 A: duct body; 11a: duct wall; 11b: duct corner; 12, 121, 122, 123: fiber-reinforced molding; 13: adhesive layer; 14, 141, 142, 143: fiber-reinforced sheet; 15: adhesive layer; 16: heat insulating material; 17: external cover; 7a: external cover wall; 7b: external cover corner; 18: steel reinforcement (metal reinforcement); 18a: steel plate body (metal plate body); 18b: steel rib part (metal rib part); 19: wire; 111 to 1117, 117A: duct arrangement; 121A, 121B: side end; 121a, 121b: rib part; 130: connection flange; 1101 to 1121: duct equipment; R1: ventilation passage (duct passage); 21: duct (long object); 21A to 21A: support reinforcement structure; 22: ceiling (supporting target, structure); 23, 23A, 23B: support; 231: vertical member; 232: horizontal member; 24: anchor bolt; 25: fixing plate (fixing unit); 26, 26a to 26i: fiber-reinforced plate (fiber stiffener); 27: adhesive layer; 28: filler (curing stiffener); 29: fiber-reinforced sheet (fiber stiffener); 210: form sheet; 220: beam member; 31: duct (long object); 31A to 31F: reinforcement structure; 32: ceiling (supporting target, structure); 33: support; 331: vertical member; 332: horizontal member; 34: fixing plate (fixing unit); 34a: front face; 35: fiber-reinforced sheet (fiber-reinforced member); 36: adhesive layer; 37: anchor bolt; 37a: head; 38, 381: ramp block; s: gap

## Claims

1. A duct arrangement comprising:
a duct body; and fiber-reinforced molding,
wherein the duct body includes a duct wall, a duct passage defined by the duct wall, and duct corners formed in the duct wall when viewed in a cross-section in a direction intersecting a direction in which the duct passage extends, and
the fiber-reinforced moldings are disposed at the duct corners via adhesive layers.

2. The duct arrangement according to claim 1, wherein the fiber-reinforced moldings are formed in a substantially L-shape when viewed in the cross-section.

3. The duct arrangement according to claim 2. further comprising a fiber-reinforced sheet that encloses the duct body and is simultaneously installed on the fiber-reinforced moldings via an adhesive layer.

4. The duct arrangement according to claim 2, wherein the fiber-reinforced moldings each include rib parts, and
the rib parts protrude to extend toward the outside of the duct body and extend along the duct passage.

5. The duct arrangement according to claim 4, wherein the rib parts are provided at both side ends of each fiber-reinforced molding in the cross-section.

6. The duct arrangement according to claim 1, wherein the duct body includes a plurality of duct corners, and
the fiber-reinforced moldings are formed in a substantially U-shape when viewed in the cross-section and are installed across the two duct corners.

7. A duct arrangement comprising:
a duct body; and a plurality of metal reinforcements,
wherein the duct body includes a duct wall, a duct passage defined by the duct wall, and a plurality of duct corners formed in the duct wall when viewed in a cross-section in a direction intersecting a direction in which the duct passage extends;
the metal reinforcement includes a metal plate body and metal rib parts;
the metal plate body is installed on the duct corner via an adhesive layer and has a substantially L-shaped cross-section when viewed in the cross-section; and
the metal rib parts protrude from respective regions of a part of the metal plate body extending at both sides of the duct corner toward the outside of the duct body in the cross-section.

8. The duct arrangement according to claim 7, further comprising a wire that connects the metal rib parts of a different plurality of metal reinforcements to one another.

9. A duct arrangement comprising:
a duct body; a fiber-reinforced sheet; and fiber-reinforced moldings,
wherein the duct body includes a duct wall, a duct passage defined by the duct wall, and a plurality of duct corners formed in the duct wall when viewed in a cross-section in a direction intersecting a direction in which the duct passage extends;
the fiber-reinforced sheet is disposed on an outer circumference of the duct body via an adhesive layer; and
the fiber-reinforced moldings are disposed adjacent to the fiber-reinforced sheet along the duct corners via adhesive layers, and have a substantially L-shape when viewed in the cross-section.

10. A duct arrangement comprising:
a duct body; and a fiber-reinforeed sheet,
wherein the duct body includes a duct wall, and a duct passage defined by the duct wall; and
the fiber-reinforced sheet is disposed on an outer circumference of the duct body via an adhesive layer.

11. Duct equipment comprising:
the duct arrangement according to any one of claims 1 to 10;
a heat insulating material installed on an outer circumference of the duct body; and
a external cover installed on an outer circumference of the heat insulating material.

12. Duct equipment comprising:
a duct body; a heat insulating material; a external cover; and fiber-reinforced moldings,
wherein the duct body includes a duct wall, a duct passage defined by the duct wall, and duct corners formed in the duct wall when viewed in a cross-section in a direction intersecting a direction in which the duct passage extends;
the heat insulating material is installed on an outer circumference of the duct body;
the external cover includes a external cover wall installed on an outer circumference of the heat insulating material, and external cover corners formed along the duct corners; and
the fiber-reinforced moldings are disposed at the external cover corners via adhesive layers.

13. The duct equipment according to claim 12, wherein the fiber-reinforced moldings have a substantially L-shape when viewed in the cross-section.

14. The duct equipment according to claim 13, comprising a fiber-reinforced sheet that encloses the external cover and is simultaneously disposed on the fiber-reinforced moldings via an adhesive layer.

15. The duct equipment according to claim 13, wherein the fiber-reinforced moldings each include rib parts that protrude to extend toward the outside of the duct body and extend along the duct passage.

16. The duct equipment according to claim 15, wherein the rib parts are provided at both side ends of each fiber-reinforced molding in the cross-section.

17. The duct equipment according to claim 12, wherein the external cover includes a plurality of external cover corners, and
the fiber-reinforced moldings have a substantially U-shape when viewed in the cross-seetion and are installed across the two external cover corners.

18. Duct equipment comprising:
a duct body; a heat insulating material; a external cover; and a plurality of metal reinforcements,
wherein the duct body includes a duct wall, a duct passage defined by the duct wall, and a plurality of duct corners formed in the duct wall when viewed in a cross-section in a direction intersecting a direction in which the duct passage extends;
the heat insulating material is installed on an outer circumference of the duct body;
the external cover includes a external cover wall installed on an outer circumference of the heat insulating material, and external cover corners formed on the external cover wall and running along the duct corners;
the metal reinforcement includes a metal plate body and metal rib parts;
the metal plate body is disposed at the external cover corner via an adhesive layer and is formed with a substantially L-shape when viewed in the cross-section; and
the metal rib parts protrude from respective regions of a part of the metal plate body extending at both sides of the external cover corner toward the outside of the duct body.

19. The duct equipment according to claim 18, further comprising a wire that connects the metal rib parts of a different plurality of metal reinforcements to one another.

20. Duct equipment comprising:
a duct body; a heat insulating material; a external cover; a fiber-reinforced sheet; and fiber-reinforced moldings,
wherein the duct body includes a duct wall, a duct passage defined by the duct wall, and duct corners formed in the duct wall when viewed in a cross-section in a direction intersecting a direction in which the duct passage extends;
the heat insulating material is installed on an outer circumference of the duct body;
the external cover includes a external cover wall installed on an outer circumference of the heat insulating material, and external cover corners formed along the duct corners;
the fiber-reinforced sheet is disposed on the outer circumference of the duct body via an adhesive layer; and
the fiber-reinforced moldings are disposed adjacent to the fiber-reinforced sheet along the external cover corners via adhesive layers, and have a substantially L-shape when viewed in the cross-section.

21. Duct equipment comprising:
a duct body; a heat insulating material; a external cover; and a fiber-reinforced sheet,
wherein the duct body includes a duct wall, and a duct passage defined by the duct wall;
the heat insulating material is installed on an outer circumference of the duct body;
the external cover includes a external cover wall installed on an outer circumference of the heat insulating material, and external cover corners formed along duct corners; and
the fiber-reinforced sheet is disposed on the outer circumference of the duct body via an adhesive layer.

22. The duct equipment according to any one of claims 11 to 21, wherein the duct body includes a connection flange at a base end of the duct passage.

23. Duct equipment comprising:
the duct arrangement according to any one of claims 1 to 10,
wherein the duct body includes a connection flange at a base end of the duct passage.

24. The duct equipment according to claim 22 or 23, wherein the connection flange includes an adhesive layer, and a fiber-reinforced member or a fiber-reinforced sheet disposed via the adhesive layer.

25. A duct reinforcement construction method of a duct body including a duct wall and a duct passage defined by the duct wall, the method comprising:
a process of performing priming coat on the duct body;
a process of applying an adhesive to an adhering target part of the duct body; and
a process of disposing a fiber-reinforced molding or a fiber-reinforced sheet on the adhering target part via the adhesive.

26. The duct reinforcement construction method according to claim 25, comprising a process of finally coating the fiber-reinforced molding or the fiber-reinforced sheet disposed on the adhering target part with an impregnating adhesive resin and performing surface finishing using a surface finishing agent.

27. A duct reinforcement construction method of a duct body including a duct wall and a duct passage defined by the duct wall, the method comprising:
a process of degreasing a bonding target of the duct body and simultaneously performing rasp on the bonding target of the duct body;
a process of applying an adhesive to the bonding target of the duct body; and
a process of disposing metal reinforcements on the bonding target.

28. A support reinforcement structure comprising:
an adhesive layer provided on an outer circumference of a support for supporting a long object; and
a fiber stiffener installed on the outer circumference of the support via the adhesive layer.

29. A support reinforcement structure comprising:
an adhesive layer provided on an outer circumference of a support for supporting the duct arrangement according to any one of claims 1 to 10 or the duct equipment according to any one of claims 11 to 24, which is a long object; and
a fiber stiffener installed on the outer circumference of the support via the adhesive layer.

30. The support reinforcement structure according to claim 28 or 29, wherein the fiber stiffener includes a plate-shaped molding that is molded according to a shape of the outer circumference of the support.

31. The support reinforcement structure according to claim 28 or 29, wherein the fiber stiffener includes a sheet-shaped member that is pasted and bonded according to a shape of the outer circumference of the support.

32. The support reinforcement structure according to claim 28 or 29, wherein the fiber stiffener is installed across the support and a fixing unit for fixing the support to a neighboring structure.

33. The support reinforcement structure according to claim 28 or 29, comprising a stiffener that is charged into a concavity or a cavity of the support and cured.

34. The support reinforcement structure according to claim 28 or 29, comprising:
a beam member for reinforcing the support including a pair of vertical members disposed in parallel and a horizontal member connecting leading end sides of the pair of vertical members,
wherein the beam member connects base end sides of the pair of vertical members; and
the long object is disposed between the beam member and the horizontal member.

35. The support reinforcement structure according to claim 28 or 29, comprising:
a beam member for reinforcing the support having a pair of vertical members extending downward and a horizontal member connecting lower ends of the vertical members to each other and supporting the long object from below,
wherein the beam member connects the vertical members to each other above the long object.

36. A fixing unit reinforcement structure comprising:
an adhesive applied to at least one face of a flat plate-shaped fixing unit for fixing a support for supporting a long object to a neighboring structure; and
a fiber-reinforced member adhered to the fixing plate by the adhesive.

37. The fixing unit reinforcement structure according to claim 36, wherein the fiber-reinforced member is installed across the fixing unit and the neighboring structure.

38. The fixing unit reinforcement structure according to claim 36 or 37, wherein the fiber-reinforced member is disposed on a face of the fixing unit on the opposite side of the other face of the fixing unit which is opposite to the neighboring structure.

39. The fixing unit reinforcement structure according to any one of claims 36 to 38, comprising:
block members that are disposed on an outer circumference of the fixing unit and are adhered to the neighboring structure,
wherein the fiber stiffener is installed across the block members and the fixing unit.

40. The fixing unit reinforcement structure according to claim 39, wherein the block member includes a face that is opposite to the neighboring structure, and an inclined face that is inclined with respect to the face, and
the inclined face is formed so as to extend without a height difference between the face of the neighboring structure which is opposite to the fixing unit and the face of the fixing unit on the opposite side of the other face of the fixing unit which is opposite to the face of the neighboring structure.

41. The fixing unit reinforcement structure according to claim 36 or 37, wherein the fiber-reinforced member is disposed on the face of the fixing unit which is opposite to the neighboring structure.

42. A fixing unit reinforcement structure comprising:
an adhesive that adheres a flat plate-shaped fixing unit, which fixes a support for supporting a long object to a neighboring structure, to the neighboring structure,
wherein the adhesive contains a fiber-reinforced member.
